(19) Europäisches Patentamt
European Patent Office
Office européen des brevets

(11) **EP 4 572 206 A1**

(12) **EUROPEAN PATENT APPLICATION**
published in accordance with Art. 153(4) EPC

(43) Date of publication:
**18.06.2025 Bulletin 2025/25**

(21) Application number: **23851920.1**

(22) Date of filing: **10.08.2023**

(51) International Patent Classification (IPC):
*H04L 5/00* (2006.01)

(52) Cooperative Patent Classification (CPC):
**H04B 7/0456; H04L 5/00**

(86) International application number:
**PCT/CN2023/112154**

(87) International publication number:
**WO 2024/032699 (15.02.2024 Gazette 2024/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.08.2022 CN 202210969485**

(71) Applicant: **Datang Mobile Communications
Equipment Co., Ltd.
Beijing 100085 (CN)**

(72) Inventors:
• **HUANG, Qiuping
Beijing 100085 (CN)**
• **SONG, Lei
Beijing 100085 (CN)**

(74) Representative: **Cabinet Nony
11 rue Saint-Georges
75009 Paris (FR)**

(54) **DMRS PORT DETERMINING METHOD AND APPARATUS, DEVICE, AND STORAGE MEDIUM**

(57) Embodiments of the present invention provide a DMRS port determining method and apparatus, a device, and a storage medium. The method comprises: receiving first indication information sent by a network device, the first indication information being used for indicating quasi co-location (QCL) relationship information and/or power control parameters corresponding to a physical uplink shared channel (PUSCH); and according to the first indication information, determining DMRS port(s) corresponding to the PUSCH, wherein the DMRS port(s) correspond(s) to one or multiple pieces of space related information, and the DMRS ports corresponding to different space related information among the multiple pieces of space related information are different.

Receiving first indication information transmitted from a network device, where the first indication information is used to indicate QCL relationship information and/or power control parameter corresponding to a PUSCH — 100

Determining a DMRS port corresponding to the PUSCH based on the first indication information, where the DMRS port corresponds to one or more pieces of spatial relation information, and DMRS ports corresponding to different spatial relation information among multiple pieces of spatial relation information are different — 101

FIG. 1

**Description**

CROSS-REFERENCES TO RELATED APPLICATIONS

The present application claims priority to Chinese patent application No. 202210969485.X filed on August 12, 2022, entitled "DMRS Port Determining Method and Apparatus, Device, and Storage Medium", which is hereby incorporated by reference in its entirety.

FIELD

The present application relates to the field of radio communications, and in particular, to methods and apparatuses for determining demodulation reference signal (DMRS) port, devices and a storage medium.

BACKGROUND

For a physical uplink share channel (PUSCH), a base station indicates a demodulation reference signal (DMRS) port corresponding to a PUSCH transmission, and a terminal performs a DMRS transmission on a corresponding DMRS port. Under a given number of layers (also called rank), there are multiple DMRS port configurations, that is, there are multiple DMRS port combinations. The base station can indicate a DMRS port in a DMRS port configuration corresponding to the number of layers corresponding to the PUSCH transmission.

A multi-transmission and/or reception point (M-TRP) scenario supports PUSCH repetition in a time domain. That is, same or different redundancy versions (RVs) of a same PUSCH transmission block (TB) are repeated in multiple time slots/sub-slots, where half of the slots/sub-slots are transmitted in a direction of a transmission and/or reception point (TRP), and another half of the slots/sub-slots are transmitted in a direction of another TRP. Since the two TRPs are in repetition, DMRS ports corresponding to the two TRPs are exactly the same, which limits throughput of an uplink transmission and results in a low PUSCH transmission rate.

BRIEF SUMMARY

In response to the problems in the related art, embodiments of the present application provide methods and apparatuses for determining demodulation reference signal (DMRS) port, devices and a storage medium.

An embodiment of the present application provides a method for determining demodulation reference signal (DMRS) port, performed by a terminal, and including:

receiving first indication information transmitted from a network device, where the first indication information is used to indicate quasi-co-location (QCL) relationship information and/or power control parameter corresponding to a physical uplink shared channel (PUSCH); and

determining a DMRS port corresponding to the PUSCH based on the first indication information, where the DMRS port corresponds to one or more pieces of spatial relation information, and DMRS ports corresponding to different spatial relation information among multiple pieces of spatial relation information are different.

In an embodiment, the first indication information includes indication information indicating one or more of the following:

spatial relation information or beam corresponding to the PUSCH;

a transmission configuration indicator (TCI) state corresponding to the PUSCH;

a transmission and/or reception point corresponding to the PUSCH;

an antenna panel corresponding to the PUSCH;

precoding information and/or number of layers corresponding to the PUSCH;

a sounding reference signal (SRS) resource corresponding to the PUSCH;

a sounding reference signal (SRS) resource set corresponding to the PUSCH;

an open loop power control parameter corresponding to the PUSCH;

a codeword and/or a number of codewords corresponding to the PUSCH; or

a control resource set resource pool index corresponding to the PUSCH.

In an embodiment, the open loop power control parameter includes one or more of a target transmit power, a path loss reference signal parameter, or a path loss compensation parameter.

In an embodiment, determining the DMRS port corresponding to the PUSCH based on the first indication information includes:

determining a first number of layers corresponding to the DMRS port based on the first indication information; and

determining the DMRS port based on the first number of layers.

In an embodiment, determining the first number of layers corresponding to the DMRS port based on the first indication information includes:

based on the first indication information, determining N precoding information and/or number of layers fields corresponding to the PUSCH, or determining N sounding reference signal (SRS) resource indicator (SRI) fields corresponding to the PUSCH, where N is an integer greater than or equal to 1; and

determining the first number of layers based on the N precoding information and/or number of layers fields corresponding to the PUSCH, or the N SRI fields corresponding to the PUSCH.

In an embodiment, determining the first number of layers based on the N precoding information and/or number of layers fields corresponding to the PUSCH, or the N SRI fields corresponding to the PUSCH includes any one of the following:

determining the first number of layers based on a sum of N numbers of layers respectively indicated by the N precoding information and/or number of layers fields corresponding to the PUSCH; or

determining the first number of layers based on a sum of numbers of SRS resources of N SRS resource groups respectively indicated by the N SRI fields corresponding to the PUSCH; or

determining the first number of layers based on a sum of multiple numbers of layers indicated by a first precoding information and/or number of layers field among the N precoding information and/or number of layers fields; or

determining the first number of layers based on a sum of numbers of SRS resources of multiple SRS resource groups indicated by a first SRI field among the N SRI fields; or

determining the first number of layers based on N times a number of layers indicated by a first precoding information and/or number of layers field among the N precoding information and/or number of layers fields; or

determining the first number of layers based on N times a number of SRS resources indicated by a first SRI field among the N SRI fields; or

determining the first number of layers based on a number of layers indicated by the N precoding information and/or number of layers fields corresponding to the PUSCH; or

determining the first number of layers based on a number of SRS resources indicated by the N SRI fields corresponding to the PUSCH, or based on an SRS resource number indicated by the N SRI fields corresponding to the PUSCH; or

determining the first number of layers based on a number of layers indicated by a first precoding information and/or number of layers field among the N precoding information and/or number of layers fields; or

determining the first number of layers based on a number of SRS resources indicated by a first SRI field among the N SRI fields, or based on an SRS resource number indicated by a first SRI field among the N SRI fields.

In an embodiment, determining the first number of layers based on the N precoding information and/or number of layers fields corresponding to the PUSCH, or the N SRI fields corresponding to the PUSCH includes:

determining that one piece of precoding information and/or number of layers field corresponding to the PUSCH indicates N precoding matrices and/or M numbers of layers, or determining that one SRI field corresponding to the PUSCH indicates N SRS resource groups; and

determining the first number of layers based on the N precoding matrices and/or the M numbers of layers, or the N SRS resource groups, where M is an integer greater than or equal to 1.

In an embodiment, determining the first number of layers based on the N precoding matrices and/or the M numbers of layers, or the N SRS resource groups, includes any one of the following:

determining the first number of layers based on a sum of the M numbers of layers indicated by the one piece of precoding information and/or number of layers field corresponding to the PUSCH; or

determining the first number of layers based on a sum of numbers of SRS resources of the N SRS resource groups indicated by the one SRI field corresponding to the PUSCH; or

determining the first number of layers based on N times a number of layers indicated by the one piece of precoding information and/or number of layers field corresponding to the PUSCH; or

determining the first number of layers based on N times a number of SRS resources indicated by the one SRI field corresponding to the PUSCH; or

determining the first number of layers based on a number of layers indicated by the one piece of precoding information and/or number of layers field corresponding to the PUSCH; or

determining the first number of layers based on a number of SRS resources indicated by one SRI field corresponding to the PUSCH, or based on an SRS resource number indicated by one SRI field corresponding to the PUSCH.

In an embodiment, based on the first indication information, determining the N precoding information and/or number of layers fields corresponding to the PUSCH, or determining the N SRI fields corresponding to the PUSCH includes:

determining that the PUSCH corresponds to N pieces of first information based on the first indication information, where each of the N pieces of first information includes one or more of a transmission configuration indicator (TCI) state, spatial relation information, a power control parameter, a transmission and/or reception point, an antenna panel, a sounding reference signal (SRS) resource, a sounding reference signal (SRS) resource group, a precoding matrix, a layer group, a sounding reference signal (SRS) resource set, a codeword, or a control resource set resource pool; and

determining the N precoding information and/or number of layers fields corresponding to the PUSCH based on precoding information and/or number of layers field corresponding to each of the N pieces of first information; or determining the N SRI fields corresponding to the PUSCH based on SRI fields corresponding to each of the N pieces of first information.

In an embodiment, determining that the PUSCH corresponds to the N pieces of first information based on the first indication information includes one or more of the following:

in case that the first indication information indicates N pieces of precoding information and/or N numbers of layers, determining that the PUSCH corresponds to the N pieces of first information; or

in case that the first indication information indicates N pieces of enabled precoding information and/or number of layers field, determining that the PUSCH corresponds to the N pieces of first information; or

in case that the first indication information indicates N SRS resource groups, determining that the PUSCH corresponds to the N pieces of first information; or

in case that the first indication information indicates N enabled SRI fields, determining that the PUSCH corresponds to the N pieces of first information; or

in case that the first indication information indicates N SRS resource sets, determining that the PUSCH corresponds to the N pieces of first information; or

in case that the first indication information indicates N pieces of spatial relation information or beam, determining that the PUSCH corresponds to the N pieces of first information; or

in case that the first indication information indicates N transmission and/or reception points, determining that the PUSCH corresponds to the N pieces of first information; or

in case that the first indication information indicates N antenna panels, determining that the PUSCH corresponds to the N pieces of first information; or

in case that the first indication information indicates N open loop power control parameters, determining that the PUSCH corresponds to the N pieces of first information; or

in case that the first indication information indicates N codewords, determining that the PUSCH corresponds to the N pieces of first information; or

in case that the first indication information indicates N control resource set resource pool indexes, determining that the PUSCH corresponds to the N pieces of first information.

In an embodiment, determining the first number of layers based on the first indication information includes:

in case that the first indication information indicates N pieces of QCL relationship information and/or power control parameter, determining that the PUSCH corresponds to N pieces of precoding information and/or M numbers of layers, or determining that the PUSCH corresponds to N SRI groups, where N is an integer greater than or equal to 1, and M is an integer greater than or equal to 1; and

determining the first number of layers based on the N pieces of precoding information and/or the M numbers of layers, or a number of layers or an SRS resource number corresponding to the N SRI groups.

In an embodiment, determining the DMRS port based on the first number of layers includes:
determining a DMRS port corresponding to each of the N pieces of first information determined based on the first number of layers.

In an embodiment, the QCL relationship information corresponding to the PUSCH includes QCL relationship information between the DMRS port corresponding to the PUSCH and one or more other reference signals.

An embodiment of the present application further provides a method for determining demodulation reference signal (DMRS) port, performed by a network device, and including:

determining a first number of layers corresponding to a DMRS port corresponding to a physical uplink shared channel (PUSCH), where the DMRS port corresponds to one or more pieces of spatial relation information, and DMRS ports corresponding to different spatial relation information among multiple pieces of spatial relation information are different; and

transmitting first indication information to a terminal, where the first number of layers has a first relationship with the first indication information, and the first indication information is used to indicate quasi-co-location (QCL) relationship information and/or power control parameter corresponding to the PUSCH.

In an embodiment, the first indication information includes indication information indicating one or more of the following:

spatial relation information or beam corresponding to the PUSCH;

a transmission configuration indicator (TCI) state corresponding to the PUSCH;

a transmission and/or reception point corresponding to the PUSCH;

an antenna panel corresponding to the PUSCH;

precoding information and/or number of layers corresponding to the PUSCH;

a sounding reference signal (SRS) resource corresponding to the PUSCH;

a sounding reference signal (SRS) resource set corresponding to the PUSCH;

an open loop power control parameter corresponding to the PUSCH;

a codeword and/or a number of codewords corresponding to the PUSCH; or

a control resource set resource pool index corresponding to the PUSCH.

In an embodiment, the open loop power control parameter includes one or more of a target transmit power, a path loss reference signal parameter, or a path loss compensation parameter.

In an embodiment, N precoding information and/or number of layers fields corresponding to the PUSCH indicated by the first indication information, or N SRS resource indicator (SRI) fields corresponding to the PUSCH indicated by the first indication information correspond to the first number of layers, where N is an integer greater than or equal to 1.

In an embodiment, the N precoding information and/or number of layers fields corresponding to the PUSCH, or the N SRI fields corresponding to the PUSCH correspond to the first number of layers includes any one of the following:

a sum of N numbers of layers respectively indicated by the N precoding information and/or number of layers fields corresponding to the PUSCH is equal to the first number of layers; or

a sum of numbers of SRS resources of N SRS resource groups respectively indicated by the N SRI fields corresponding to the PUSCH is equal to the first number of layers; or

a sum of multiple numbers of layers indicated by a first precoding information and/or number of layers field among the N precoding information and/or number of layers fields corresponding to the PUSCH is equal to the first number of layers; or

a sum of numbers of SRS resources of multiple SRS resource groups indicated by a first SRI field among the N SRI fields corresponding to the PUSCH is equal to the first number of layers; or

N times a number of layers indicated by a first precoding information and/or number of layers field among the N precoding information and/or number of layers fields corresponding to the PUSCH is equal to the first number of layers; or

N times a number of SRS resources indicated by a first SRI field among the N SRI fields corresponding to the PUSCH is equal to the first number of layers; or

a number of layers indicated by the N precoding information and/or number of layers fields corresponding to the PUSCH is equal to the first number of layers; or

a number of SRS resources indicated by the N SRI fields corresponding to the PUSCH, or an SRS resource number indicated by the N SRI fields corresponding to the PUSCH is equal to the first number of layers;

a number of layers indicated by a first precoding information and/or number of layers field among the N precoding information and/or number of layers fields corresponding to the PUSCH is equal to the first number of layers; or

a number of SRS resources indicated by a first SRI field among the N SRI fields corresponding to the PUSCH, or an SRS resource number indicated by a first SRI field among the N SRI fields is equal to the first number of layers.

In an embodiment, N precoding matrices and/or M numbers of layers indicated by one piece of precoding information and/or number of layers field corresponding to the PUSCH indicated by the first indication information correspond to the first number of layers, where M is an integer greater than or equal to 1; or
N SRS resource groups indicated by one SRI field corresponding to the PUSCH indicated by the first indication information correspond to the first number of layers.

In an embodiment, the N precoding matrices and/or the M numbers of layers, or the N SRS resource groups correspond to the first number of layers includes any one of the following:

a sum of the M numbers of layers indicated by the one piece of precoding information and/or number of layers field corresponding to the PUSCH is equal to the first number of layers; or

a sum of numbers of SRS resources of the N SRS resource groups indicated by the one SRI field corresponding to the PUSCH is equal to the first number of layers; or

N times a number of layers indicated by the one piece of precoding information and/or number of layers field corresponding to the PUSCH is equal to the first number of layers; or

N times a number of SRS resources indicated by the one SRI field corresponding to the PUSCH is equal to the first number of layers; or

a number of layers indicated by the one piece of precoding information and/or number of layers field corresponding to the PUSCH is equal to the first number of layers; or

a number of SRS resources indicated by the one SRI field corresponding to the PUSCH, or an SRS resource number indicated by one SRI field corresponding to the PUSCH is equal to the first number of layers.

In an embodiment, the N precoding information and/or number of layers fields are precoding information and/or number of layers field corresponding to the N pieces of first information indicated by the first indication information; or the N SRI fields are SRI fields corresponding to the N pieces of first information indicated by the first indication information, where each of the N pieces of first information includes one or more of a TCI state, spatial relation information, a power control parameter, a transmission and/or reception point, an antenna panel, an SRS resource, an SRS resource group, a precoding matrix, a layer group, an SRS resource set, a codeword, or a control resource set resource pool.

In an embodiment, the first indication information indicates N pieces of first information includes one or more of the following:

the first indication information indicates N pieces of precoding information and/or N numbers of layers; or

the first indication information indicates N pieces of enabled precoding information and/or number of layers field; or

the first indication information indicates N SRS resource groups; or

the first indication information indicates N enabled SRI fields; or

the first indication information indicates N SRS resource sets; or

the first indication information indicates N pieces of spatial relation information or beam; or

the first indication information indicates N transmission and/or reception points; or

the first indication information indicates N antenna panels; or

the first indication information indicates N open loop power control parameters; or

the first indication information indicates N codewords; or

the first indication information indicates N control resource set resource pool indexes.

In an embodiment, in case that the first indication information indicates N pieces of QCL relationship information and/or power control parameter, N pieces of precoding information and/or M numbers of layers corresponding to the PUSCH indicated by the first indication information correspond to the first number of layers; or a number of layers or an SRS resource number corresponding to N SRI groups corresponding to the PUSCH indicated by the first indication information corresponds to the first number of layers, where N is an integer greater than or equal to 1, and M is an integer greater than or equal to 1.

In an embodiment, the method further includes:

determining second indication information based on the first number of layers, where the second indication information is used to indicate the DMRS port corresponding to the PUSCH; and

transmitting the second indication information to the terminal.

In an embodiment, the QCL relationship information corresponding to the PUSCH includes QCL relationship information between the DMRS port corresponding to the PUSCH and one or more other reference signals.

An embodiments of the present application further provides a terminal, including a memory, a transceiver and a processor,

where the memory is used for storing a computer program, the transceiver is used for receiving and transmitting data under control of the processor, and the processor is used for reading the computer program in the memory and performing the following operations:

receiving first indication information transmitted from a network device, where the first indication information is used to indicate quasi-co-location (QCL) relationship information and/or power control parameter corresponding to a physical uplink shared channel (PUSCH); and

determining a demodulation reference signal (DMRS) port corresponding to the PUSCH based on the first indication information, where the DMRS port corresponds to one or more pieces of spatial relation information, and DMRS ports corresponding to different spatial relation information among multiple pieces of spatial relation information are different.

In an embodiment, the first indication information includes indication information indicating one or more of the following:

spatial relation information or beam corresponding to the PUSCH;

a transmission configuration indicator (TCI) state corresponding to the PUSCH;

a transmission and/or reception point corresponding to the PUSCH;

an antenna panel corresponding to the PUSCH;

precoding information and/or number of layers corresponding to the PUSCH;

a sounding reference signal (SRS) resource corresponding to the PUSCH;

a sounding reference signal (SRS) resource set corresponding to the PUSCH;

an open loop power control parameter corresponding to the PUSCH;

a codeword and/or a number of codewords corresponding to the PUSCH; or

a control resource set resource pool index corresponding to the PUSCH.

In an embodiment, the open loop power control parameter includes one or more of a target transmit power, a path loss reference signal parameter, or a path loss compensation parameter.

In an embodiment, determining the DMRS port corresponding to the PUSCH based on the first indication information includes:

determining a first number of layers corresponding to the DMRS port based on the first indication information; and

determining the DMRS port based on the first number of layers.

In an embodiment, determining the first number of layers corresponding to the DMRS port based on the first indication information includes:

based on the first indication information, determining N precoding information and/or number of layers fields corresponding to the PUSCH, or determining N sounding reference signal (SRS) resource indicator (SRI) fields corresponding to the PUSCH, where N is an integer greater than or equal to 1; and

determining the first number of layers based on the N precoding information and/or number of layers fields corresponding to the PUSCH, or the N SRI fields corresponding to the PUSCH.

In an embodiment, determining the first number of layers based on the N precoding information and/or number of layers fields corresponding to the PUSCH, or the N SRI fields corresponding to the PUSCH includes any one of the following:

determining the first number of layers based on a sum of N numbers of layers respectively indicated by the N precoding information and/or number of layers fields corresponding to the PUSCH; or

determining the first number of layers based on a sum of numbers of SRS resources of N SRS resource groups respectively indicated by the N SRI fields corresponding to the PUSCH; or

determining the first number of layers based on a sum of multiple numbers of layers indicated by a first precoding information and/or number of layers field among the N precoding information and/or number of layers fields; or

determining the first number of layers based on a sum of numbers of SRS resources of multiple SRS resource groups indicated by a first SRI field among the N SRI fields; or

determining the first number of layers based on N times a number of layers indicated by a first precoding information and/or number of layers field among the N precoding information and/or number of layers fields; or

determining the first number of layers based on N times a number of SRS resources indicated by a first SRI field among the N SRI fields; or

determining the first number of layers based on a number of layers indicated by the N precoding information and/or number of layers fields corresponding to the PUSCH; or

determining the first number of layers based on a number of SRS resources indicated by the N SRI fields corresponding to the PUSCH, or based on an SRS resource number indicated by the N SRI fields corresponding to the PUSCH; or

determining the first number of layers based on a number of layers indicated by a first precoding information and/or number of layers field among the N precoding information and/or number of layers fields; or

determining the first number of layers based on a number of SRS resources indicated by a first SRI field among the N SRI fields, or based on an SRS resource number indicated by a first SRI field among the N SRI fields.

In an embodiment, determining the first number of layers based on the N precoding information and/or number of layers fields corresponding to the PUSCH, or the N SRI fields corresponding to the PUSCH includes:

determining that one piece of precoding information and/or number of layers field corresponding to the PUSCH indicates N precoding matrices and/or M numbers of layers, or determining that one SRI field corresponding to the PUSCH indicates N SRS resource groups; and

determining the first number of layers based on the N precoding matrices and/or the M numbers of layers, or the N SRS resource groups, where M is an integer greater than or equal to 1.

In an embodiment, determining the first number of layers based on the N precoding matrices and/or the M numbers of layers, or the N SRS resource groups, includes any one of the following:

determining the first number of layers based on a sum of the M numbers of layers indicated by the one piece of precoding information and/or number of layers field corresponding to the PUSCH; or

determining the first number of layers based on a sum of numbers of SRS resources of the N SRS resource groups indicated by the one SRI field corresponding to the PUSCH; or

determining the first number of layers based on N times a number of layers indicated by the one piece of precoding information and/or number of layers field corresponding to the PUSCH; or

determining the first number of layers based on N times a number of SRS resources indicated by the one SRI field corresponding to the PUSCH; or

determining the first number of layers based on a number of layers indicated by the one piece of precoding information and/or number of layers field corresponding to the PUSCH; or

determining the first number of layers based on a number of SRS resources indicated by one SRI field corresponding to the PUSCH, or based on an SRS resource number indicated by one SRI field corresponding to the PUSCH.

In an embodiment, based on the first indication information, determining the N precoding information and/or number of layers fields corresponding to the PUSCH, or determining the N SRI fields corresponding to the PUSCH includes:

determining that the PUSCH corresponds to N pieces of first information based on the first indication information, where each of the N pieces of first information includes one or more of a transmission configuration indicator (TCI) state, spatial relation information, a power control parameter, a transmission and/or reception point, an antenna panel, a sounding reference signal (SRS) resource, a sounding reference signal (SRS) resource group, a precoding matrix, a layer group, a sounding reference signal (SRS) resource set, a codeword, or a control resource set resource pool; and

determining the N precoding information and/or number of layers fields corresponding to the PUSCH based on precoding information and/or number of layers field corresponding to each of the N pieces of first information; or determining the N SRI fields corresponding to the PUSCH based on SRI fields corresponding to each of the N pieces of first information.

In an embodiment, determining that the PUSCH corresponds to the N pieces of first information based on the first indication information includes one or more of the following:

in case that the first indication information indicates N pieces of precoding information and/or N numbers of layers, determining that the PUSCH corresponds to the N pieces of first information; or

in case that the first indication information indicates N pieces of enabled precoding information and/or number of layers field, determining that the PUSCH corresponds to the N pieces of first information; or

in case that the first indication information indicates N SRS resource groups, determining that the PUSCH corresponds to the N pieces of first information; or

in case that the first indication information indicates N enabled SRI fields, determining that the PUSCH corresponds to the N pieces of first information; or

in case that the first indication information indicates N SRS resource sets, determining that the PUSCH corresponds to the N pieces of first information; or

in case that the first indication information indicates N pieces of spatial relation information or beam, determining that the PUSCH corresponds to the N pieces of first information; or

in case that the first indication information indicates N transmission and/or reception points, determining that the PUSCH corresponds to the N pieces of first information; or

in case that the first indication information indicates N antenna panels, determining that the PUSCH corresponds to the N pieces of first information; or

in case that the first indication information indicates N open loop power control parameters, determining that the PUSCH corresponds to the N pieces of first information; or

in case that the first indication information indicates N codewords, determining that the PUSCH corresponds to the N pieces of first information; or

in case that the first indication information indicates N control resource set resource pool indexes, determining that the PUSCH corresponds to the N pieces of first information.

In an embodiment, determining the first number of layers based on the first indication information includes:

in case that the first indication information indicates N pieces of QCL relationship information and/or power control parameter, determining that the PUSCH corresponds to N pieces of precoding information and/or M numbers of layers, or determining that the PUSCH corresponds to N SRI groups, where N is an integer greater than or equal to 1, and M is an integer greater than or equal to 1; and

determining the first number of layers based on the N pieces of precoding information and/or the M numbers of layers, or a number of layers or an SRS resource number corresponding to the N SRI groups.

In an embodiment, determining the DMRS port based on the first number of layers includes:
determining a DMRS port corresponding to each of the N pieces of first information determined based on the first number of layers.

In an embodiment, the QCL relationship information corresponding to the PUSCH includes QCL relationship information between the DMRS port corresponding to the PUSCH and one or more other reference signals.

An embodiments of the present application further provides a network device, including a memory, a transceiver and a processor,

where the memory is used for storing a computer program, the transceiver is used for receiving and transmitting data under control of the processor, and the processor is used for reading the computer program in the memory and performing the following operations:

determining a first number of layers corresponding to a demodulation reference signal (DMRS) port corresponding to a physical uplink shared channel (PUSCH), where the DMRS port corresponds to one or more pieces of spatial relation information, and DMRS ports corresponding to different spatial relation information among multiple pieces of spatial relation information are different; and

transmitting first indication information to a terminal, where the first number of layers has a first relationship with the first indication information, and the first indication information is used to indicate quasi-co-location (QCL) relationship information and/or power control parameter corresponding to the PUSCH.

In an embodiment, the first indication information includes indication information indicating one or more of the following:

spatial relation information or beam corresponding to the PUSCH;

a transmission configuration indicator (TCI) state corresponding to the PUSCH;

a transmission and/or reception point corresponding to the PUSCH;

an antenna panel corresponding to the PUSCH;

precoding information and/or number of layers corresponding to the PUSCH;

a sounding reference signal (SRS) resource corresponding to the PUSCH;

a sounding reference signal (SRS) resource set corresponding to the PUSCH;

an open loop power control parameter corresponding to the PUSCH;

a codeword and/or a number of codewords corresponding to the PUSCH; or

a control resource set resource pool index corresponding to the PUSCH.

In an embodiment, the open loop power control parameter includes one or more of a target transmit power, a path loss reference signal parameter, or a path loss compensation parameter.

In an embodiment, N precoding information and/or number of layers fields corresponding to the PUSCH indicated by the first indication information, or N SRS resource indicator (SRI) fields corresponding to the PUSCH indicated by the first indication information correspond to the first number of layers, where N is an integer greater than or equal to 1.

In an embodiment, the N precoding information and/or number of layers fields corresponding to the PUSCH, or the N SRI fields corresponding to the PUSCH correspond to the first number of layers includes any one of the following:

a sum of N numbers of layers respectively indicated by the N precoding information and/or number of layers fields corresponding to the PUSCH is equal to the first number of layers; or

a sum of numbers of SRS resources of N SRS resource groups respectively indicated by the N SRI fields corresponding to the PUSCH is equal to the first number of layers; or

a sum of multiple numbers of layers indicated by a first precoding information and/or number of layers field among the N precoding information and/or number of layers fields corresponding to the PUSCH is equal to the first number of layers; or

a sum of numbers of SRS resources of multiple SRS resource groups indicated by a first SRI field among the N SRI fields corresponding to the PUSCH is equal to the first number of layers; or

N times a number of layers indicated by a first precoding information and/or number of layers field among the N precoding information and/or number of layers fields corresponding to the PUSCH is equal to the first number of layers; or

N times a number of SRS resources indicated by a first SRI field among the N SRI fields corresponding to the PUSCH is equal to the first number of layers; or

a number of layers indicated by the N precoding information and/or number of layers fields corresponding to the PUSCH is equal to the first number of layers; or

a number of SRS resources indicated by the N SRI fields corresponding to the PUSCH, or an SRS resource number indicated by the N SRI fields corresponding to the PUSCH is equal to the first number of layers;

a number of layers indicated by a first precoding information and/or number of layers field among the N precoding information and/or number of layers fields corresponding to the PUSCH is equal to the first number of layers; or

a number of SRS resources indicated by a first SRI field among the N SRI fields corresponding to the PUSCH, or an SRS resource number indicated by a first SRI field among the N SRI fields is equal to the first number of layers.

In an embodiment, N precoding matrices and/or M numbers of layers indicated by one piece of precoding information and/or number of layers field corresponding to the PUSCH indicated by the first indication information correspond to the first number of layers, where M is an integer greater than or equal to 1; or
N SRS resource groups indicated by one SRI field corresponding to the PUSCH indicated by the first indication information correspond to the first number of layers.

In an embodiment, the N precoding matrices and/or the M numbers of layers, or the N SRS resource groups correspond to the first number of layers includes any one of the following:

a sum of the M numbers of layers indicated by the one piece of precoding information and/or number of layers field corresponding to the PUSCH is equal to the first number of layers; or

a sum of numbers of SRS resources of the N SRS resource groups indicated by the one SRI field corresponding to the PUSCH is equal to the first number of layers; or

N times a number of layers indicated by the one piece of precoding information and/or number of layers field corresponding to the PUSCH is equal to the first number of layers; or

N times a number of SRS resources indicated by the one SRI field corresponding to the PUSCH is equal to the first number of layers; or

a number of layers indicated by the one piece of precoding information and/or number of layers field corresponding to the PUSCH is equal to the first number of layers; or

a number of SRS resources indicated by the one SRI field corresponding to the PUSCH, or an SRS resource number indicated by one SRI field corresponding to the PUSCH is equal to the first number of layers.

In an embodiment, the N precoding information and/or number of layers fields are precoding information and/or number of layers field corresponding to the N pieces of first information indicated by the first indication information; or the N SRI fields are SRI fields corresponding to the N pieces of first information indicated by the first indication information, where each of the N pieces of first information includes one or more of a TCI state, spatial relation information, a power control parameter, a transmission and/or reception point, an antenna panel, an SRS resource, an SRS resource group, a precoding matrix, a layer group, an SRS resource set, a codeword, or a control resource set resource pool.

In an embodiment, the first indication information indicates N pieces of first information includes one or more of the following:

the first indication information indicates N pieces of precoding information and/or N numbers of layers; or

the first indication information indicates N pieces of enabled precoding information and/or number of layers field; or

the first indication information indicates N SRS resource groups; or

the first indication information indicates N enabled SRI fields; or

the first indication information indicates N SRS resource sets; or

the first indication information indicates N pieces of spatial relation information or beam; or

the first indication information indicates N transmission and/or reception points; or

the first indication information indicates N antenna panels; or

the first indication information indicates N open loop power control parameters; or

the first indication information indicates N codewords; or

the first indication information indicates N control resource set resource pool indexes.

In an embodiment, in case that the first indication information indicates N pieces of QCL relationship information and/or power control parameter, N pieces of precoding information and/or M numbers of layers corresponding to the PUSCH indicated by the first indication information correspond to the first number of layers; or a number of layers or an SRS resource number corresponding to N SRI groups corresponding to the PUSCH indicated by the first indication information corresponds to the first number of layers, where N is an integer greater than or equal to 1, and M is an integer greater than or equal to 1.

In an embodiment, the operations further include:

determining second indication information based on the first number of layers, where the second indication information is used to indicate the DMRS port corresponding to the PUSCH; and

transmitting the second indication information to the terminal.

In an embodiment, the QCL relationship information corresponding to the PUSCH includes QCL relationship information between the DMRS port corresponding to the PUSCH and one or more other reference signals.

An embodiment of the present application further provides an apparatus for determining demodulation reference signal (DMRS) port, including:

a receiving unit, used for receiving first indication information transmitted from a network device, where the first indication information is used to indicate quasi-co-location (QCL) relationship information and/or power control parameter corresponding to a physical uplink shared channel (PUSCH); and

a first determining unit, used for determining a DMRS port corresponding to the PUSCH based on the first indication information, where the DMRS port corresponds to one or more pieces of spatial relation information, and DMRS ports corresponding to different spatial relation information among multiple pieces of spatial relation information are different.

In an embodiment, the first indication information includes indication information indicating one or more of the following:

spatial relation information or beam corresponding to the PUSCH;

a transmission configuration indicator (TCI) state corresponding to the PUSCH;

a transmission and/or reception point corresponding to the PUSCH;

an antenna panel corresponding to the PUSCH;

precoding information and/or number of layers corresponding to the PUSCH;

a sounding reference signal (SRS) resource corresponding to the PUSCH;

a sounding reference signal (SRS) resource set corresponding to the PUSCH;

an open loop power control parameter corresponding to the PUSCH;

a codeword and/or a number of codewords corresponding to the PUSCH; or

a control resource set resource pool index corresponding to the PUSCH.

In an embodiment, the open loop power control parameter includes one or more of a target transmit power, a path loss reference signal parameter, or a path loss compensation parameter.

In an embodiment, determining the DMRS port corresponding to the PUSCH based on the first indication information includes:

determining a first number of layers corresponding to the DMRS port based on the first indication information; and

determining the DMRS port based on the first number of layers.

In an embodiment, determining the first number of layers corresponding to the DMRS port based on the first indication information includes:

based on the first indication information, determining N precoding information and/or number of layers fields corresponding to the PUSCH, or determining N sounding reference signal (SRS) resource indicator (SRI) fields corresponding to the PUSCH, where N is an integer greater than or equal to 1; and

determining the first number of layers based on the N precoding information and/or number of layers fields corresponding to the PUSCH, or the N SRI fields corresponding to the PUSCH.

In an embodiment, determining the first number of layers based on the N precoding information and/or number of layers fields corresponding to the PUSCH, or the N SRI fields corresponding to the PUSCH includes any one of the following:

determining the first number of layers based on a sum of N numbers of layers respectively indicated by the N precoding information and/or number of layers fields corresponding to the PUSCH; or

determining the first number of layers based on a sum of numbers of SRS resources of N SRS resource groups respectively indicated by the N SRI fields corresponding to the PUSCH; or

determining the first number of layers based on a sum of multiple numbers of layers indicated by a first precoding information and/or number of layers field among the N precoding information and/or number of layers fields; or

determining the first number of layers based on a sum of numbers of SRS resources of multiple SRS resource groups indicated by a first SRI field among the N SRI fields; or

determining the first number of layers based on N times a number of layers indicated by a first precoding information and/or number of layers field among the N precoding information and/or number of layers fields; or

determining the first number of layers based on N times a number of SRS resources indicated by a first SRI field among the N SRI fields; or

determining the first number of layers based on a number of layers indicated by the N precoding information and/or number of layers fields corresponding to the PUSCH; or

determining the first number of layers based on a number of SRS resources indicated by the N SRI fields corresponding to the PUSCH, or based on an SRS resource number indicated by the N SRI fields corresponding to the PUSCH; or

determining the first number of layers based on a number of layers indicated by a first precoding information and/or number of layers field among the N precoding information and/or number of layers fields; or

determining the first number of layers based on a number of SRS resources indicated by a first SRI field among the N SRI fields, or based on an SRS resource number indicated by a first SRI field among the N SRI fields.

In an embodiment, determining the first number of layers based on the N precoding information and/or number of layers fields corresponding to the PUSCH, or the N SRI fields corresponding to the PUSCH includes:

determining that one piece of precoding information and/or number of layers field corresponding to the PUSCH indicates N precoding matrices and/or M numbers of layers, or determining that one SRI field corresponding to the PUSCH indicates N SRS resource groups; and

determining the first number of layers based on the N precoding matrices and/or the M numbers of layers, or the N SRS resource groups, where M is an integer greater than or equal to 1.

In an embodiment, determining the first number of layers based on the N precoding matrices and/or the M numbers of layers, or the N SRS resource groups, includes any one of the following:

determining the first number of layers based on a sum of the M numbers of layers indicated by the one piece of precoding information and/or number of layers field corresponding to the PUSCH; or

determining the first number of layers based on a sum of numbers of SRS resources of the N SRS resource groups indicated by the one SRI field corresponding to the PUSCH; or

determining the first number of layers based on N times a number of layers indicated by the one piece of precoding information and/or number of layers field corresponding to the PUSCH; or

determining the first number of layers based on N times a number of SRS resources indicated by the one SRI field corresponding to the PUSCH; or

determining the first number of layers based on a number of layers indicated by the one piece of precoding information and/or number of layers field corresponding to the PUSCH; or

determining the first number of layers based on a number of SRS resources indicated by one SRI field corresponding to the PUSCH, or based on an SRS resource number indicated by one SRI field corresponding to the PUSCH.

In an embodiment, based on the first indication information, determining the N precoding information and/or number of layers fields corresponding to the PUSCH, or determining the N SRI fields corresponding to the PUSCH includes:

determining that the PUSCH corresponds to N pieces of first information based on the first indication information, where each of the N pieces of first information includes one or more of a transmission configuration indicator (TCI) state, spatial relation information, a power control parameter, a transmission and/or reception point, an antenna panel, a sounding reference signal (SRS) resource, a sounding reference signal (SRS) resource group, a precoding matrix, a layer group, a sounding reference signal (SRS) resource set, a codeword, or a control resource set resource pool; and

determining the N precoding information and/or number of layers fields corresponding to the PUSCH based on precoding information and/or number of layers field corresponding to each of the N pieces of first information; or determining the N SRI fields corresponding to the PUSCH based on SRI fields corresponding to each of the N pieces of first information.

In an embodiment, determining that the PUSCH corresponds to the N pieces of first information based on the first indication information includes one or more of the following:

in case that the first indication information indicates N pieces of precoding information and/or N numbers of layers, determining that the PUSCH corresponds to the N pieces of first information; or

in case that the first indication information indicates N pieces of enabled precoding information and/or number of layers field, determining that the PUSCH corresponds to the N pieces of first information; or

in case that the first indication information indicates N SRS resource groups, determining that the PUSCH corresponds to the N pieces of first information; or

in case that the first indication information indicates N enabled SRI fields, determining that the PUSCH corresponds to the N pieces of first information; or

in case that the first indication information indicates N SRS resource sets, determining that the PUSCH corresponds to the N pieces of first information; or

in case that the first indication information indicates N pieces of spatial relation information or beam, determining that the PUSCH corresponds to the N pieces of first information; or

in case that the first indication information indicates N transmission and/or reception points, determining that the PUSCH corresponds to the N pieces of first information; or

in case that the first indication information indicates N antenna panels, determining that the PUSCH corresponds to the N pieces of first information; or

in case that the first indication information indicates N open loop power control parameters, determining that the PUSCH corresponds to the N pieces of first information; or

in case that the first indication information indicates N codewords, determining that the PUSCH corresponds to the N pieces of first information; or

in case that the first indication information indicates N control resource set resource pool indexes, determining that the PUSCH corresponds to the N pieces of first information.

In an embodiment, determining the first number of layers based on the first indication information includes:

in case that the first indication information indicates N pieces of QCL relationship information and/or power control parameter, determining that the PUSCH corresponds to N pieces of precoding information and/or M numbers of layers, or determining that the PUSCH corresponds to N SRI groups, where N is an integer greater than or equal to 1, and M is an integer greater than or equal to 1; and

determining the first number of layers based on the N pieces of precoding information and/or the M numbers of layers, or a number of layers or an SRS resource number corresponding to the N SRI groups.

In an embodiment, determining the DMRS port based on the first number of layers includes: determining a DMRS port corresponding to each of the N pieces of first information determined based on the first number of layers.

In an embodiment, the QCL relationship information corresponding to the PUSCH includes QCL relationship information between the DMRS port corresponding to the PUSCH and one or more other reference signals.

An embodiment of the present application further provides an apparatus for determining demodulation reference signal (DMRS) port, including:

a second determining unit, used for determining a first number of layers corresponding to a DMRS port corresponding to a physical uplink shared channel (PUSCH), where the DMRS port corresponds to one or more pieces of spatial relation information, and DMRS ports corresponding to different spatial relation information among multiple pieces of spatial relation information are different; and

a transmitting unit, used for transmitting first indication information to a terminal, where the first number of layers has a first relationship with the first indication information, and the first indication information is used to indicate quasi-co-location (QCL) relationship information and/or power control parameter corresponding to the PUSCH.

In an embodiment, the first indication information includes indication information indicating one or more of the following:

spatial relation information or beam corresponding to the PUSCH;

a transmission configuration indicator (TCI) state corresponding to the PUSCH;

a transmission and/or reception point corresponding to the PUSCH;

an antenna panel corresponding to the PUSCH;

precoding information and/or number of layers corresponding to the PUSCH;

a sounding reference signal (SRS) resource corresponding to the PUSCH;

a sounding reference signal (SRS) resource set corresponding to the PUSCH;

an open loop power control parameter corresponding to the PUSCH;

a codeword and/or a number of codewords corresponding to the PUSCH; or

a control resource set resource pool index corresponding to the PUSCH.

In an embodiment, the open loop power control parameter includes one or more of a target transmit power, a path loss reference signal parameter, or a path loss compensation parameter.

In an embodiment, N precoding information and/or number of layers fields corresponding to the PUSCH indicated by the first indication information, or N SRS resource indicator (SRI) fields corresponding to the PUSCH indicated by the first indication information correspond to the first number of layers, where N is an integer greater than or equal to 1.

In an embodiment, the N precoding information and/or number of layers fields corresponding to the PUSCH, or the N SRI fields corresponding to the PUSCH correspond to the first number of layers includes any one of the following:

a sum of N numbers of layers respectively indicated by the N precoding information and/or number of layers fields corresponding to the PUSCH is equal to the first number of layers; or

a sum of numbers of SRS resources of N SRS resource groups respectively indicated by the N SRI fields corresponding to the PUSCH is equal to the first number of layers; or

a sum of multiple numbers of layers indicated by a first precoding information and/or number of layers field among the N precoding information and/or number of layers fields corresponding to the PUSCH is equal to the first number of layers; or

a sum of numbers of SRS resources of multiple SRS resource groups indicated by a first SRI field among the N SRI fields corresponding to the PUSCH is equal to the first number of layers; or

N times a number of layers indicated by a first precoding information and/or number of layers field among the N precoding information and/or number of layers fields corresponding to the PUSCH is equal to the first number of layers; or

N times a number of SRS resources indicated by a first SRI field among the N SRI fields corresponding to the PUSCH is equal to the first number of layers; or

a number of layers indicated by the N precoding information and/or number of layers fields corresponding to the PUSCH is equal to the first number of layers; or

a number of SRS resources indicated by the N SRI fields corresponding to the PUSCH, or an SRS resource number indicated by the N SRI fields corresponding to the PUSCH is equal to the first number of layers;

a number of layers indicated by a first precoding information and/or number of layers field among the N precoding information and/or number of layers fields corresponding to the PUSCH is equal to the first number of layers; or

a number of SRS resources indicated by a first SRI field among the N SRI fields corresponding to the PUSCH, or an SRS resource number indicated by a first SRI field among the N SRI fields is equal to the first number of layers.

In an embodiment, N precoding matrices and/or M numbers of layers indicated by one piece of precoding information and/or number of layers field corresponding to the PUSCH indicated by the first indication information correspond to the first number of layers, where M is an integer greater than or equal to 1; or
N SRS resource groups indicated by one SRI field corresponding to the PUSCH indicated by the first indication information correspond to the first number of layers.
In an embodiment, the N precoding matrices and/or the M numbers of layers, or the N SRS resource groups correspond to the first number of layers includes any one of the following:

a sum of the M numbers of layers indicated by the one piece of precoding information and/or number of layers field corresponding to the PUSCH is equal to the first number of layers; or

a sum of numbers of SRS resources of the N SRS resource groups indicated by the one SRI field corresponding to the PUSCH is equal to the first number of layers; or

N times a number of layers indicated by the one piece of precoding information and/or number of layers field corresponding to the PUSCH is equal to the first number of layers; or

N times a number of SRS resources indicated by the one SRI field corresponding to the PUSCH is equal to the first number of layers; or

a number of layers indicated by the one piece of precoding information and/or number of layers field corresponding to the PUSCH is equal to the first number of layers; or

a number of SRS resources indicated by the one SRI field corresponding to the PUSCH, or an SRS resource number indicated by one SRI field corresponding to the PUSCH is equal to the first number of layers.

In an embodiment, the N precoding information and/or number of layers fields are precoding information and/or number of layers field corresponding to the N pieces of first information indicated by the first indication information; or the N SRI fields are SRI fields corresponding to the N pieces of first information indicated by the first indication information, where each of the N pieces of first information includes one or more of a TCI state, spatial relation information, a power control parameter, a transmission and/or reception point, an antenna panel, an SRS resource, an SRS resource group, a precoding matrix, a layer group, an SRS resource set, a codeword, or a control resource set resource pool.

In an embodiment, the first indication information indicates N pieces of first information includes one or more of the following:

the first indication information indicates N pieces of precoding information and/or N numbers of layers; or

the first indication information indicates N pieces of enabled precoding information and/or number of layers field; or

the first indication information indicates N SRS resource groups; or

the first indication information indicates N enabled SRI fields; or

the first indication information indicates N SRS resource sets; or

the first indication information indicates N pieces of spatial relation information or beam; or

the first indication information indicates N transmission and/or reception points; or

the first indication information indicates N antenna panels; or

the first indication information indicates N open loop power control parameters; or

the first indication information indicates N codewords; or

the first indication information indicates N control resource set resource pool indexes.

In an embodiment, in case that the first indication information indicates N pieces of QCL relationship information and/or power control parameter, N pieces of precoding information and/or M numbers of layers corresponding to the PUSCH indicated by the first indication information correspond to the first number of layers; or a number of layers or an SRS resource number corresponding to N SRI groups corresponding to the PUSCH indicated by the first indication information corresponds to the first number of layers, where N is an integer greater than or equal to 1, and M is an integer greater than or equal to 1.

In an embodiment, the second determining unit is further used for:

determining second indication information based on the first number of layers, where the second indication information is used to indicate the DMRS port corresponding to the PUSCH; and

where the transmitting unit is further used for:
transmitting the second indication information to the terminal.

In an embodiment, the QCL relationship information corresponding to the PUSCH includes QCL relationship information between the DMRS port corresponding to the PUSCH and one or more other reference signals.

An embodiment of the present application further provides a computer-readable storage medium storing a computer program, where the computer program is used to cause a computer to perform the methods for determining DMRS port described above.

An embodiment of the present application further provides a communication device storing a computer program, where the computer program is used to cause the communication device to perform the methods for determining DMRS port described above.

An embodiment of the present application further provides a processor-readable storage medium storing a computer program, where the computer program is used to cause a processor to perform the methods for determining DMRS port described above.

An embodiment of the present application further provides a chip product storing a computer program, where the computer program is used to cause the chip product to perform the methods for determining DMRS described above.

In the methods and apparatuses for determining DMRS port, the devices and the storage medium provided by the embodiments of the present application, the QCL relationship information and/or power control parameter corresponding to the PUSCH is indicated by transmitting the first indication information through the network device. The terminal may determine different DMRS ports corresponding to different spatial relation information based on the first indication information, and then the terminal may transmit a DMRS on different DMRS ports simultaneously, which increases throughput of an uplink transmission and improves a transmission rate of the PUSCH.

BRIEF DESCRIPTION OF THE DRAWINGS

To clearly illustrate the solutions in the embodiments of the present application, the drawings used in the description of the embodiments are briefly described below. The drawings in the following description are only some embodiments of the present application, and other drawings may be obtained according to these drawings without any creative work for those skilled in the art.

FIG. 1 is a first schematic flowchart of a method for determining demodulation reference signal (DMRS) port according to an embodiment of the present application;

FIG. 2 is a second schematic flowchart of a method for determining DMRS port according to an embodiment of the present application;

FIG. 3 is a schematic structural diagram of a terminal according to an embodiment of the present application;

FIG. 4 is a schematic structural diagram of a network device according to an embodiment of the present application;

FIG. 5 is a first schematic structural diagram of an apparatus for determining DMRS port according to an embodiment of the present application; and

FIG. 6 is a second schematic structural diagram of an apparatus for determining DMRS port according to an embodiment of the present application.

DETAILED DESCRIPTION

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

The terms "first", "second", etc. in the embodiments of the present application are only used for descriptive purposes and are used to distinguish similar features, and cannot be understood as indicating or implying relative importance or implicitly indicating the number of the indicated features. Therefore, features defined by "first" and "second" may explicitly or implicitly include at least one of these features. In the embodiments of the present application, the term "multiple" refers to two or more than two, and other quantifiers are similar to it.

"Determining B based on A" in the present application means that the factor A should be considered when determining B. It is not limited to "determining B only based on A", but also includes "determining B based on A and C", "determining B based on A, C and E", "determining C based on A, and further determining B based on C", etc. In addition, it may also include taking A as a condition for determining B, for example, "in case that A meets a first condition, determining B by using a first method". For another example, "in case that A meets a second condition, determining B", etc. For another example, "in case that A meets a third condition, determining B based on a first parameter", etc. In an embodiment, it may be that A is taken as a condition for determining a factor of B, for example, "in case that A meets the first condition, determining C by using the first method, and further determining B based on C", etc.

"Determining B according to A" in the present application means that the factor A should be considered when determining B. It is not limited to "determining B only according to A", but also includes "determining B according to A and C", "determining B according to A, C and E", "determining C according to A, and further determining B according to C", etc. In addition, it may also include taking A as a condition for determining B, for example, "in case that A meets a first condition, determining B by using a first method". For another example, "in case that A meets a second condition, determining B", etc. For another example, "in case that A meets a third condition, determining B according to a first parameter", etc. In an embodiment, it may be that A is taken as a condition for determining a factor of B, for example, "in case that A meets the first condition, determining C by using the first method, and further determining B according to C", etc.

The solutions according to the embodiments of the present application may be applicable to various systems, including but not limited to 5th generation (5G) systems, 6th generation (6G) systems, or their evolved systems, or other orthogonal frequency division multiplexing (OFDM) systems, discrete Fourier transform spread OFDM (DFT-S-OFDM) systems, etc. For example, the applicable systems may be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a terminal device and a network device. The systems may further include a core network part, such as an evolved packet system (EPS), a 5G system (5GS), and the like.

The terminal device involved in the embodiments of the present application may be a device that provides voice and/or data connectivity to a user, a handheld device with a wireless connection function, or other processing devices connected to a wireless modem. In different systems, the names of the terminal device may be different. For example, in the 5G system, the terminal device may be called as a user equipment (UE). A wireless terminal device may communicate with one or more core networks (CNs) via a radio access network (RAN), and the wireless terminal device may be a mobile terminal device, such as a mobile phone (or cellular phone), a computer with mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be called a system, a subscriber unit, a subscriber station, a mobile station, a mobile, a remote station, an access point, a remote terminal, an access terminal, a user terminal, a user agent, or a user device, which is not limited in the embodiments of the present application.

The network device involved in the embodiments of the present application may be a base station, and the base station may include multiple cells providing services for the terminal. Depending on the specific scenario, the base station may be called an access point, or a device communicating with a wireless terminal device through one or more sectors on the air interface in the access network, or other names. The network device may be used for exchanging received air frames with Internet Protocol (IP) packets, and acting as a router between the wireless terminal device and the rest of the access network, where the rest of the access network may include an IP communication network. The network device may also coordinate attribute management for the air interface. For example, the network device in the embodiments of the present application may be a base transceiver station (BTS) in a global system for mobile communications (GSM) or a code division multiple access (CDMA), a node B in a wide-band code division multiple access (WCDMA), an evolutional node B (eNB or e-Node B) in a long term evolution (LTE) system, a 5G base station (gNB) in 5G network architecture (next generation system), a home evolved node B (HeNB), a relay node, a femto, or a pico base station (pico), etc., which is not limited in the embodiments of the present application. In some network structures, the network device may include a centralized unit (CU) node and a distributed unit (DU) node, and the centralized unit and the distributed unit may be geographically separated.

A multi-input multi-output (MIMO) transmission may be performed between the base station and the terminal device by using one or more antennas. The MIMO transmission may be single-user MIMO (SU-MIMO) or multi-user MIMO (MU-MIMO). Depending on the form and number of antenna combinations, MIMO transmission may be 2D-MIMO, 3D-MIMO, FD-MIMO or massive-MIMO, and may also be diversity transmission, precoding transmission, beamforming transmission, etc.

The solutions in the embodiments of the present application are clearly and completely described in the following with reference to the accompanying drawings in the embodiments of the present application. These embodiments are only a part of the embodiments of the present application, and not all of the embodiments. All other embodiments obtained by a skilled person in the art based on the embodiments of the present application without any creative effort belong to the scope of the present application.

In order to facilitate a clearer understanding of solutions of each embodiment of the present application, some contents related to each embodiment of the present application are first introduced.

For a physical uplink share channel (PUSCH), a network device (such as a base station) indicates a demodulation reference signal (DMRS) port corresponding to a PUSCH transmission, and a terminal performs a DMRS transmission on a corresponding DMRS port.

Under a given number of transmission layers (also called rank), there are multiple DMRS port configurations, that is, there are multiple DMRS port combinations. A PUSCH transmission using a cyclic prefix orthogonal frequency division multiplexing (CP-OFDM) waveform, a DMRS type being Type 2, a maximum length of a front-loaded DMRS symbol being 1, and rank=2 are taken as an example, configuration methods are as shown in the following table.

Table 1 DMRS configuration methods

| Number of DMRS code division multiplexing (CDM) group(s) without data | DMRS port(s) |
|---|---|
| 1 | 0,1 |

(continued)

| Number of DMRS code division multiplexing (CDM) group(s) without data | DMRS port(s) |
| --- | --- |
| 2 | 0,1 |
| 2 | 2,3 |
| 3 | 0,1 |
| 3 | 2,3 |
| 3 | 4,5 |
| 2 | 0,2 |

To reduce an overhead for indicating the DMRS port, the network device indicates the DMRS port only in a DMRS port configuration corresponding to a number of layers corresponding to the PUSCH transmission. In case that the PUSCH is codebook-based PUSCH scheduled by downlink control information (DCI), the rank is indicated by precoding information and number of layers field in the DCI, and the rank is equal to a number of layers indicated by the precoding information and number of layers field. In case that the PUSCH is non-codebook-based PUSCH scheduled by DCI, the rank is indicated by a sounding reference signal (SRS) resource indicator (SRI) field in the DCI, and the rank is equal to an SRS resource numbers indicated by the SRI field.

A multi-transmission and/or reception point (M-TRP) scenario supports PUSCH repetition in a time domain. That is, same or different redundancy versions (RVs) of a same PUSCH transmission block (TB) are repeated in multiple time slots/sub-slots, where half of the slots/sub-slots are transmitted in a direction of a transmission and/or reception point (TRP), and another half of the slots/sub-slots are transmitted in a direction of another TRP. The network device may separately indicate precoding matrices for two TRPs through two precoding indicator fields (for a codebook-based PUSCH, the two precoding indicator fields are first precoding information and number of layers field and second precoding information and number of layers field; and for a non-codebook-based PUSCH, the two precoding indicator fields are a first SRI field and a second SRI field). Since the two TRPs are in repetition, a numbers of layers of repeated copies and DMRS ports of the two TRPs should be exactly the same. Therefore, in the related art, for a M-TRP repetition in time domain, an indication for the DMRS port is determined based on a rank indicated by a first precoding indicator field (for a codebook-based PUSCH, the first precoding indicator field is the first precoding information and number of layers field; for a non-codebook-based PUSCH, the first precoding indicator field is the first SRI field), and the DMRS port is indicated in the DMRS port configuration corresponding to the rank indicated by the first precoding indicator field.

A method of one beam indication signaling indicating multiple channel beams is adopted, that is, a unified transmission configuration indicator (TCI) activates a set of TCI states through a medium access control-control element (MAC-CE), and then one of the activated TCI states is indicated by DCI. In case that uplink and downlink channels are reciprocal, a beam indicated by the beam indication signaling may be used for both the uplink channel and the downlink channel. In case that an energy leakage problem occurs due to human body obstruction or the terminal needs to switch the uplink beam, the uplink channel would uses a beam different from that of the downlink channel, and the beam indication signaling needs to indicate beams for the uplink channel the downlink channel respectively.

In case that the terminal is configured with a multi-antenna panel (M-panel), each panel can correspond to one beam direction. The beam indication signaling should indicate different beams for different panels. That is, it is necessary to support indicating multiple TCI states for an uplink transmission when the terminal performs a simultaneous transmission on multiple panels; and it is necessary to indicate one TCI state for an uplink transmission when the terminal performs a single panel (S-panel) transmission.

In the related art, for a method for M-TRP repetition in time domain, DMRS ports corresponding to two TRPs are exactly the same, which limits throughput of an uplink transmission and results in a low PUSCH transmission rate.

In the related art, there is also no solution about respectively indicating DMRS ports for two TRPs/panels. A solution that may be easily gotten is to add a DMRS port indicator field to DCI, which is similar to the precoding indication. That is, there are two DMRS port indicator fields in the DCI, and each of the two DMRS port indicator fields corresponds to one TRP/panel respectively. However, this solution requires doubling a DMRS port indication overhead. Besides, in the related art, flexible switching between M-panel/M-TRP transmission and S-panel/S-TRP transmission are also not considered, let alone solutions for determining DMRS port during flexible switching between M-panel/M-TRP transmission and S-panel/S-TRP.

In response to the above problems, embodiments of the present application provide a method for determining DMRS port. The network device transmits first indication information for indicating quasi-co-location (QCL) relationship information and/or power control parameter corresponding to a PUSCH to the terminal. The terminal may determine different DMRS ports corresponding to different spatial relation information based on the first indication information, and then the terminal may transmit a DMRS on different DMRS ports simultaneously, which increases throughput of an uplink transmission and improves a transmission rate of the PUSCH.

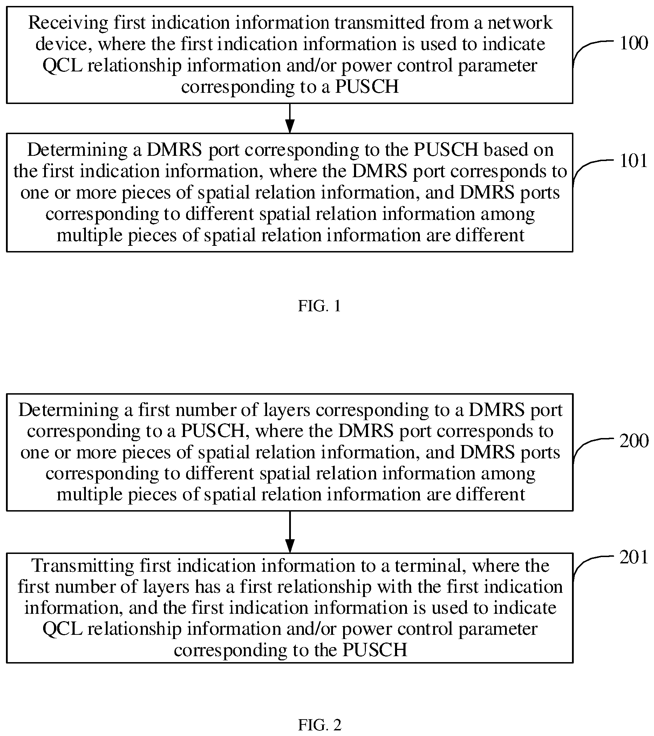

FIG. 1 is a first schematic flowchart of a method for determining demodulation reference signal (DMRS) port according to an embodiment of the present application. As shown in FIG. 1, this method is performed by a terminal and includes the following steps.

Step 100: receiving first indication information transmitted from a network device, where the first indication information is used to indicate quasi-co-location (QCL) relationship information and/or power control parameter corresponding to a physical uplink shared channel (PUSCH).

Step 101: determining a DMRS port corresponding to the PUSCH based on the first indication information, where the DMRS port corresponds to one or more pieces of spatial relation information, and DMRS ports corresponding to different spatial relation information among multiple pieces of spatial relation information are different.

In the embodiment of the present application, the network device (such as a base station) may transmit the first indication information for indicating the QCL relationship information and/or power control parameter corresponding to the PUSCH to the terminal. After the terminal receives the first indication information, the DMRS port corresponding to the PUSCH may be determined based on content indicated by the first indication information. The DMRS port corresponding to the PUSCH corresponds to one or more pieces of spatial relation information (that is, spatial related information, spatial relation information or a spatial domain filter), and different spatial relation information corresponds to different DMRS ports.

In an embodiment, the terminal determines the DMRS port corresponding to the PUSCH based on the content indicated by the first indication information. The DMRS port corresponding to the PUSCH may be determined based on the QCL relationship information and/or power control parameter indicated by the first indication information; or the DMRS port corresponding to the PUSCH may be determined based on the QCL relationship information and/or a number of power control parameters corresponding to the PUSCH indicated in the first indication information.

In an embodiment, the QCL relationship information corresponding to the PUSCH may include QCL relationship information between the DMRS port corresponding to the PUSCH and one or more other reference signals.

In an embodiment, determining the DMRS port corresponding to the PUSCH based on the first indication information includes: determining the DMRS port corresponding to the PUSCH based on content indicated by the first indication information.

In an embodiment, determining the DMRS port corresponding to the PUSCH based on the content indicated by the first indication information includes: determining the DMRS port corresponding to the PUSCH based on QCL relationship information or a number of power control parameters indicated by the first indication information.

In an embodiment, determining, by the terminal, the DMRS port corresponding to the PUSCH based on the content indicated by the first indication information may include: determining a number of layers corresponding to the DMRS port corresponding to the PUSCH based on the content indicated by the first indication information; determining a table corresponding to DMRS port indication information based on the number of layers; and determining the DMRS port corresponding to the PUSCH based on the table and the DMRS port indication information. The DMRS port indication information is used to indicate the DMRS port corresponding to the PUSCH.

In an embodiment, determining, by the terminal, the DMRS port corresponding to the PUSCH based on the content indicated by the first indication information may include: determining an information field of a first number of layers corresponding to the DMRS port corresponding to the PUSCH based on QCL relationship information or a number of power control parameters indicated by the first indication information; determining the first number of layers based on the information field; determining a table corresponding to DMRS port indication information based on the first number of layers; and determining the DMRS port corresponding to the PUSCH based on the table and the DMRS port indication information. The DMRS port indication information is used to indicate the DMRS port corresponding to the PUSCH.

In an embodiment, the DMRS port indication information may be transmitted from the network device to the terminal.

In an embodiment, a number of DMRS ports corresponding to the PUSCH may be equal to the first number of layers.

In an embodiment, the first number of layers and content indicated by the first indication information may have a first relationship.

In an embodiment, the terminal may determine the first number of layers based on the content indicated by the first indication information.

In an embodiment, the first indication information may be used by the terminal to determine the first number of layers.

In an embodiment, the first relationship may be that a number of layers corresponding to the first indication information has an operational relationship or a functional relationship with the first number of layers. For example, multiples and sums are both operational relationships.

In an embodiment, the first relationship may be that the number of layers corresponding to the first indication information is the first number of layers.

In the method for determining DMRS port provided by the embodiments of the present application, the terminal may receive the first indication information, transmitted from the network device, for indicating the QCL relationship information and/or power control parameter corresponding to the PUSCH, and determine different DMRS ports corresponding to different spatial relation information based on the first indication information. The terminal may transmit a DMRS on different DMRS ports simultaneously, which increases throughput of an uplink transmission and improves a transmission rate of the PUSCH.

In an embodiment, the first indication information includes indication information indicating one or more of the following:

spatial relation information or beam corresponding to the PUSCH;

a transmission configuration indicator (TCI) state corresponding to the PUSCH;

a transmission and/or reception point corresponding to the PUSCH;

an antenna panel corresponding to the PUSCH;

precoding information and/or number of layers corresponding to the PUSCH;

a sounding reference signal (SRS) resource corresponding to the PUSCH;

a sounding reference signal (SRS) resource set corresponding to the PUSCH;

an open loop power control parameter corresponding to the PUSCH;

a codeword and/or a number of codewords corresponding to the PUSCH; or

a control resource set resource pool index corresponding to the PUSCH.

In an embodiment, the open loop power control parameter may include one or more of a target transmit power p0, a path loss reference signal parameter, or a path loss compensation parameter.

In an embodiment, the QCL relationship information corresponding to the PUSCH may be indicated by one or more of the following:

indication information for spatial relation information or beam;

indication information for a TCI state;

indication information for a transmission and/or reception point;

indication information for an antenna panel;

indication information for precoding information and/or number of layers;

indication information for an SRS resource;

indication information for an SRS resource set;

indication information for an open loop power control parameter;

indication information for a codeword and/or a number of codewords;

indication information for a control resource set resource pool index.

In an embodiment, the first indication information may be an information field or a parameter used for indication, and its specific form is not limited. It may be indication information that directly indicates the QCL relationship information and/or power control parameter corresponding to the PUSCH, or it may be one or more pieces of the above indication information, or it may implicitly indicate the QCL relationship information and/or power control parameter corresponding to the PUSCH through one or more pieces of the above indication information.

For example, in case that the first indication information is used to indicate the TCI state corresponding to the PUSCH, the first indication information may be a TCI state indicator field; in case that the first indication information is used to indicate the SRS resource corresponding to the PUSCH, the first information field may be an SRI field; and in case that the first indication information is used to indicate the SRS resource set corresponding to the PUSCH, the first indication information may be an SRS resource set field.

In an embodiment, determining the DMRS port corresponding to the PUSCH based on the first indication information includes:

determining a first number of layers corresponding to the DMRS port based on the first indication information; and

determining the DMRS port based on the first number of layers.

In an embodiment, after receiving the first indication information, the terminal may first determine the first number of layers corresponding to the DMRS port based on the first indication information, where the first number of layers is equal to a number of DMRS ports.

After determining the first number of layers corresponding to the DMRS port, the terminal may determine a specific DMRS port based on the first number of layers. For example, the terminal may determine the specific DMRS port based on second indication information transmitted from the network device, where the second indication information may be indication information for DMRS port indication from a DMRS port configuration corresponding to the first number of layers.

In an embodiment, determining, by the terminal, the DMRS port based on the first number of layers may include: determining a DMRS port corresponding to each of N pieces of first information corresponding to the PUSCH based on the first number of layers.

In an embodiment, after the terminal determines the first number of layers corresponding to the DMRS port, DMRS ports respectively corresponding to N pieces of first information may be determined based on the first number of layers and a number of layers corresponding to each of the N (where N is an integer greater than or equal to 1) pieces of first information corresponding to the PUSCH.

The first information may include one or more of a TCI state, spatial relation information, a power control parameter, a transmission and/or reception point, an antenna panel, an SRS resource, an SRS resource group, a precoding matrix, a layer group, an SRS resource set, a codeword, or a control resource set resource pool index (CORESETPoolIndex).

In an embodiment, determining the first number of layers corresponding to the DMRS port includes:

determining the first number of layers based on a sum of second numbers of layers corresponding to the N pieces of third information corresponding to the PUSCH; or

determining the first number of layers based on a sum of numbers of SRS resources corresponding to the N pieces of third information corresponding to the PUSCH.

In an embodiment, in case that the DMRS port is a DMRS port corresponding to a codebook-based PUSCH, the third information is precoding and/or number of layers indication information, and the first number of layers is determined based on a number of transmission layers indicated by the precoding and/or number of layers indication information; and in case that the DMRS port is a DMRS port corresponding to a non-codebook-based PUSCH, the third information is SRI information, and the first number of layers is determined based on a number of SRS resources indicated by the SRI information.

In an embodiment, the first number of layers is equal to the sum of the second numbers of layers corresponding to the N pieces of third information corresponding to the PUSCH, or the first number of layers is equal to the sum of the numbers of SRS resources corresponding to the N pieces of third information corresponding to the PUSCH.

In an embodiment, the first number of layers is equal to N times a second number of layers and/or a number of SRS resources corresponding to one piece of third information corresponding to the PUSCH.

In an embodiment, the sum of the second numbers of layers corresponding to the N pieces of third information corresponding to the PUSCH, and/or the sum of the numbers of SRS resources corresponding to the N pieces of third information corresponding to the PUSCH is indicated by the network device.

In an embodiment, determining the first number of layers based on the sum of the second numbers of layers corresponding to the N pieces of third information corresponding to the PUSCH includes:
in case that a second number of layers corresponding to an i-th third information among the N pieces of third information corresponding to the PUSCH is $L_i$, determining the first number of layers as $\sum_{i=1}^{N} L_i$ .

In an embodiment, determining the first number of layers based on the sum of the numbers of SRS resources corresponding to the N pieces of third information corresponding to PUSCH includes:

in case that a number of SRS resources corresponding to an i-th third information among the N pieces/N groups of third information is $Q_i$, determining the first number of layers as $\sum_{i=1}^{N} Q_i$ .

In an embodiment, in case that the third information is precoding and/or number of layers indication information:

in case that a second number of layers corresponding to an i-th third information among the N pieces of third information is $L_i$, a precoding matrix and/or layer indicated by the i-th third information corresponds to a $(L_{i-1} + 1)$-th DMRS port to a $(L_{i-1} + L_i)$-th DMRS port indicated by the DMRS port indication information, where in case that $i = 1$, $L_{i-1} = 0$; and/or

in case that the third information is the SRI information:
in case that a number of SRS resources corresponding to an i-th third information among the N pieces of third information corresponding to the PUSCH is $Q_i$, an SRS resource indicated by the i-th third information corresponds to a $(Q_{i-1} + 1)$-th DMRS port to a $(Q_{i-1} + Q_i)$-th DMRS port indicated by an information field used to indicate the DMRS port, where in case that $i = 1$, $Q_{i-1} = 0$.

In an embodiment, the N pieces of third information corresponding to the PUSCH are jointly coded and indicated by one second information field; or
the N pieces of third information corresponding to the PUSCH are independently encoded and indicated by N third information fields.

In an embodiment, in case that the N pieces of third information are independently encoded and indicated by the N third information fields:

in case that a second number of layers corresponding to an i-th third information field among N third indicator fields is $L_i$, the i-th third information field among the N third indicator fields corresponds to a $(L_{i-1} + 1)$-th DMRS port to a $(L_{i-1} + L_i)$-th DMRS port indicated by the information field used to indicate the DMRS port, where in case that $i = 1$, $L_{i-1} = 0$; or

in case that a number of SRS resources corresponding to an i-th third information field among N third indicator fields is $Q_i$, the i-th third information field among the N third indicator fields corresponds to a $(Q_{i-1} + 1)$-th DMRS port to a $(Q_{i-1} + Q_i)$-th DMRS port indicated by the information field used to indicate the DMRS port, where in case that $i = 1$, $Q_{i-1} = 0$.

In an embodiment, DMRS ports corresponding to any two of the N pieces of third information corresponding to the PUSCH are DMRS ports in different code division multiplexing (CDM) groups.

In an embodiment, in the case that the information field used to indicate the DMRS port corresponds to N CDM groups, and second numbers of layers and/or numbers of SRS resources corresponding to the N pieces of third information corresponding to the PUSCH are different, the i-th third information among the N pieces of third information corresponds to a j-th CDM group among the N CDM groups, and a number of DMRS ports included in the j-th CDM group is equal to the second number of layers or the number of SRS resources corresponding to i-th third information.

In an embodiment, determining the DMRS port based on the DMRS port indication information and the first indication information includes:

determining a CDM group corresponding to the N pieces of third information corresponding to the PUSCH based on the DMRS port indication information, where the CDM group and second information has an association relationship; and

determining a DMRS port corresponding to the second information based on the association relationship,

where the second information may include at least one or more of the following:

a codeword;

a beam;

an antenna panel;

a transmission and/or reception point;

a precoding matrix;

a precoding and/or number of layers field;

a transmission configuration indicator state;

a control resource set resource pool index;

a sounding reference signal resource set; or

a sounding reference signal resource indicator field.

In an embodiment, the method may further include:
determining an association relationship between the DMRS port and the second information based on CDM groups corresponding to the DMRS port, where the second information may include at least one or more of the following:

a codeword;

a beam;

an antenna panel;

a transmission and/or reception point;

a precoding matrix;

a precoding and/or number of layers field;

a transmission configuration indicator state;

a control resource set resource pool index; or

a sounding reference signal resource set.

In an embodiment, determining the DMRS port based on the first number of layers and information used to indicate the DMRS port includes:

determining a DMRS indication table based on the first number of layers; and

determining the DMRS port based on the DMRS indication table and the information used to indicate the DMRS port.

In an embodiment, the third information is used to indicate one or more of the following:

a codeword;

a beam;

an antenna panel;

a transmission and/or reception point;

a precoding matrix and/or number of layers;

a transmission configuration indicator state;

a resource set; or

a control resource set resource pool index.

In some embodiments, it is assumed that N=2, the first information is an SRS resource set, and the terminal determines the first number of layers as (L1+L2) based on the first indication information (where L1 and L2 are numbers of layers respectively corresponding to a first SRS resource set and a second SRS resource), that is, the number of layers corresponding to the DMRS port is (L1+L2), and the number of DMRS ports is also (L1+L2).

In an embodiment, first L1 ports may correspond to a precoding matrix indicated by a first precoding information and/or number of layers indicator field (corresponding to the first SRS resource set), and a (L1+1)-th port to a (L1+L2)-th port may correspond to a precoding matrix indicated by a second precoding information and/or number of layers indicator field (corresponding to the second SRS resource set).

In an embodiment, the first L1 ports may correspond to a first TCI state/panel/codeword/TRP/beam/CORESETPoolIndex (corresponding to the first SRS resource set), and remaining DMRS ports may correspond to a second TCI state/panel/ codeword/TRP/beam/CORESETPoolIndex (corresponding to the second SRS resource set).

In an embodiment, DMRS ports corresponding to the two different SRS resource sets belong to different CDM groups. A CDM group corresponding to L1 DMRS ports is different from a CDM group corresponding to other L2 DMRS ports. For example, the L1 DMRS ports correspond to one CDM group, and the other L2 DMRS ports correspond to another CDM group.

In an embodiment, the DMRS port corresponding to the first information and/or the precoding matrix may be determined based on the CDM group corresponding to the DMRS port. For example, in case that the indicated L1 DMRS ports are antenna ports in one CDM group, and the other L2 DMRS ports are antenna ports in another CDM group, the L1 DMRS ports in the same CDM group correspond to a precoding matrix with a number of layers L1 and its corresponding first information, the L2 DMRS ports in another CDM group correspond to a precoding matrix with a number of layers L2 and its corresponding first information.

In an embodiment, the association relationship between the DMRS port and the TCI state/SRS resource set/panel/codeword/TRP/beam/CORESETPoolIndex may be determined based on the CDM group corresponding to the DMRS port. For example, in case that the L1 DMRS ports indicated by the information field used to indicate the DMRS port are antenna ports in one CDM group, and the other L2 DMRS ports are antenna ports in another CDM group, L1 DMRS ports in the same CDM group correspond to the TCI state/SRS resource set/panel/codeword/TRP/beam/CORESETPoolIndex corresponding to the precoding information and/or number of layers indicator field with the number of layers L1, and L2 DMRS ports in another CDM group correspond to the TCI state/SRS resource set/panel/codeword/TRP/beam/ CORESETPoolIndex corresponding to the precoding information and/or number of layers indicator field with the number of layers L2.

In an embodiment, the CDM group has a predefined association relationship with the precoding matrix/precoding and/or number of layers field/SRI field/TCI state/SRS resource set/panel/codeword/TRP/beam/CORESETPoolIndex, or the network side indicates the association relationship. For example, DMRS ports corresponding to a CDM group with a relatively small serial number correspond to a first precoding matrix/precoding and/or number of layers field/SRI field/TCI state/SRS resource set/panel/codeword/TRP/beam/CORESETPoolIndex, and a CDM group with a relatively large serial number corresponds to a second precoding matrix/precoding and/or number of layers field/SRI field/TCI state/SRS resource set/panel/codeword/TRP/beam/CORESETPoolIndex; or a CDM group with a relatively large serial number corresponds to a first precoding matrix/precoding and/or number of layers field/SRI field/TCI state/SRS resource set/panel/codeword/TRP/beam/CORESETPoolIndex, and a CDM group with a relatively small serial number corresponds to a second precoding matrix/precoding and/or number of layers field/SRI field/TCI state/SRS resource set/panel/codeword/TRP/beam/CORESETPoolIndex.

In an embodiment, determining the first number of layers corresponding to the DMRS port based on the first indication information includes:

based on the first indication information, determining N precoding information and/or number of layers fields corresponding to the PUSCH, or determining N sounding reference signal (SRS) resource indicator (SRI) fields corresponding to the PUSCH, where N is an integer greater than or equal to 1; and

determining the first number of layers based on the N precoding information and/or number of layers fields corresponding to the PUSCH, or the N SRI fields corresponding to the PUSCH.

In an embodiment, based on the first indication information, the terminal may determine the N precoding information and/or number of layers fields corresponding to the PUSCH, or determine the N SRI fields corresponding to the PUSCH; and then determine the first number of layers based on the N precoding information and/or number of layers fields corresponding to the PUSCH or the N SRI fields corresponding to the PUSCH.

In case that the PUSCH is a codebook-based PUSCH, the first number of layers may be determined based on a precoding matrix and/or number or layers field; and in case that the PUSCH is a non-codebook-based PUSCH, the first number of layers may be determined based on an SRI field.

In an embodiment, determining the first number of layers based on the N precoding information and/or number of layers fields corresponding to the PUSCH, or the N SRI fields corresponding to the PUSCH may include any one of the following.

(1) The first number of layers is determined based on a sum of N numbers of layers respectively indicated by the N precoding information and/or number of layers fields corresponding to the PUSCH.

For example, in case that N=2, and numbers of layers indicated by two precoding matrices and/or number of layers field are L1 and L2 respectively, the first number of layers may be L1+L2.

(2) The first number of layers is determined based on a sum of numbers of SRS resources of N SRS resource groups respectively indicated by the N SRI fields corresponding to the PUSCH.

For example, in case that N=2, and numbers of SRS resources of two SRS resource sets indicated by two SRI fields are L1 and L2 respectively, the first number of layers may be L1+L2.

(3) The first number of layers is determined based on a sum of multiple numbers of layers indicated by a first precoding information and/or number of layers field among the N precoding information and/or number of layers fields corresponding to the PUSCH.

For example, in case that two numbers of layers indicated by the first precoding information and/or number of layers field are L1 and L2 respectively, the first number of layers may be L1+L2.

The first precoding information and/or number of layers field may be any one or a specified one of the N precoding information and/or number of layers fields, which is not limited here. In a possible embodiment, the numbers of layers indicated by the N pieces of precoding information and/or the number of layers field are all the same.

(4) The first number of layers is determined based on a sum of numbers of SRS resources of multiple SRS resource groups indicated by a first SRI field among the N SRI fields corresponding to the PUSCH.

For example, in case that numbers of SRS resources of two SRS resource sets indicated by the first SRI field are L1 and L2 respectively, the first number of layers may be L1+L2.

The first SRI field may be any one or a specified one of the N SRI fields, which is not limited here. In a possible embodiment, the numbers of SRS resources of SRS resources indicated by the N SRI fields are all the same.

(5) The first number of layers is determined based on N times a number of layers indicated by a first precoding information and/or number of layers field among the N precoding information and/or number of layers fields corresponding to the PUSCH.

For example, in case that there are N=3 pieces of precoding information and/or number of layers field, and the number of layers indicated by the first precoding information and/or number of layers field is L, the first number of layers may be 3L.

The first precoding information and/or number of layers field may be any one or a specified one of the N precoding information and/or number of layers fields, which is not limited here. In a possible embodiment, the numbers of layers indicated by the N pieces of precoding information and/or the number of layers field are all the same.

(6) The first number of layers is determined based on N times a number of SRS resources indicated by a first SRI field among the N SRI fields corresponding to the PUSCH.

For example, in case that there are N=3 SRI fields, and the number of SRS resources indicated by the first SRI field is L, the first number of layers may be 3L.

The first SRI field may be any one or a specified one of the N SRI fields, which is not limited here. In a possible embodiment, the numbers of SRS resources indicated by the N SRI fields are all the same.

(7) The first number of layers is determined based on a number of layers indicated by the N precoding information and/or number of layers fields corresponding to the PUSCH.

For example, in case that a number of layers indicated by the N precoding information and/or number of layers fields is L, the first number of layers may be L.

(8) The first number of layers is determined based on a number of SRS resources indicated by the N SRI fields corresponding to the PUSCH, or based on an SRS resource number indicated by the N SRI fields corresponding to the PUSCH.

For example, the number of SRS resources indicated by N SRI fields is L, or the SRS resource number indicated by N SRI fields corresponding to the PUSCH is L, the first number of layers may be L.

(9) The first number of layers is determined based on a number of layers indicated by a first precoding information and/or number of layers field among the N precoding information and/or number of layers fields corresponding to the PUSCH.

For example, in case that the number of layers indicated by the first precoding information and/or number of layers field is L, the first number of layers may be L.

The first precoding information and/or number of layers field may be any one or a specified one of the N precoding information and/or number of layers fields, which is not limited here. In a possible embodiment, the numbers of layers indicated by the N pieces of precoding information and/or the number of layers field are all the same.

(10) The first number of layers is determined based on a number of SRS resources indicated by a first SRI field among the N SRI fields corresponding to the PUSCH, or based on an SRS resource number indicated by a first SRI field among the N SRI fields corresponding to the PUSCH.

For example, in case that the number of SRS resources indicated by the first SRI field is L, or the SRS resource number indicated by the first SRI field among the N SRI fields is L, the first number of layers may be L.

The first SRI field may be any one or a specified one of the N SRI fields, which is not limited here. In a possible embodiment, the numbers of SRS resources indicated by the N SRI fields are all the same; and in a possible embodiment, the SRS resource numbers indicated by the N SRI fields are all the same.

In an embodiment, determining the first number of layers based on the first indication information includes:

in case that the first indication information indicates N pieces of QCL relationship information and/or power control parameter, determining that the PUSCH corresponds to N pieces of precoding information and/or M numbers of layers, or determining that the PUSCH corresponds to N SRI groups, where N is an integer greater than or equal to 1, and M is an integer greater than or equal to 1; and

determining the first number of layers based on the N pieces of precoding information and/or the M numbers of layers, or a number of layers or an SRS resource number corresponding to the N SRI groups.

In an embodiment, the QCL relationship information may be a TCI state.

In an embodiment, the N pieces of precoding information and/or number of layers are indicated by one piece of precoding information and/or number of layers field.

In an embodiment, the N pieces of precoding information and/or number of layers are indicated by the N precoding information and/or number of layers fields.

In an embodiment, the N SRI groups are indicated by one SRI field.

In an embodiment, the N SRI groups are indicated by N SRI fields.

In an embodiment, determining the first number of layers based on the N precoding information and/or number of layers fields corresponding to the PUSCH, or the N SRI fields corresponding to the PUSCH includes:

determining that one piece of precoding information and/or number of layers field corresponding to the PUSCH indicates N precoding matrices and/or M numbers of layers, or determining that one SRI field corresponding to the PUSCH indicates N SRS resource groups; and

determining the first number of layers based on the N precoding matrices and/or the M numbers of layers, or the N SRS resource groups, where M is an integer greater than or equal to 1.

In an embodiment, the terminal may determine one piece of precoding information and/or number of layers field (which indicates N precoding matrices and/or M numbers of layers) or one SRI field (which indicates N SRS resource groups) corresponding to the PUSCH based on the first indication information, and then determine the first number of layers based on N precoding matrices and/or M numbers of layers indicated by the one piece of precoding information and/or number of layers field or N SRS resource groups indicated by the one SRI field.

In case that the PUSCH is a codebook-based PUSCH, the first number of layers may be determined based on a precoding matrix and/or number or layers field; and in case that the PUSCH is a non-codebook-based PUSCH, the first number of layers may be determined based on an SRI field.

In an embodiment, determining the first number of layers based on the N precoding matrices and/or the M numbers of layers, or the N SRS resource groups, includes any one of the following.

(1) The first number of layers is determined based on a sum of the M numbers of layers indicated by the one piece of precoding information and/or number of layers field corresponding to the PUSCH.

For example, in case that M=2 layers indicated by one precoding matrix and/or layer field are L1 and L2 respectively, the first number of layers may be L1+L2.

(2) The first number of layers is determined based on a sum of numbers of SRS resources of the N SRS resource groups indicated by the one SRI field corresponding to the PUSCH.

For example, in case that the numbers of SRS resource of N=2 SRS resource groups indicated by one SRI field are L1 and L2 respectively, the first number of layers may be L1+L2.

(3) The first number of layers is determined based on N times a number of layers indicated by the one piece of precoding information and/or number of layers field corresponding to the PUSCH.

For example, in case that the number of layers indicated by one precoding matrix and/or number or layers field is L, the first number of layers may be $N \times L$.

(4) The first number of layers is determined based on N times a number of SRS resources indicated by the one SRI field corresponding to the PUSCH.

For example, in case that the number of SRS resources indicated by one SRI field is L, the first number of layers may be $N \times L$.

(5) The first number of layers is determined based on a number of layers indicated by the one piece of precoding information and/or number of layers field corresponding to the PUSCH.

For example, in case that one number of layers indicated by one precoding matrix and/or number of layers field is L, the first number of layers may be L.

(6) The first number of layers is determined based on a number of SRS resources indicated by one SRI field corresponding to the PUSCH, or based on an SRS resource number indicated by one SRI field corresponding to the PUSCH.

For example, in case that the number of SRS resources or the SRS resource number indicated by one SRI field is L, the first number of layers may be L.

In an embodiment, based on the first indication information, determining the N precoding information and/or number of layers fields corresponding to the PUSCH, or determining the N SRI fields corresponding to the PUSCH includes:

determining that the PUSCH corresponds to N pieces of first information based on the first indication information, where each of the N pieces of first information includes one or more of a transmission configuration indicator (TCI) state, spatial relation information, a power control parameter, a transmission and/or reception point, an antenna panel, a sounding reference signal (SRS) resource, a sounding reference signal (SRS) resource group, a precoding matrix, a layer group, a sounding reference signal (SRS) resource set, a codeword, or a control resource set resource pool; and

determining the N precoding information and/or number of layers fields corresponding to the PUSCH based on precoding information and/or number of layers field corresponding to each of the N pieces of first information; or determining the N SRI fields corresponding to the PUSCH based on SRI fields corresponding to each of the N pieces of first information.

In an embodiment, after receiving the first indication information, the terminal may first determine that the PUSCH corresponds to the N pieces of first information based on the first indication information. Therefore, the terminal may determine the N precoding information and/or number of layers fields corresponding to the PUSCH based on the precoding information and/or number of layers field corresponding to each first information; or the terminal may determine the N SRI fields corresponding to the PUSCH based on the SRI fields corresponding to each first information.

Each first information may include one or more of a TCI state, spatial relation information, a power control parameter, a transmission and reception point, an antenna panel, an SRS resource, an SRS resource groups, a precoding matrix, a layer group, an SRS resource set, a codeword, or a control resource set resource pool.

There is a correspondence relationship between the first information and the precoding information and/or number of layers field or the SRI field. The correspondence relationship may be predefined or may be indicated by the network side.

In an embodiment, determining that the PUSCH corresponds to the N pieces of first information based on the first indication information may include one or more of the following.

(1) In case that the first indication information indicates N pieces of precoding information and/or N numbers of layers, it is determined that the PUSCH corresponds to N pieces of first information.

For example, in case that the first indication information indicates N=2 pieces of precoding information and/or N=2 numbers of layers, it may be determined that the PUSCH corresponds to two pieces of first information.

(2) In case that the first indication information indicates N pieces of enabled precoding information and/or number of layers field, it is determined that PUSCH corresponds to N pieces of first information.

For example, in case that the first indication information indicates N=2 pieces of enabled precoding information and/or number of layers field, it may be determined that the PUSCH corresponds to N=2 pieces of first information.

The precoding information and/or number of layers field and the SRI field may have a certain field that is not in use. In this case, only other fields that are in use, that is, enabled fields, are considered.

(3) In case that the first indication information indicates N SRS resource groups, it is determined that the PUSCH corresponds to the N pieces of first information.

For example, in case that the first indication information indicates N=2 SRS resource groups, it may be determined that the PUSCH corresponds to N=2 pieces of first information.

(4) In case that the first indication information indicates N enabled SRI fields, it is determined that the PUSCH corresponds to N pieces of first information.

For example, in case that the first indication information indicates N=2 enabled SRI fields, it may be determined that the PUSCH corresponds to N=2 pieces of first information.

The SRI fields may have a certain field that is not in use. In this case, only other fields that are in use, that is, enabled fields, are considered.

(5) In case that the first indication information indicates N SRS resource sets, it is determined that the PUSCH corresponds to N pieces of first information.

For example, in case that the first indication information indicates N=2 SRS resource sets, it may be determined that the PUSCH corresponds to N=2 pieces of first information.

(6) In case that the first indication information indicates N pieces of spatial relation information or beam, it is determined that the PUSCH corresponds to the N pieces of first information.

For example, in case that the first indication information indicates N=2 pieces of spatial relation information or beam, it may be determined that the PUSCH corresponds to N=2 pieces of first information.

(7) In case that the first indication information indicates N transmission and/or reception points, it is determined that the PUSCH corresponds to N pieces of first information.

For example, in case that the first indication information indicates N=2 transmission and/or reception points, it may be determined that the PUSCH corresponds to N=2 pieces of first information.

(8) In case that the first indication information indicates N antenna panels, it is determined that the PUSCH corresponds to N pieces of first information.

For example, in case that the first indication information indicates N=2 antenna panels, it may be determined that the PUSCH corresponds to N=2 pieces of first information.

(9) In case that the first indication information indicates N open loop power control parameters, it is determined that the PUSCH corresponds to N pieces of first information.

For example, in case that the first indication information indicates N=2 open loop power control parameters, it may be determined that the PUSCH corresponds to N=2 pieces of first information.

(10) In case that the first indication information indicates N codewords, it is determined that the PUSCH corresponds to N pieces of first information.

For example, in case that the first indication information indicates N=2 codewords, it may be determined that the PUSCH corresponds to N=2 pieces of first information.

(11) In case that the first indication information indicates N control resource set resource pool indexes, it is determined that the PUSCH corresponds to N pieces of first information.

For example, in case that the first indication information indicates N control resource set resource pool indexes, it may be determined that the PUSCH corresponds to N pieces of first information.

FIG. 2 is a second schematic flowchart of a method for determining DMRS port according to an embodiment of the present application. As shown in FIG. 2, the method is performed by a network device (such as a base station) and includes the following steps.

Step 200: determining a first number of layers corresponding to a DMRS port corresponding to a physical uplink shared channel (PUSCH), where the DMRS port corresponds to one or more pieces of spatial relation information, and DMRS ports corresponding to different spatial relation information among multiple pieces of spatial relation information are different.

Step 201: transmitting first indication information to a terminal, where the first number of layers has a first relationship with the first indication information, and the first indication information is used to indicate quasi-co-location (QCL) relationship information and/or power control parameter corresponding to the PUSCH.

In an embodiment, after determining the first number of layers, the network device may determine the first indication information for indicating the QCL relationship information and/or power control parameter corresponding to the PUSCH based on the first number of layers, and transmit it to the terminal. Therefore, after receiving the first indication information, the terminal may determine the DMRS port corresponding to the PUSCH based on content indicated by the first indication information.

In an embodiment, the first number of layers and content indicated by the first indication information may have a first relationship.

In an embodiment, the terminal may determine the first number of layers based on the content indicated by the first indication information.

In an embodiment, the network device may determine the content indicated by the first indication information based on the first number of layers.

In an embodiment, the first indication information may be used by the terminal to determine the first number of layers.

In an embodiment, the first relationship may be that a number of layers corresponding to the first indication information has an operational relationship with the first number of layers. For example, multiples and sums are both operational relationships.

In an embodiment, the first relationship is that the number of layers corresponding to the first indication information is the first number of layers.

In an embodiment, the first indication information may be transmitted in PUSCH scheduling information, or may be transmitted independently of the PUSCH scheduling information. For example, the first indication information may be semi-statically indicated through MAC-CE signaling.

In case that the first indication information is transmitted in the PUSCH scheduling information, the scheduling method may be DCI-based scheduling, RRC signaling-based scheduling, or MAC-CE signaling-based scheduling. Correspondingly, the PUSCH scheduling information may be scheduling information indicated by DCI, information configured by RRC signaling, information indicated by MAC-CE signaling, and so on.

In an embodiment, the QCL relationship information corresponding to the PUSCH may include QCL relationship information between the DMRS port corresponding to the PUSCH and one or more other reference signals.

In an embodiment, determining, by the terminal, the DMRS port corresponding to the PUSCH based on the first indication information may include: determining the DMRS port corresponding to the PUSCH based on content indicated by the first indication information.

In an embodiment, determining, by the terminal, the DMRS port corresponding to the PUSCH based on the content indicated by the first indication information may include: determining the DMRS port corresponding to the PUSCH based on QCL relationship information or a number of power control parameters indicated by the first indication information.

In an embodiment, determining, by the terminal, the DMRS port corresponding to the PUSCH based on the content indicated by the first indication information may include: determining a number of layers corresponding to the DMRS port corresponding to the PUSCH based on the content indicated by the first indication information; determining a table corresponding to DMRS port indication information based on the number of layers; and determining the DMRS port corresponding to the PUSCH based on the table and the DMRS port indication information. The DMRS port indication information is used to indicate the DMRS port corresponding to the PUSCH.

In an embodiment, determining, by the terminal, the DMRS port corresponding to the PUSCH based on the content indicated by the first indication information may include: determining an information field of a first number of layers corresponding to the DMRS port corresponding to the PUSCH based on QCL relationship information or a number of power control parameters indicated by the first indication information; determining the first number of layers based on the information field; determining a table corresponding to DMRS port indication information based on the first number of layers; and determining the DMRS port corresponding to the PUSCH based on the table and the DMRS port indication information. The DMRS port indication information is used to indicate the DMRS port corresponding to the PUSCH.

In an embodiment, the DMRS port indication information is transmitted from the network device to the terminal.

In an embodiment, the number of DMRS ports corresponding to the PUSCH may be equal to the first number of layers.

In the method for determining DMRS port provided by the embodiments of the present application, the network device may transmit the first indication information for indicating the QCL relationship information and/or the power control parameters corresponding to the PUSCH to the terminal, and the terminal may determine different DMRS ports corresponding to different spatial relation information based on the first indication information. Therefore, the terminal may transmit a DMRS on different DMRS ports simultaneously, which increases throughput of an uplink transmission and improves a transmission rate of the PUSCH.

In an embodiment, the first indication information includes indication information indicating one or more of the following:

spatial relation information or beam corresponding to the PUSCH;

a transmission configuration indicator (TCI) state corresponding to the PUSCH;

a transmission and/or reception point corresponding to the PUSCH;

an antenna panel corresponding to the PUSCH;

precoding information and/or number of layers corresponding to the PUSCH;

a sounding reference signal (SRS) resource corresponding to the PUSCH;

a sounding reference signal (SRS) resource set corresponding to the PUSCH;

an open loop power control parameter corresponding to the PUSCH;

a codeword and/or a number of codewords corresponding to the PUSCH; or

a control resource set resource pool index corresponding to the PUSCH.

In an embodiment, the open loop power control parameter may include one or more of a target transmit power p0, a path loss reference signal parameter, or a path loss compensation parameter.

In an embodiment, the QCL relationship information corresponding to the PUSCH may be indicated by one or more of the following:

indication information for spatial relation information or beam;

indication information for a TCI state;

indication information for a transmission and/or reception point;

indication information for an antenna panel;

indication information for precoding information and/or number of layers;

indication information for an SRS resource;

indication information for an SRS resource set;

indication information for an open loop power control parameter;

indication information for a codeword and/or a number of codewords;

indication information for a control resource set resource pool index.

In an embodiment, the first indication information may be an information field or a parameter used for indication, and its specific form is not limited. It may be indication information that directly indicates the QCL relationship information and/or power control parameter corresponding to the PUSCH, or it may be one or more pieces of the above indication information, or it may implicitly indicate the QCL relationship information and/or power control parameter corresponding to the PUSCH through one or more pieces of the above indication information.

For example, in case that the first indication information is used to indicate the TCI state corresponding to the PUSCH, the first indication information may be a TCI state indicator field; in case that the first indication information is used to indicate the SRS resource corresponding to the PUSCH, the first information field may be an SRI field; and in case that the first indication information is used to indicate the SRS resource set corresponding to the PUSCH, the first indication information may be an SRS resource set field.

In an embodiment, N precoding information and/or number of layers fields corresponding to the PUSCH indicated by the first indication information, or N SRS resource indicator (SRI) fields corresponding to the PUSCH indicated by the first indication information correspond to the first number of layers, where N is an integer greater than or equal to 1.

In an embodiment, after determining the first number of layers, the network device may determine how to indicate the first indication information based on the first number of layers. In an embodiment, the N precoding information and/or number of layers fields or the N SRI fields corresponding to the PUSCH indicated by the first indication information correspond to the first number of layers. Therefore, the terminal may determine the N precoding information and/or number of layers fields or N SRI fields corresponding to the PUSCH based on the first indication information, and then determine the first number of layers based on the N precoding information and/or number of layers fields or the N SRI fields.

In case that the PUSCH is a codebook-based PUSCH, the first number of layers may correspond to a precoding matrix and/or number or layers field; and in case that the PUSCH is a non-codebook-based PUSCH, the first number of layers may correspond to an SRI field.

In an embodiment, the N precoding information and/or number of layers fields corresponding to the PUSCH, or the N SRI fields corresponding to the PUSCH correspond to the first number of layers includes any one of the following.

(1) A sum of N numbers of layers respectively indicated by the N precoding information and/or number of layers fields corresponding to the PUSCH is equal to the first number of layers.
For example, the first number of layers is L1+L2, and number of layers indicated by N=2 precoding matrices and/or number of layers field may be L1 and L2 respectively.

(2) A sum of numbers of SRS resources of multiple SRS resource groups respectively indicated by the N SRI fields corresponding to the PUSCH is equal to the first number of layers.
For example, the first number of layers is L1+L2, and numbers of SRS resources of N=2 SRS resource groups may be L1 and L2 respectively.

(3) A sum of multiple numbers of layers indicated by a first precoding information and/or number of layers field among the N precoding information and/or number of layers fields corresponding to the PUSCH is equal to the first number of layers.

For example, the first number of layers is L1+L2, and the two numbers of layers indicated by the first precoding information and/or number of layers field may be L1 and L2 respectively.

The first precoding information and/or number of layers field may be any one or a specified one of the N precoding information and/or number of layers fields, which is not limited here. In a possible embodiment, the numbers of layers indicated by the N pieces of precoding information and/or the number of layers field are all the same.

(4) A sum of numbers of SRS resources of multiple SRS resource groups indicated by a first SRI field among the N SRI fields corresponding to the PUSCH is equal to the first number of layers.

For example, the first number of layers is L1+L2, and the N=2 numbers of layers indicated by the first SRI field may be L1 and L2 respectively.

The first SRI field may be any one or a specified one of the N SRI fields, which is not limited here. In a possible embodiment, the numbers of SRS resources of SRS resources indicated by the N SRI fields are all the same.

(5) N times a number of layers indicated by a first precoding information and/or number of layers field among the N precoding information and/or number of layers fields corresponding to the PUSCH is equal to the first number of layers.

For example, in case that the first number of layers is 3L, and there are N=3 pieces of precoding information and/or number of layers field, the number of layers indicated by the first precoding information and/or number of layers field may be L.

The first precoding information and/or number of layers field may be any one or a specified one of the N precoding information and/or number of layers fields, which is not limited here. In a possible embodiment, the numbers of layers indicated by the N pieces of precoding information and/or the number of layers field are all the same.

(6) N times a number of SRS resources indicated by a first SRI field among the N SRI fields corresponding to the PUSCH is equal to the first number of layers.

For example, in case that the first number of layers is 3L, and there are N=3 SRI fields, the number of SRS resources indicated by the first SRI field may be L.

The first SRI field may be any one or a specified one of the N SRI fields, which is not limited here. In a possible embodiment, the numbers of SRS resources of SRS resources indicated by the N SRI fields are all the same.

(7) A number of layers indicated by the N precoding information and/or number of layers fields corresponding to the PUSCH is equal to the first number of layers.

For example, in case that the first number of layers is L, the number of layers indicated by the N precoding information and/or number of layers fields may be L.

(8) A number of SRS resources indicated by the N SRI fields corresponding to the PUSCH, or an SRS resource number indicated by the N SRI fields corresponding to the PUSCH is equal to the first number of layers.

For example, in case that the first number of layers is L, the number of SRS resources indicated by N SRI fields may be L, or the SRS resource number indicated by N SRI fields corresponding to the PUSCH may be L.

(9) A number of layers indicated by a first precoding information and/or number of layers field among the N precoding information and/or number of layers fields corresponding to the PUSCH is equal to the first number of layers.

For example, in case that the first number of layers is L, the number of layers indicated by the first precoding information and/or number of layers field may be L.

The first precoding information and/or number of layers field may be any one or a specified one of the N precoding information and/or number of layers fields, which is not limited here. In a possible embodiment, the numbers of layers indicated by the N pieces of precoding information and/or the number of layers field are all the same.

(10) A number of SRS resources indicated by a first SRI field among the N SRI fields corresponding to the PUSCH, or an SRS resource number indicated by a first SRI field among the N SRI fields is equal to the first number of layers.

For example, in case that the first number of layers is L, the number of SRS resources indicated by the first SRI field may be L, or the SRS resource number indicated by the first SRI field among the N SRI fields may be L.

The first SRI field may be any one or a specified one of the N SRI fields, which is not limited here. In a possible embodiment, the SRS resources numbers indicated by the N SRI fields are all the same.

In an embodiment, in case that the first indication information indicates N pieces of QCL relationship information and/or power control parameter, N pieces of precoding information and/or M numbers of layers corresponding to the PUSCH indicated by the first indication information correspond to the first number of layers; or a number of layers or an SRS resource number corresponding to N SRI groups corresponding to the PUSCH indicated by the first indication information corresponds to the first number of layers, where N is an integer greater than or equal to 1, and M is an integer greater than or equal to 1.

In an embodiment, the QCL relationship information may be a TCI state.

In an embodiment, the N pieces of precoding information and/or number of layers are indicated by one piece of precoding information and/or number of layers field.

In an embodiment, the N pieces of precoding information and/or number of layers are indicated by the N pieces of precoding information and/or number of layers.

In an embodiment, the N SRI groups are indicated by one SRI field.

In an embodiment, the N SRI groups are indicated by N SRI fields.

In an embodiment, in case that the first indication information indicates N pieces of QCL relationship information and/or power control parameter, N pieces of precoding information and/or M numbers of layers corresponding to the PUSCH indicated by the first indication information correspond to the first number of layers; or a number of layers or an SRS resource number corresponding to N SRI groups corresponding to the PUSCH indicated by the first indication information corresponds to the first number of layers, where N is an integer greater than or equal to 1, and M is an integer greater than or equal to 1.

In an embodiment, N precoding matrices and/or M numbers of layers indicated by one piece of precoding information and/or number of layers field corresponding to the PUSCH indicated by the first indication information correspond to the first number of layers, where M is an integer greater than or equal to 1; or

N SRS resource groups indicated by one SRI field corresponding to the PUSCH indicated by the first indication information correspond to the first number of layers.

In an embodiment, after determining the first number of layers, the network device may determine how to indicate the first indication information based on the first number of layers. In an embodiment, one piece of precoding information and/or number of layers field (which indicates N precoding matrices and/or M numbers of layers) or one SRI field (which indicates N SRS resource groups) corresponding to the PUSCH indicated by the first indication information corresponds to the first number of layers. Therefore, the terminal may determine, based on the first indication information, N precoding matrices and/or M numbers of layers indicated by one piece of precoding information and/or number of layers field corresponding to the PUSCH or N SRS resource groups indicated by one SRI field corresponding to the PUSCH, and then determine the first number of layers based on the one piece of precoding information and/or number of layers field or the one SRI field.

In case that the PUSCH is a codebook-based PUSCH, the first number of layers may be indicated by a precoding matrix and/or number or layers field; and in case that the PUSCH is a non-codebook-based PUSCH, the first number of layers may be indicated by an SRI field.

In an embodiment, N precoding matrices and/or M layers, or N SRS resource groups, corresponding to the first layer, include any one of the following.

(1) A sum of the M numbers of layers indicated by the one piece of precoding information and/or number of layers field corresponding to the PUSCH is equal to the first number of layers.

For example, in case that the first number of layers is L1+L2, M=2 numbers of layers indicated by one precoding matrix and/or number of layers field may be L1 and L2 respectively.

(2) A sum of numbers of SRS resources of the N SRS resource groups indicated by the one SRI field corresponding to the PUSCH is equal to the first number of layers.

For example, in case that the first number of layers is L1+L2, the number of SRS resources of N=2 SRS resource groups indicated by one SRI field may be L1 and L2 respectively.

(3) N times a number of layers indicated by the one piece of precoding information and/or number of layers field corresponding to the PUSCH is equal to the first number of layers.

For example, in case that the first number of layers is N×L, a number of layers indicated by one precoding matrix and/or number of layers field may be L.

(4) N times a number of SRS resources indicated by the one SRI field corresponding to the PUSCH is equal to the first number of layers.

For example, in case that the first number of layers is N×L, a number of SRS resources indicated by one SRI field may be L.

(5) A number of layers indicated by the one piece of precoding information and/or number of layers field corresponding to the PUSCH is equal to the first number of layers.

For example, in case that the first number of layers is L, a number of layers indicated by one precoding matrix and/or number of layers field may be L.

(6) A number of SRS resources indicated by the one SRI field corresponding to the PUSCH, or an SRS resource number indicated by one SRI field corresponding to the PUSCH is equal to the first number of layers.

For example, in case that the first number of layers is L, a number of SRS resources indicated by one SRI field may be L, or an SRS resource number indicated by one SRI field corresponding to the PUSCH may be L.

In an embodiment, the N precoding information and/or number of layers fields are precoding information and/or number of layers field corresponding to the N pieces of first information indicated by the first indication information; or the N SRI fields are SRI fields corresponding to the N pieces of first information indicated by the first indication information, where each of the N pieces of first information includes one or more of a TCI state, spatial relation information, a power control parameter, a transmission and/or reception point, an antenna panel, an SRS resource, an SRS resource group, a precoding matrix, a layer group, an SRS resource set, a codeword, or a control resource set resource pool.

In an embodiment, the first indication information may indicate N first information corresponding to the PUSCH, where each first information may include one or more of a TCI state, spatial relation information, a power control parameter, a transmission and reception point, an antenna panel, an SRS resource, an SRS resource groups, a precoding matrix, a layer group, an SRS resource set, a codeword, or a control resource set resource pool.

There is a correspondence relationship between the first information and the precoding information and/or number of layers field or the SRI field. The correspondence relationship may be predefined or may be indicated by the network side.

In an embodiment, the first indication information indicates N pieces of first information includes one or more of the following.

(1) The first indication information indicates N pieces of precoding information and/or N numbers of layers.

For example, the first indication information indicates N=2 pieces of precoding information and/or N=2 numbers of layers.

(2) The first indication information indicates N pieces of enabled precoding information and/or number of layers field.

For example, the first indication information indicates N=2 pieces of enabled precoding information and/or number of layers field.

The precoding information and/or number of layers field may have a certain field that is not in use. In this case, only other fields that are in use, that is, enabled fields, are considered.

(3) The first indication information indicates N SRS resource groups.

For example, the first indication information indicates N=2 enabled SRI fields.

The SRI fields may have a certain field that is not in use. In this case, only other fields that are in use, that is, enabled fields, are considered.

(4) The first indication information indicates N enabled SRI fields.

For example, the first indication information indicates N=2 enabled SRS resource sets.

(5) The first indication information indicates N SRS resource sets.

For example, the first indication information indicates N=2 SRS resource sets.

(6) The first indication information indicates N pieces of spatial relation information or beam.

For example, the first indication information indicates N=2 pieces of spatial relation information or beam.

(7) The first indication information indicates N transmission and/or reception points.

For example, the first indication information indicates N=2 transmission and/or reception points.

(8) The first indication information indicates N antenna panels.

For example, the first indication information indicates N=2 antenna panels.

(9) The first indication information indicates N open loop power control parameters.

For example, the first indication information indicates N=2 open loop power control parameters.

(10) The first indication information indicates N codewords.

For example, the first indication information indicates N=2 codewords.

(11) The first indication information indicates N control resource set resource pool indexes.

For example, the first indication information indicates N=2 control resource set resource pool indexes.

In an embodiment, the method further includes:

determining second indication information based on the first number of layers, where the second indication information is used to indicate the DMRS port corresponding to the PUSCH; and

transmitting the second indication information to the terminal.

In an embodiment, the network device may also determine second indication information based on the first number of layers, where the second indication information may be indication information for DMRS port indication from a DMRS port configuration corresponding to the first number of layers. Therefore, the terminal may jointly determine the DMRS port corresponding to the PUSCH under the first number of layers based on the first indication information and the second indication information.

The methods provided by each embodiment of the present application are based on the same conception. The implementations of the methods for the terminal side and network device side may be referred to each other, and repeated details are not repeated.

The methods provided by each of the above embodiments of the present application are illustrated below through examples of specific application scenarios.

Embodiment 1: taking first indication information including an SRS resource set field corresponding to a PUSCH as an example, it may be extended to a case where the first indication information is used to indicate QCL relationship information and/or power control parameter corresponding to other PUSCHs.

The network device transmits PUSCH scheduling information to a terminal.

The PUSCH scheduling information includes an SRS resource set field, which is used to indicate an SRS resource set corresponding to a PUSCH transmission and/or a TCI state corresponding to the PUSCH.

In an embodiment, the scheduling is DCI-based scheduling, and the scheduling information is scheduling information indicated by DCI.

In an embodiment, in case that the scheduling is RRC signaling-based scheduling, the scheduling information is information configured by RRC signaling.

In an embodiment, in case that the scheduling is MAC-CE signaling-based scheduling, the scheduling information is information indicated by MAC-CE signaling.

In this embodiment, DCI-based scheduling is taken as an example, and it may be extended to RRC signaling-based scheduling, MAC-CE signaling-based scheduling, etc.

In an embodiment, an SRS resource set and a TCI state corresponding to the PUSCH indicated by the SRS resource set field are determined based on the following table.

Table 2 SRS resource set and TCI state indicated by SRS resource set field

| Value | An SRS resource set and a TCI state corresponding to a PUSCH |
|---|---|
| 0 | The PUSCH corresponds to a first SRS resource set |
| 1 | The PUSCH corresponds to a second SRS resource set |
| 2 | The PUSCH corresponds to a first SRS resource set and a second SRS resource set |
| 3 | Reserved |

It is assumed that the first SRS resource set corresponds to a first precoding matrix and/or number of layers indicator field, and the second SRS resource set corresponds to a second precoding matrix and/or number of layers indicator field.

In case that a value of the SRS resource set field is 0, the PUSCH corresponds to the first SRS resource set, and a number of layers corresponding to a DMRS port of the PUSCH is a number of layers indicated by first precoding information and/or number of layers indicator field. That is, the DMRS port is determined based on the number of layers indicated by the first precoding information and/or number of layers indicator field.

In case that a value of the SRS resource set field is 1, the PUSCH corresponds to the second SRS resource set, and a number of layers corresponding to a DMRS port of the PUSCH is a number of layers indicated by second precoding information and/or number of layers indicator field. That is, the DMRS port is determined based on the number of layers indicated by the second precoding information and/or number of layers indicator field.

In case that a value of the SRS resource set field is 2, the PUSCH corresponds to the first SRS resource set and the second SRS resource set, and the number of layers corresponding to a DMRS port of the PUSCH is a sum of a number of layers indicated by the first precoding information and/or number of layers indicator field and a number of layers indicated by the second precoding information and/or number of layers indicator field. That is, the DMRS port is determined based on the sum of the number of layers indicated by the first precoding information and/or number of layers indicator field and the number of layers indicated by the second precoding information and/or number of layers indicator field.

In an embodiment, in case that a value of the SRS resource set field is 2, if a number of layers indicated by the first precoding information and/or number of layers indicator field and a number of layers indicated by the second precoding information and/or number of layers indicator field are L1 and L2 respectively, the number of layers corresponding to the DMRS port is L1+L2.

In an embodiment, first L1 ports indicated by an information field used to indicate the DMRS port corresponds to a precoding matrix indicated by the first precoding information and/or number of layers indicator field, and an (L1+1)-th port to an (L1+L2)-th port correspond to a precoding matrix indicated by the second precoding information and/or number of layers indicator field.

In an embodiment, the first L1 ports indicated by an information field used to indicate the DMRS port corresponds to a TCI state/panel/codeword/TRP/beam/control resource set resource pool index (CORESETPoolIndex) corresponding to the first precoding information and/or number of layers indicator field, and remaining DMRS ports correspond to a TCI state/panel/codeword/TRP/beam/CORESETPoolIndex corresponding to another piece of precoding information and/or layer indicator field.

In an embodiment, DMRS ports corresponding to different precoding matrices belong to different CDM groups. It is assumed that numbers of layers corresponding to the two precoding matrices and/or number of layers indicator field are L1 and L2 respectively, and the number of layers corresponding to the DMRS port is L1+L2. An information field used to indicate an antenna port indicates (L1+L2) DMRS ports, and a CDM group corresponding to L1 DMRS ports is different from a CDM group corresponding to other L2 DMRS ports. For example, the L1 DMRS ports correspond to one CDM group, and the other L2 DMRS ports correspond to another CDM group.

In an embodiment, the DMRS port corresponding to the precoding matrix is determined based on the CDM group corresponding to the DMRS port. For example, in case that the L1 DMRS ports indicated by the information field used to indicate the DMRS port are antenna ports in one CDM group, and the other L2 DMRS ports are antenna ports in another CDM group, L1 DMRS ports in the same CDM group correspond to a precoding matrix with the number of layers L1, and L2 DMRS ports in another CDM group correspond to a precoding matrix with the number of layers L2.

In an embodiment, the association relationship between the DMRS port and the TCI state/SRS resource set/panel/codeword/TRP/beam/CORESETPoolIndex is determined based on the CDM group corresponding to the DMRS port. For example, in case that the L1 DMRS ports indicated by the information field used to indicate the DMRS port are antenna ports in one CDM group, and the other L2 DMRS ports are antenna ports in another CDM group, L1 DMRS ports in the same CDM group correspond to the TCI state/SRS resource set/ panel/codeword/TRP/beam/CORESETPoolIndex corresponding to the precoding and/or number of layers indicator field with the number of layers L1, and L2 DMRS ports in another CDM group correspond to the TCI state/SRS resource set/panel/codeword/TRP/beam/CORESETPoolIndex corresponding to the precoding and/or number of layers indicator field with the number of layers L2.

In an embodiment, the CDM group has a predefined association relationship with the precoding matrix/precoding and/or number of layers field/SRI field/TCI state/SRS resource set/ panel/codeword/TRP/beam/CORESETPoolIndex; or, the association relationship is indicated by a network side. For example, DMRS ports corresponding to a CDM group with a relatively small serial number correspond to a first precoding matrix/precoding and/or number of layers field/SRI field/TCI state/SRS resource set/ panel/codeword/TRP/beam/CORESETPoolIndex, and a CDM group with a relatively large serial number corresponds to a second precoding matrix/precoding and/or number of layers field/SRI field/TCI state/SRS resource set/panel/codeword/TRP/beam/CORESETPoolIndex; or a CDM group with a relatively large serial number corresponds to a first precoding matrix/precoding and/or number of layers field/SRI field/TCI state/SRS resource set/ panel/codeword/TRP/beam/ CORESETPoolIndex, and a CDM group with a relatively small serial number corresponds to a second precoding matrix/precoding and/or number of layers field/SRI field/TCI state/SRS resource set/panel/codeword/TRP/beam/CORESETPoolIndex.

Embodiment 2: taking first indication information including a TCI state field corresponding to a PUSCH as an example, it may be extended to a case where the first indication information is used to indicate QCL relationship information and/or power control parameter corresponding to other PUSCHs.

The network device transmits PUSCH scheduling information to a terminal.

The scheduling information includes a TCI state indicator field, which is used to indicate a TCI state corresponding to a PUSCH transmission.

In an embodiment, the scheduling is DCI-based scheduling, and the scheduling information is scheduling information indicated by DCI.

In an embodiment, in case that the scheduling is RRC signaling-based scheduling, the scheduling information is information configured by RRC signaling.

In an embodiment, in case that the scheduling is MAC-CE signaling-based scheduling, the scheduling information is information indicated by MAC-CE signaling.

In the following, DCI-based scheduling is taken as an example, and it may be extended to RRC signaling-based scheduling, MAC-CE signaling-based scheduling, etc.

In an embodiment, a TCI state indicated by a TCI state indicator field is determined based on the following table.

Table 3 SRS resource set and TCI state indicated by TCI state indicator field

| Value | An SRS resource set and a TCI state corresponding to a PUSCH |
|---|---|
| 0 | The PUSCH corresponds to a first TCI state |
| 1 | The PUSCH corresponds to a second TCI state |
| 2 | The PUSCH corresponds to a first TCI state and a second TCI state |
| 3 | Reserved |

It is assumed that the first TCI state corresponds to a first precoding matrix and/or number of layers indicator field, and the second TCI state corresponds to a second precoding matrix and/or number of layers indicator field.

In case that a value of the TCI state indicator field is 0, the PUSCH corresponds to the first TCI state, and a number of layers corresponding to a DMRS port of the PUSCH is a number of layers indicated by first precoding information and/or number of layers indicator field. That is, the DMRS port is determined based on the number of layers indicated by the first precoding information and/or number of layers indicator field.

In case that a value of the TCI state field is 1, the PUSCH corresponds to the second TCI state, and a number of layers corresponding to a DMRS port of the PUSCH is a number of layers indicated by second precoding information and/or number of layers indicator field. That is, the DMRS port is determined based on the number of layers indicated by the second precoding information and/or number of layers indicator field.

In case that a value of the TCI state field is 2, the PUSCH corresponds to the first TCI state and the second TCI state, and the number of layers corresponding to a DMRS port of the PUSCH is a sum of a number of layers indicated by the first precoding information and/or number of layers indicator field and a number of layers indicated by the second precoding information and/or number of layers indicator field. That is, the DMRS port is determined based on the sum of the number of layers indicated by the first precoding information and/or number of layers indicator field and the number of layers indicated by the second precoding information and/or number of layers indicator field.

In an embodiment, in case that a value of the TCI state indicator field is 2, if a number of layers indicated by the first precoding information and/or number of layers indicator field and a number of layers indicated by the second precoding information and/or number of layers indicator field are L1 and L2 respectively, the number of layers corresponding to the DMRS port is L1+L2.

In an embodiment, first L1 ports indicated by an information field used to indicate the DMRS port corresponds to a precoding matrix indicated by the first precoding information and/or number of layers indicator field, and an (L1+1)-th port to an (L1+L2)-th port correspond to a precoding matrix indicated by the second precoding information and/or number of layers indicator field.

In an embodiment, the first L1 ports indicated by an information field used to indicate the DMRS port corresponds to a panel/codeword/TRP/beam/CORESETPoolIndex corresponding to the first TCI state, and remaining DMRS ports correspond to a panel/codeword/TRP/beam/CORESETPoolIndex corresponding to another TCI state.

In an embodiment, DMRS ports corresponding to different TCI states belong to different CDM groups. It is assumed that numbers of layers corresponding to the two pieces of precoding information and/or number of layers indicator field are L1 and L2 respectively, and the number of layers corresponding to the DMRS port is L1+L2. An information field used to indicate an antenna port indicates (L1+L2) DMRS ports, and a CDM group corresponding to L1 DMRS ports is different from a CDM group corresponding to other L2 DMRS ports. For example, the L1 DMRS ports correspond to one CDM group, and the other L2 DMRS ports correspond to another CDM group.

In an embodiment, the DMRS port corresponding to the TCI state and/or a precoding matrix is determined based on the CDM group corresponding to the DMRS port. For example, in case that the L1 DMRS ports indicated by the information field used to indicate the DMRS port are antenna ports in one CDM group, and the other L2 DMRS ports are antenna ports in another CDM group, L1 DMRS ports in the same CDM group correspond to a precoding matrix with the number of layers L1 and its corresponding TCI state, and L2 DMRS ports in another CDM group correspond to a precoding matrix with the number of layers L2 and its corresponding TCI state.

In an embodiment, the association relationship between the DMRS port and the TCI state/SRS resource set/panel/codeword/TRP/beam/CORESETPoolIndex is determined based on the CDM group corresponding to the DMRS port. For example, in case that the L1 DMRS ports indicated by the information field used to indicate the DMRS port are antenna ports in one CDM group, and the other L2 DMRS ports are antenna ports in another CDM group, L1 DMRS ports in the same CDM group correspond to the TCI state/SRS resource set/ panel/codeword/TRP/beam/CORESETPoolIndex corresponding to the precoding and/or number of layers indicator field with the number of layers L1, and L2 DMRS ports in another CDM group correspond to the TCI state/SRS resource set/ panel/codeword/TRP/beam/CORESETPoolIndex corresponding to the precoding and/or number of layers indicator field with the number of layers L2.

In an embodiment, the CDM group has a predefined association relationship with the precoding matrix/precoding and/or number of layers field/SRI field/TCI state/SRS resource set/ panel/codeword/TRP/beam/CORESETPoolIndex; or, the association relationship is indicated by a network side. For example, DMRS ports corresponding to a CDM group with a relatively small serial number correspond to a first precoding matrix/precoding and/or number of layers field/SRI field/TCI state/SRS resource set/ panel/codeword/TRP/beam/CORESETPoolIndex, and a CDM group with a relatively large serial number corresponds to a second precoding matrix/precoding and/or number of layers field/SRI field/TCI state/SRS resource set/panel/codeword/TRP/beam/CORESETPoolIndex; or a CDM group with a relatively large serial number corresponds to a first precoding matrix/precoding and/or number of layers field/SRI field/TCI state/SRS resource set/ panel/codeword/TRP/beam/ CORESETPoolIndex, and a CDM group with a relatively small serial number corresponds to a second precoding matrix/precoding and/or number of layers field/SRI field/TCI state/SRS resource set/panel/codeword/TRP/beam/CORESETPoolIndex.

Embodiment 3: taking first indication information including an SRI field corresponding to a PUSCH as an example, it may be extended to a case where the first indication information is used to indicate QCL relationship information and/or power control parameter corresponding to other PUSCHs.

The network device transmits PUSCH scheduling information to the terminal.

The scheduling information includes an SRI field, which is used to indicate an SRS resources corresponding to a PUSCH transmission.

In an embodiment, the scheduling is DCI-based scheduling, and the scheduling information is scheduling information indicated by DCI.

In an embodiment, in case that the scheduling is RRC signaling-based scheduling, the scheduling information is information configured by RRC signaling.

In an embodiment, in case that the scheduling is MAC-CE signaling-based scheduling, the scheduling information is information indicated by MAC-CE signaling.

In the following, DCI-based scheduling is taken as an example, and it may be extended to RRC signaling-based scheduling, MAC-CE signaling-based scheduling, etc.

In an embodiment, the scheduling information includes two SRI fields, and an indication table corresponding to each SRI field has a state corresponding to a case where the SRI field is not used.

In case that only a first SRI field is enabled, the PUSCH corresponds to a first SRS resource set, and a number of layers corresponding to a DMRS port of the PUSCH is an SRS resource number indicated by the first SRI field. That is, the DMRS port is determined based on a number of SRS resources indicated by the first SRI field.

In case that only a second SRI field is enabled, the PUSCH corresponds to a second SRS resource set, and a number of layers corresponding to a DMRS port of the PUSCH is a number of SRS resources indicated by the second SRI field. That is, the DMRS port is determined based on the number of SRS resources indicated by the second SRI field.

In case that both a first SRI field and a second SRI field are enabled, a number of layers corresponding to a DMRS port of the PUSCH is a sum of a number of SRS resources indicated by the first SRI field and a number of SRS resources indicated by the second SRI field. That is, the DMRS port is determined based on the sum of the number of SRS resources indicated by the first SRI field and the number of SRS resources indicated by the second SRI field.

In an embodiment, in case that both a first SRI field and a second SRI field are enabled, if a number of SRS resources indicated by the first SRI field and a number of SRS resources indicated by the second SRI field are L1 and L2 respectively, the number of layers corresponding to the DMRS port is L1+L2.

In an embodiment, first L1 ports indicated by an information field used to indicate the DMRS port corresponds to SRS resources indicated by the first SRI field, and an (L1+1)-th port to an (L1+L2)-th port correspond to SRS resources indicated by the second SRI field.

In an embodiment, the first L1 ports indicated by an information field used to indicate the DMRS port corresponds to a TCI state/panel/codeword/TRP/beam/CORESETPoolIndex corresponding to the first SRI field, and remaining DMRS ports correspond to a TCI state/panel/codeword/TRP/beam/CORESETPoolIndex corresponding to another SRI field.

In an embodiment, DMRS ports corresponding to different precoding matrices belong to different CDM groups.

It is assumed that number of layers corresponding to the two SRI fields is L1 and L2 respectively, and the number of layers corresponding to the DMRS port is L1+L2. An information field used to indicate an antenna port indicates (L1+L2) DMRS ports, and a CDM group corresponding to L1 DMRS ports is different from a CDM group corresponding to other L2 DMRS ports. For example, the L1 DMRS ports correspond to one CDM group, and the other L2 DMRS ports correspond to another CDM group.

In an embodiment, the DMRS port corresponding to the precoding matrix is determined based on the CDM group corresponding to the DMRS port. For example, in case that the L1 DMRS ports indicated by the information field used to indicate the DMRS port are antenna ports in one CDM group, and the other L2 DMRS ports are antenna ports in another CDM group, L1 DMRS ports in the same CDM group correspond to SRS resources indicated by an SRI field with the number of SRS resources L1, and L2 DMRS ports in another CDM group correspond to SRS resources indicated by an SRI field with the number of SRS resources L2.

In an embodiment, the association relationship between the DMRS port and the TCI state/SRS resource set/panel/codeword/TRP/beam/CORESETPoolIndex is determined based on the CDM group corresponding to the DMRS port. For example, in case that the L1 DMRS ports indicated by the information field used to indicate the DMRS port are antenna ports in one CDM group, and the other L2 DMRS ports are antenna ports in another CDM group, L1 DMRS ports in the same CDM group correspond to the TCI state/SRS resource set/panel/codeword/TRP/beam/CORESETPoolIndex corresponding to the SRI field with the number of SRS resources L1, and L2 DMRS ports in another CDM group correspond to the TCI state/SRS resource set/panel/codeword/TRP/beam/CORESETPoolIndex corresponding to the SRI field with the number of SRS resources L2.

In an embodiment, the CDM group has a predefined association relationship with the precoding matrix/precoding and/or number of layers field/SRI field/TCI state/SRS resource set/ panel/codeword/TRP/beam/CORESETPoolIndex; or, the association relationship is indicated by a network side. For example, DMRS ports corresponding to a CDM group with a relatively small serial number correspond to a first precoding matrix/precoding and/or number of layers field/SRI field/TCI state/SRS resource set/ panel/codeword/TRP/beam/CORESETPoolIndex, and a CDM group with a relatively large serial number corresponds to a second precoding matrix/precoding and/or number of layers field/SRI field/TCI state/SRS resource set/panel/codeword/TRP/beam/CORESETPoolIndex; or a CDM group with a relatively large serial number corresponds to a first precoding matrix/precoding and/or number of layers field/SRI field/TCI state/SRS resource set/ panel/codeword/TRP/beam/ CORESETPoolIndex, and a CDM group with a relatively small serial number corresponds to a second precoding matrix/precoding and/or number of layers field/SRI field/TCI state/SRS resource set/panel/codeword/TRP/beam/CORESETPoolIndex.

The methods and apparatuses provided in the embodiments of the present application are based on the same conception. Since the methods and apparatuses solve problems in similar principles, the implementation of the apparatuses and methods may be referred to each other, and repeated details are not repeated.

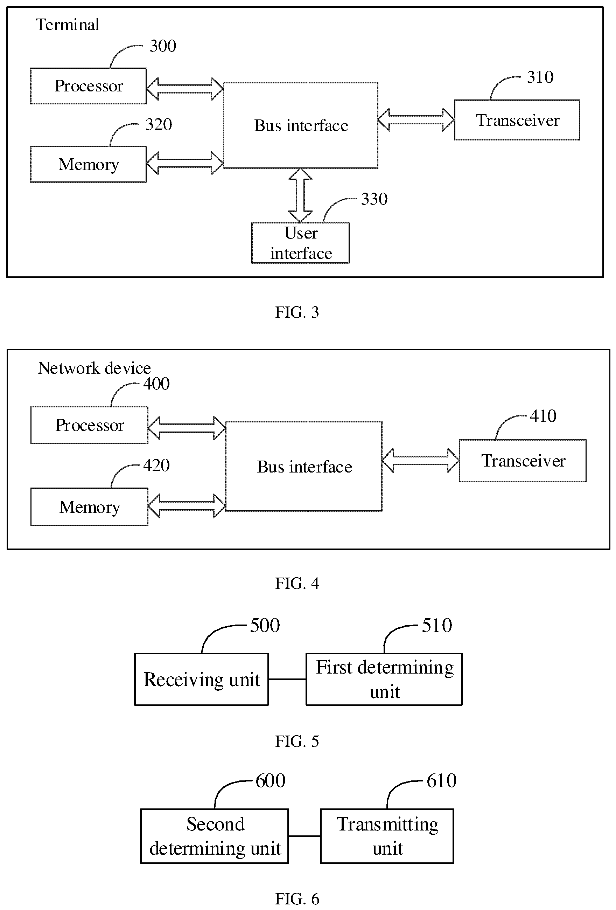

FIG. 3 is a schematic structural diagram of a terminal according to an embodiment of the present application. As shown in FIG. 3, the terminal includes a memory 320, a transceiver 310 and a processor 300, and the processor 300 and the memory 320 may also be physically separated.

The memory 320 is used for storing a computer programs, and the transceiver 310 is used for receiving and transmitting data under control of the processor 300.

In FIG. 3, a bus architecture may include any number of interconnected buses and bridges, which are linked together through various circuits of one or more processors represented by the processor 300 and one or more memories represented by the memory 320. The bus architecture may also link together various other circuits, such as peripherals, voltage regulators, and power management circuits, etc., which are well known in the art, and therefore are not further described in the present application. The bus interface provides an interface. The transceiver 310 may include multiple elements, i.e., including a transmitter and a receiver, units for providing communication with various other devices over transmission media including wireless channels, wired channels, fiber optic cables, and the like. For different user equipments, user interface 330 may be an interface capable of externally or internally connecting the required equipment, and the connected equipment includes, but not limited to, a small keypad, a display, a speaker, a microphone, a joystick, and the like.

The processor 300 is responsible for managing the bus architecture and general processing, and the memory 320 may store data used by the processor 300 when performing operations.

The processor 300 may be a central processing unit (CPU), an application specific integrated circuit (ASIC), a field-programmable gate array (FPGA), or a complex programmable logic device (CPLD), the processor may also use a multi-core architecture.

The processor 300 is used for performing any method provided by the embodiments of the present application according to an obtained executable instruction by calling the computer program stored in the memory 320, for example:

receiving first indication information transmitted from a network device, where the first indication information is used to indicate quasi-co-location (QCL) relationship information and/or power control parameter corresponding to a physical uplink shared channel (PUSCH); and

determining a demodulation reference signal (DMRS) port corresponding to the PUSCH based on the first indication information, where the DMRS port corresponds to one or more pieces of spatial relation information, and DMRS ports corresponding to different spatial relation information among multiple pieces of spatial relation information are different.

In an embodiment, the first indication information includes indication information indicating one or more of the following:

spatial relation information or beam corresponding to the PUSCH;

a transmission configuration indicator (TCI) state corresponding to the PUSCH;

a transmission and/or reception point corresponding to the PUSCH;

an antenna panel corresponding to the PUSCH;

precoding information and/or number of layers corresponding to the PUSCH;

a sounding reference signal (SRS) resource corresponding to the PUSCH;

a sounding reference signal (SRS) resource set corresponding to the PUSCH;

an open loop power control parameter corresponding to the PUSCH;

a codeword and/or a number of codewords corresponding to the PUSCH; or

a control resource set resource pool index corresponding to the PUSCH.

In an embodiment, the open loop power control parameter includes one or more of a target transmit power, a path loss reference signal parameter, or a path loss compensation parameter.

In an embodiment, determining the DMRS port corresponding to the PUSCH based on the first indication information includes:

determining a first number of layers corresponding to the DMRS port based on the first indication information; and

determining the DMRS port based on the first number of layers.

In an embodiment, determining the first number of layers corresponding to the DMRS port based on the first indication information includes:

based on the first indication information, determining N precoding information and/or number of layers fields corresponding to the PUSCH, or determining N sounding reference signal (SRS) resource indicator (SRI) fields corresponding to the PUSCH, where N is an integer greater than or equal to 1; and

determining the first number of layers based on the N precoding information and/or number of layers fields corresponding to the PUSCH, or the N SRI fields corresponding to the PUSCH.

In an embodiment, determining the first number of layers based on the N precoding information and/or number of layers fields corresponding to the PUSCH, or the N SRI fields corresponding to the PUSCH includes any one of the following:

determining the first number of layers based on a sum of N numbers of layers respectively indicated by the N precoding information and/or number of layers fields corresponding to the PUSCH; or

determining the first number of layers based on a sum of numbers of SRS resources of N SRS resource groups respectively indicated by the N SRI fields corresponding to the PUSCH; or

determining the first number of layers based on a sum of multiple numbers of layers indicated by a first precoding information and/or number of layers field among the N precoding information and/or number of layers fields; or

determining the first number of layers based on a sum of numbers of SRS resources of multiple SRS resource groups indicated by a first SRI field among the N SRI fields; or

determining the first number of layers based on N times a number of layers indicated by a first precoding information and/or number of layers field among the N precoding information and/or number of layers fields; or

determining the first number of layers based on N times a number of SRS resources indicated by a first SRI field among the N SRI fields; or

determining the first number of layers based on a number of layers indicated by the N precoding information and/or number of layers fields corresponding to the PUSCH; or

determining the first number of layers based on a number of SRS resources indicated by the N SRI fields corresponding to the PUSCH, or based on an SRS resource number indicated by the N SRI fields corresponding to the PUSCH; or

determining the first number of layers based on a number of layers indicated by a first precoding information and/or number of layers field among the N precoding information and/or number of layers fields; or

determining the first number of layers based on a number of SRS resources indicated by a first SRI field among the N SRI fields, or based on an SRS resource number indicated by a first SRI field among the N SRI fields.

In an embodiment, determining the first number of layers based on the N precoding information and/or number of layers fields corresponding to the PUSCH, or the N SRI fields corresponding to the PUSCH includes:

determining that one piece of precoding information and/or number of layers field corresponding to the PUSCH indicates N precoding matrices and/or M numbers of layers, or determining that one SRI field corresponding to the PUSCH indicates N SRS resource groups; and

determining the first number of layers based on the N precoding matrices and/or the M numbers of layers, or the N SRS resource groups, where M is an integer greater than or equal to 1.

In an embodiment, determining the first number of layers based on the N precoding matrices and/or the M numbers of layers, or the N SRS resource groups, includes any one of the following:

determining the first number of layers based on a sum of the M numbers of layers indicated by the one piece of precoding information and/or number of layers field corresponding to the PUSCH; or

determining the first number of layers based on a sum of numbers of SRS resources of the N SRS resource groups indicated by the one SRI field corresponding to the PUSCH; or

determining the first number of layers based on N times a number of layers indicated by the one piece of precoding information and/or number of layers field corresponding to the PUSCH; or

determining the first number of layers based on N times a number of SRS resources indicated by the one SRI field corresponding to the PUSCH; or

determining the first number of layers based on a number of layers indicated by the one piece of precoding information and/or number of layers field corresponding to the PUSCH; or

determining the first number of layers based on a number of SRS resources indicated by one SRI field corresponding to the PUSCH, or based on an SRS resource number indicated by one SRI field corresponding to the PUSCH.

In an embodiment, based on the first indication information, determining the N precoding information and/or number of layers fields corresponding to the PUSCH, or determining the N SRI fields corresponding to the PUSCH includes:

determining that the PUSCH corresponds to N pieces of first information based on the first indication information, where each of the N pieces of first information includes one or more of a transmission configuration indicator (TCI) state, spatial relation information, a power control parameter, a transmission and/or reception point, an antenna panel, a sounding reference signal (SRS) resource, a sounding reference signal (SRS) resource group, a precoding matrix, a layer group, a sounding reference signal (SRS) resource set, a codeword, or a control resource set resource pool; and

determining the N precoding information and/or number of layers fields corresponding to the PUSCH based on precoding information and/or number of layers field corresponding to each of the N pieces of first information; or determining the N SRI fields corresponding to the PUSCH based on SRI fields corresponding to each of the N pieces of first information.

In an embodiment, determining that the PUSCH corresponds to the N pieces of first information based on the first indication information includes one or more of the following:

in case that the first indication information indicates N pieces of precoding information and/or N numbers of layers, determining that the PUSCH corresponds to the N pieces of first information; or

in case that the first indication information indicates N pieces of enabled precoding information and/or number of layers field, determining that the PUSCH corresponds to the N pieces of first information; or

in case that the first indication information indicates N SRS resource groups, determining that the PUSCH corresponds to the N pieces of first information; or

in case that the first indication information indicates N enabled SRI fields, determining that the PUSCH corresponds to the N pieces of first information; or

in case that the first indication information indicates N SRS resource sets, determining that the PUSCH corresponds to the N pieces of first information; or

in case that the first indication information indicates N pieces of spatial relation information or beam, determining that the PUSCH corresponds to the N pieces of first information; or

in case that the first indication information indicates N transmission and/or reception points, determining that the PUSCH corresponds to the N pieces of first information; or

in case that the first indication information indicates N antenna panels, determining that the PUSCH corresponds to the N pieces of first information; or

in case that the first indication information indicates N open loop power control parameters, determining that the PUSCH corresponds to the N pieces of first information; or

in case that the first indication information indicates N codewords, determining that the PUSCH corresponds to the N pieces of first information; or

in case that the first indication information indicates N control resource set resource pool indexes, determining that the PUSCH corresponds to the N pieces of first information.

In an embodiment, determining the first number of layers based on the first indication information includes:

in case that the first indication information indicates N pieces of QCL relationship information and/or power control parameter, determining that the PUSCH corresponds to N pieces of precoding information and/or M numbers of layers, or determining that the PUSCH corresponds to N SRI groups, where N is an integer greater than or equal to 1, and M is an integer greater than or equal to 1; and

determining the first number of layers based on the N pieces of precoding information and/or the M numbers of layers, or a number of layers or an SRS resource number corresponding to the N SRI groups.

In an embodiment, determining the DMRS port based on the first number of layers includes:
determining a DMRS port corresponding to each of the N pieces of first information determined based on the first number of layers.

In an embodiment, the QCL relationship information corresponding to the PUSCH includes QCL relationship information between the DMRS port corresponding to the PUSCH and one or more other reference signals.

FIG. 4 is a schematic structural diagram of a network device according to an embodiment of the present application. As shown in FIG. 4, the network device includes a memory 420, a transceiver 410 and a processor 400, and the processor 400 and the memory 420 may also be physically arranged separately.

The memory 420 is used for storing a computer program, and the transceiver 410 is used for receiving and transmitting data under control of the processor 400.

In FIG. 4, a bus architecture may include any number of interconnected buses and bridges, which are linked together through various circuits of one or more processors represented by the processor 400 and one or more memories represented by the memory 420. The bus architecture may also link together various other circuits, such as peripherals, voltage regulators, and power management circuits, etc., which are well known in the art, and therefore are not further described in the present application. The bus interface provides an interface. The transceiver 410 may include multiple elements, i.e., including a transmitter and a receiver, units for providing communication with various other devices over transmission media including wireless channels, wired channels, fiber optic cables, and the like.

The processor 400 is responsible for managing the bus architecture and general processing, and the memory 420 may store data used by the processor 400 when performing operations.

The processor 400 may be a CPU, an ASIC, a FPGA, or a CPLD, the processor 420 may also use a multi-core architecture.

The processor 400 is used for performing any method provided by the embodiments of the present application according to an obtained executable instruction by calling the computer program stored in the memory 420, for example:

determining a first number of layers corresponding to a demodulation reference signal (DMRS) port corresponding to a physical uplink shared channel (PUSCH), where the DMRS port corresponds to one or more pieces of spatial relation information, and DMRS ports corresponding to different spatial relation information among multiple pieces of spatial relation information are different; and

transmitting first indication information to a terminal, where the first number of layers has a first relationship with the first indication information, and the first indication information is used to indicate quasi-co-location (QCL) relationship information and/or power control parameter corresponding to the PUSCH.

In an embodiment, the first indication information includes indication information indicating one or more of the following:

spatial relation information or beam corresponding to the PUSCH;

a transmission configuration indicator (TCI) state corresponding to the PUSCH;

a transmission and/or reception point corresponding to the PUSCH;

an antenna panel corresponding to the PUSCH;

precoding information and/or number of layers corresponding to the PUSCH;

a sounding reference signal (SRS) resource corresponding to the PUSCH;

a sounding reference signal (SRS) resource set corresponding to the PUSCH;

an open loop power control parameter corresponding to the PUSCH;

a codeword and/or a number of codewords corresponding to the PUSCH; or

a control resource set resource pool index corresponding to the PUSCH.

In an embodiment, the open loop power control parameter includes one or more of a target transmit power, a path loss reference signal parameter, or a path loss compensation parameter.

In an embodiment, N precoding information and/or number of layers fields corresponding to the PUSCH indicated by the first indication information, or N SRS resource indicator (SRI) fields corresponding to the PUSCH indicated by the first indication information correspond to the first number of layers, where N is an integer greater than or equal to 1.

In an embodiment, the N precoding information and/or number of layers fields corresponding to the PUSCH, or the N SRI fields corresponding to the PUSCH correspond to the first number of layers includes any one of the following:

a sum of N numbers of layers respectively indicated by the N precoding information and/or number of layers fields corresponding to the PUSCH is equal to the first number of layers; or

a sum of numbers of SRS resources of N SRS resource groups respectively indicated by the N SRI fields corresponding to the PUSCH is equal to the first number of layers; or

a sum of multiple numbers of layers indicated by a first precoding information and/or number of layers field among the N precoding information and/or number of layers fields corresponding to the PUSCH is equal to the first number of layers; or

a sum of numbers of SRS resources of multiple SRS resource groups indicated by a first SRI field among the N SRI fields corresponding to the PUSCH is equal to the first number of layers; or

N times a number of layers indicated by a first precoding information and/or number of layers field among the N precoding information and/or number of layers fields corresponding to the PUSCH is equal to the first number of layers; or

N times a number of SRS resources indicated by a first SRI field among the N SRI fields corresponding to the PUSCH is equal to the first number of layers; or

a number of layers indicated by the N precoding information and/or number of layers fields corresponding to the PUSCH is equal to the first number of layers; or

a number of SRS resources indicated by the N SRI fields corresponding to the PUSCH, or an SRS resource number indicated by the N SRI fields corresponding to the PUSCH is equal to the first number of layers;

a number of layers indicated by a first precoding information and/or number of layers field among the N precoding information and/or number of layers fields corresponding to the PUSCH is equal to the first number of layers; or

a number of SRS resources indicated by a first SRI field among the N SRI fields corresponding to the PUSCH, or an SRS resource number indicated by a first SRI field among the N SRI fields is equal to the first number of layers.

In an embodiment, N precoding matrices and/or M numbers of layers indicated by one piece of precoding information and/or number of layers field corresponding to the PUSCH indicated by the first indication information correspond to the first number of layers, where M is an integer greater than or equal to 1; or
N SRS resource groups indicated by one SRI field corresponding to the PUSCH indicated by the first indication information correspond to the first number of layers.

In an embodiment, the N precoding matrices and/or the M numbers of layers, or the N SRS resource groups correspond to the first number of layers includes any one of the following:

a sum of the M numbers of layers indicated by the one piece of precoding information and/or number of layers field corresponding to the PUSCH is equal to the first number of layers; or

a sum of numbers of SRS resources of the N SRS resource groups indicated by the one SRI field corresponding to the PUSCH is equal to the first number of layers; or

N times a number of layers indicated by the one piece of precoding information and/or number of layers field corresponding to the PUSCH is equal to the first number of layers; or

N times a number of SRS resources indicated by the one SRI field corresponding to the PUSCH is equal to the first number of layers; or

a number of layers indicated by the one piece of precoding information and/or number of layers field corresponding to the PUSCH is equal to the first number of layers; or

a number of SRS resources indicated by the one SRI field corresponding to the PUSCH, or an SRS resource number indicated by one SRI field corresponding to the PUSCH is equal to the first number of layers.

In an embodiment, the N precoding information and/or number of layers fields are precoding information and/or number of layers field corresponding to the N pieces of first information indicated by the first indication information; or the N SRI fields are SRI fields corresponding to the N pieces of first information indicated by the first indication information, where each of the N pieces of first information includes one or more of a TCI state, spatial relation information, a power control parameter, a transmission and/or reception point, an antenna panel, an SRS resource, an SRS resource group, a precoding matrix, a layer group, an SRS resource set, a codeword, or a control resource set resource pool.

In an embodiment, the first indication information indicates N pieces of first information includes one or more of the following:

the first indication information indicates N pieces of precoding information and/or N numbers of layers; or

the first indication information indicates N pieces of enabled precoding information and/or number of layers field; or

the first indication information indicates N SRS resource groups; or

the first indication information indicates N enabled SRI fields; or

the first indication information indicates N SRS resource sets; or

the first indication information indicates N pieces of spatial relation information or beam; or

the first indication information indicates N transmission and/or reception points; or

the first indication information indicates N antenna panels; or

the first indication information indicates N open loop power control parameters; or

the first indication information indicates N codewords; or

the first indication information indicates N control resource set resource pool indexes.

In an embodiment, in case that the first indication information indicates N pieces of QCL relationship information and/or power control parameter, N pieces of precoding information and/or M numbers of layers corresponding to the PUSCH indicated by the first indication information correspond to the first number of layers; or a number of layers or an SRS resource number corresponding to N SRI groups corresponding to the PUSCH indicated by the first indication information corresponds to the first number of layers, where N is an integer greater than or equal to 1, and M is an integer greater than or equal to 1.

In an embodiment, the method further includes:

determining second indication information based on the first number of layers, where the second indication information is used to indicate the DMRS port corresponding to the PUSCH; and

transmitting the second indication information to the terminal.

In an embodiment, the QCL relationship information corresponding to the PUSCH includes QCL relationship information between the DMRS port corresponding to the PUSCH and one or more other reference signals.

It should be noted here that the above-mentioned terminal and network device provided by the embodiment of the present application may implement all the method steps implemented by the above-mentioned method embodiments, and may achieve the same technical effect. The same parts and beneficial effects in the embodiments as those in the method embodiments are not described in detail.

FIG. 5 is a first schematic structural diagram of an apparatus for determining DMRS port according to an embodiment of the present application. The apparatus is for use in a terminal. As shown in FIG. 5, the apparatus includes:

a receiving unit 500, used for receiving first indication information transmitted from a network device, where the first indication information is used to indicate quasi-co-location (QCL) relationship information and/or power control parameter corresponding to a physical uplink shared channel (PUSCH); and

a first determining unit 510, used for determining a DMRS port corresponding to the PUSCH based on the first indication information, where the DMRS port corresponds to one or more pieces of spatial relation information, and DMRS ports corresponding to different spatial relation information among multiple pieces of spatial relation information are different.

In an embodiment, the first indication information includes indication information indicating one or more of the following:

spatial relation information or beam corresponding to the PUSCH;

a transmission configuration indicator (TCI) state corresponding to the PUSCH;

a transmission and/or reception point corresponding to the PUSCH;

an antenna panel corresponding to the PUSCH;

precoding information and/or number of layers corresponding to the PUSCH;

a sounding reference signal (SRS) resource corresponding to the PUSCH;

a sounding reference signal (SRS) resource set corresponding to the PUSCH;

an open loop power control parameter corresponding to the PUSCH;

a codeword and/or a number of codewords corresponding to the PUSCH; or

a control resource set resource pool index corresponding to the PUSCH.

In an embodiment, the open loop power control parameter includes one or more of a target transmit power, a path loss reference signal parameter, or a path loss compensation parameter.

In an embodiment, determining the DMRS port corresponding to the PUSCH based on the first indication information includes:

determining a first number of layers corresponding to the DMRS port based on the first indication information; and

determining the DMRS port based on the first number of layers.

In an embodiment, determining the first number of layers corresponding to the DMRS port based on the first indication information includes:

based on the first indication information, determining N precoding information and/or number of layers fields corresponding to the PUSCH, or determining N sounding reference signal (SRS) resource indicator (SRI) fields corresponding to the PUSCH, where N is an integer greater than or equal to 1; and

determining the first number of layers based on the N precoding information and/or number of layers fields corresponding to the PUSCH, or the N SRI fields corresponding to the PUSCH.

In an embodiment, determining the first number of layers based on the N precoding information and/or number of layers fields corresponding to the PUSCH, or the N SRI fields corresponding to the PUSCH includes any one of the following:

determining the first number of layers based on a sum of N numbers of layers respectively indicated by the N precoding information and/or number of layers fields corresponding to the PUSCH; or

determining the first number of layers based on a sum of numbers of SRS resources of N SRS resource groups respectively indicated by the N SRI fields corresponding to the PUSCH; or

determining the first number of layers based on a sum of multiple numbers of layers indicated by a first precoding information and/or number of layers field among the N precoding information and/or number of layers fields; or

determining the first number of layers based on a sum of numbers of SRS resources of multiple SRS resource groups indicated by a first SRI field among the N SRI fields; or

determining the first number of layers based on N times a number of layers indicated by a first precoding information and/or number of layers field among the N precoding information and/or number of layers fields; or

determining the first number of layers based on N times a number of SRS resources indicated by a first SRI field among the N SRI fields; or

determining the first number of layers based on a number of layers indicated by the N precoding information and/or number of layers fields corresponding to the PUSCH; or

determining the first number of layers based on a number of SRS resources indicated by the N SRI fields corresponding to the PUSCH, or based on an SRS resource number indicated by the N SRI fields corresponding to the PUSCH; or

determining the first number of layers based on a number of layers indicated by a first precoding information and/or number of layers field among the N precoding information and/or number of layers fields; or

determining the first number of layers based on a number of SRS resources indicated by a first SRI field among the N SRI fields, or based on an SRS resource number indicated by a first SRI field among the N SRI fields.

In an embodiment, determining the first number of layers based on the N precoding information and/or number of layers fields corresponding to the PUSCH, or the N SRI fields corresponding to the PUSCH includes:

determining that one piece of precoding information and/or number of layers field corresponding to the PUSCH indicates N precoding matrices and/or M numbers of layers, or determining that one SRI field corresponding to the PUSCH indicates N SRS resource groups; and

determining the first number of layers based on the N precoding matrices and/or the M numbers of layers, or the N SRS resource groups, where M is an integer greater than or equal to 1.

In an embodiment, determining the first number of layers based on the N precoding matrices and/or the M numbers of layers, or the N SRS resource groups, includes any one of the following:

determining the first number of layers based on a sum of the M numbers of layers indicated by the one piece of precoding information and/or number of layers field corresponding to the PUSCH; or

determining the first number of layers based on a sum of numbers of SRS resources of the N SRS resource groups indicated by the one SRI field corresponding to the PUSCH; or

determining the first number of layers based on N times a number of layers indicated by the one piece of precoding information and/or number of layers field corresponding to the PUSCH; or

determining the first number of layers based on N times a number of SRS resources indicated by the one SRI field corresponding to the PUSCH; or

determining the first number of layers based on a number of layers indicated by the one piece of precoding information and/or number of layers field corresponding to the PUSCH; or

determining the first number of layers based on a number of SRS resources indicated by one SRI field corresponding to the PUSCH, or based on an SRS resource number indicated by one SRI field corresponding to the PUSCH.

In an embodiment, based on the first indication information, determining the N precoding information and/or number of layers fields corresponding to the PUSCH, or determining the N SRI fields corresponding to the PUSCH includes:

determining that the PUSCH corresponds to N pieces of first information based on the first indication information, where each of the N pieces of first information includes one or more of a transmission configuration indicator (TCI) state, spatial relation information, a power control parameter, a transmission and/or reception point, an antenna panel, a sounding reference signal (SRS) resource, a sounding reference signal (SRS) resource group, a precoding matrix, a layer group, a sounding reference signal (SRS) resource set, a codeword, or a control resource set resource pool; and

determining the N precoding information and/or number of layers fields corresponding to the PUSCH based on precoding information and/or number of layers field corresponding to each of the N pieces of first information; or determining the N SRI fields corresponding to the PUSCH based on SRI fields corresponding to each of the N pieces of first information.

In an embodiment, determining that the PUSCH corresponds to the N pieces of first information based on the first indication information includes one or more of the following:

in case that the first indication information indicates N pieces of precoding information and/or N numbers of layers, determining that the PUSCH corresponds to the N pieces of first information; or

in case that the first indication information indicates N pieces of enabled precoding information and/or number of layers field, determining that the PUSCH corresponds to the N pieces of first information; or

in case that the first indication information indicates N SRS resource groups, determining that the PUSCH corresponds to the N pieces of first information; or

in case that the first indication information indicates N enabled SRI fields, determining that the PUSCH corresponds to the N pieces of first information; or

in case that the first indication information indicates N SRS resource sets, determining that the PUSCH corresponds to the N pieces of first information; or

in case that the first indication information indicates N pieces of spatial relation information or beam, determining that the PUSCH corresponds to the N pieces of first information; or

in case that the first indication information indicates N transmission and/or reception points, determining that the PUSCH corresponds to the N pieces of first information; or

in case that the first indication information indicates N antenna panels, determining that the PUSCH corresponds to the N pieces of first information; or

in case that the first indication information indicates N open loop power control parameters, determining that the PUSCH corresponds to the N pieces of first information; or

in case that the first indication information indicates N codewords, determining that the PUSCH corresponds to the N pieces of first information; or

in case that the first indication information indicates N control resource set resource pool indexes, determining that the PUSCH corresponds to the N pieces of first information.

In an embodiment, determining the first number of layers based on the first indication information includes:

in case that the first indication information indicates N pieces of QCL relationship information and/or power control parameter, determining that the PUSCH corresponds to N pieces of precoding information and/or M numbers of layers, or determining that the PUSCH corresponds to N SRI groups, where N is an integer greater than or equal to 1, and M is an integer greater than or equal to 1; and

determining the first number of layers based on the N pieces of precoding information and/or the M numbers of layers, or a number of layers or an SRS resource number corresponding to the N SRI groups.

In an embodiment, determining the DMRS port based on the first number of layers includes:
determining a DMRS port corresponding to each of the N pieces of first information determined based on the first number of layers.

In an embodiment, the QCL relationship information corresponding to the PUSCH includes QCL relationship information between the DMRS port corresponding to the PUSCH and one or more other reference signals.

FIG. 6 is a second schematic structural diagram of an apparatus for determining DMRS port according to an embodiment of the present application. The apparatus is for use in a network device. As shown in FIG. 6, the apparatus includes:

a second determining unit 600, used for determining a first number of layers corresponding to a DMRS port corresponding to a physical uplink shared channel (PUSCH), where the DMRS port corresponds to one or more pieces of spatial relation information, and DMRS ports corresponding to different spatial relation information among multiple pieces of spatial relation information are different; and

a transmitting unit 610, used for transmitting first indication information to a terminal, where the first number of layers has a first relationship with the first indication information, and the first indication information is used to indicate quasi-co-location (QCL) relationship information and/or power control parameter corresponding to the PUSCH.

In an embodiment, the first indication information includes indication information indicating one or more of the following:

spatial relation information or beam corresponding to the PUSCH;

a transmission configuration indicator (TCI) state corresponding to the PUSCH;

a transmission and/or reception point corresponding to the PUSCH;

an antenna panel corresponding to the PUSCH;

precoding information and/or number of layers corresponding to the PUSCH;

a sounding reference signal (SRS) resource corresponding to the PUSCH;

a sounding reference signal (SRS) resource set corresponding to the PUSCH;

an open loop power control parameter corresponding to the PUSCH;

a codeword and/or a number of codewords corresponding to the PUSCH; or

a control resource set resource pool index corresponding to the PUSCH.

In an embodiment, the open loop power control parameter includes one or more of a target transmit power, a path loss reference signal parameter, or a path loss compensation parameter.

In an embodiment, N precoding information and/or number of layers fields corresponding to the PUSCH indicated by the first indication information, or N SRS resource indicator (SRI) fields corresponding to the PUSCH indicated by the first indication information correspond to the first number of layers, where N is an integer greater than or equal to 1.

In an embodiment, the N precoding information and/or number of layers fields corresponding to the PUSCH, or the N SRI fields corresponding to the PUSCH correspond to the first number of layers includes any one of the following:

a sum of N numbers of layers respectively indicated by the N precoding information and/or number of layers fields corresponding to the PUSCH is equal to the first number of layers; or

a sum of numbers of SRS resources of N SRS resource groups respectively indicated by the N SRI fields corresponding to the PUSCH is equal to the first number of layers; or

a sum of multiple numbers of layers indicated by a first precoding information and/or number of layers field among the N precoding information and/or number of layers fields corresponding to the PUSCH is equal to the first number of layers; or

a sum of numbers of SRS resources of multiple SRS resource groups indicated by a first SRI field among the N SRI fields corresponding to the PUSCH is equal to the first number of layers; or

N times a number of layers indicated by a first precoding information and/or number of layers field among the N precoding information and/or number of layers fields corresponding to the PUSCH is equal to the first number of layers; or

N times a number of SRS resources indicated by a first SRI field among the N SRI fields corresponding to the PUSCH is equal to the first number of layers; or

a number of layers indicated by the N precoding information and/or number of layers fields corresponding to the PUSCH is equal to the first number of layers; or

a number of SRS resources indicated by the N SRI fields corresponding to the PUSCH, or an SRS resource number indicated by the N SRI fields corresponding to the PUSCH is equal to the first number of layers;

a number of layers indicated by a first precoding information and/or number of layers field among the N precoding information and/or number of layers fields corresponding to the PUSCH is equal to the first number of layers; or

a number of SRS resources indicated by a first SRI field among the N SRI fields corresponding to the PUSCH, or an SRS resource number indicated by a first SRI field among the N SRI fields is equal to the first number of layers.

In an embodiment, N precoding matrices and/or M numbers of layers indicated by one piece of precoding information and/or number of layers field corresponding to the PUSCH indicated by the first indication information correspond to the first number of layers, where M is an integer greater than or equal to 1; or
N SRS resource groups indicated by one SRI field corresponding to the PUSCH indicated by the first indication information correspond to the first number of layers.

In an embodiment, the N precoding matrices and/or the M numbers of layers, or the N SRS resource groups correspond to the first number of layers includes any one of the following:

a sum of the M numbers of layers indicated by the one piece of precoding information and/or number of layers field corresponding to the PUSCH is equal to the first number of layers; or

a sum of numbers of SRS resources of the N SRS resource groups indicated by the one SRI field corresponding to the PUSCH is equal to the first number of layers; or

N times a number of layers indicated by the one piece of precoding information and/or number of layers field corresponding to the PUSCH is equal to the first number of layers; or

N times a number of SRS resources indicated by the one SRI field corresponding to the PUSCH is equal to the first number of layers; or

a number of layers indicated by the one piece of precoding information and/or number of layers field corresponding to the PUSCH is equal to the first number of layers; or

a number of SRS resources indicated by the one SRI field corresponding to the PUSCH, or an SRS resource number indicated by one SRI field corresponding to the PUSCH is equal to the first number of layers.

In an embodiment, the N precoding information and/or number of layers fields are precoding information and/or number of layers field corresponding to the N pieces of first information indicated by the first indication information; or the N SRI fields are SRI fields corresponding to the N pieces of first information indicated by the first indication information, where each of the N pieces of first information includes one or more of a TCI state, spatial relation information, a power control parameter, a transmission and/or reception point, an antenna panel, an SRS resource, an SRS resource group, a precoding matrix, a layer group, an SRS resource set, a codeword, or a control resource set resource pool.

In an embodiment, the first indication information indicates N pieces of first information includes one or more of the following:

the first indication information indicates N pieces of precoding information and/or N numbers of layers; or

the first indication information indicates N pieces of enabled precoding information and/or number of layers field; or

the first indication information indicates N SRS resource groups; or

the first indication information indicates N enabled SRI fields; or

the first indication information indicates N SRS resource sets; or

the first indication information indicates N pieces of spatial relation information or beam; or

the first indication information indicates N transmission and/or reception points; or

the first indication information indicates N antenna panels; or

the first indication information indicates N open loop power control parameters; or

the first indication information indicates N codewords; or

the first indication information indicates N control resource set resource pool indexes.

In an embodiment, in case that the first indication information indicates N pieces of QCL relationship information and/or power control parameter, N pieces of precoding information and/or M numbers of layers corresponding to the PUSCH indicated by the first indication information correspond to the first number of layers; or a number of layers or an SRS resource number corresponding to N SRI groups corresponding to the PUSCH indicated by the first indication information corresponds to the first number of layers, where N is an integer greater than or equal to 1, and M is an integer greater than or equal to 1.

In an embodiment, the second determining unit 600 is further used for:

determining second indication information based on the first number of layers, where the second indication information is used to indicate the DMRS port corresponding to the PUSCH; and

where the transmitting unit 610 is further used for:
transmitting the second indication information to the terminal.

In an embodiment, the QCL relationship information corresponding to the PUSCH includes QCL relationship information between the DMRS port corresponding to the PUSCH and one or more other reference signals.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor readable storage medium. Based on such understanding, the solutions of the present application in essence or a part of the solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes, such as a U disk, a mobile hard disk, a read-only memory (ROM), a random access memory (RAM), a magnetic disk, or a compact disk.

It should be noted here that the above-mentioned apparatuses provided by the embodiments of the present application may implement all the method steps implemented by the above-mentioned method embodiment, and may achieve the same effects. The same parts and beneficial effects in the embodiments as those in the method embodiments are not described in detail.

On the other hand, an embodiment of the present application further provides a computer-readable storage medium. The computer-readable storage medium stores a computer program. The computer program is used to cause a computer to perform the methods for determining demodulation reference signal (DMRS) port provided by the above embodiments.

It should be noted here that the computer-readable storage medium provided by the embodiments of the present application may implement all the method steps implemented by the above-mentioned method embodiment, and may achieve the same effects. The same parts and beneficial effects in the embodiments as those in the method embodiments are not described in detail.

The computer-readable storage medium may be any available medium or data storage device that may be accessed by the processor, including but not limited to, a magnetic storage (e.g., a floppy disk, a hard disk, a magnetic tape, a magneto-optical disk (MO), etc.), an optical memory (such as CD, DVD, BD, HVD, etc.), and a semiconductor memory (such as ROM, EPROM, EEPROM, a non-volatile memory (NAND FLASH), a solid-state drive (SSD)), etc.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor readable memory capable of directing a computer or other programmable data processing apparatus to operate in a particular manner, and the instructions stored in the processor readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

## Claims

1. A method for determining demodulation reference signal, DMRS, port, performed by a terminal, and comprising:

   receiving first indication information transmitted from a network device, wherein the first indication information is used to indicate quasi-co-location, QCL, relationship information and/or power control parameter corresponding to a physical uplink shared channel, PUSCH; and
   determining a DMRS port corresponding to the PUSCH based on the first indication information, wherein the DMRS port corresponds to one or more pieces of spatial relation information, and DMRS ports corresponding to different spatial relation information among multiple pieces of spatial relation information are different.

2. The method of claim 1, wherein the first indication information comprises indication information indicating one or more of the following:

spatial relation information or beam corresponding to the PUSCH;
a transmission configuration indicator, TCI, state corresponding to the PUSCH;
a transmission and/or reception point corresponding to the PUSCH;
an antenna panel corresponding to the PUSCH;
precoding information and/or number of layers corresponding to the PUSCH;
a sounding reference signal, SRS, resource corresponding to the PUSCH;
a sounding reference signal, SRS, resource set corresponding to the PUSCH;
an open loop power control parameter corresponding to the PUSCH;
a codeword and/or a number of codewords corresponding to the PUSCH; or
a control resource set resource pool index corresponding to the PUSCH.

3. The method of claim 2, wherein the open loop power control parameter comprises one or more of a target transmit power, a path loss reference signal parameter, or a path loss compensation parameter.

4. The method of any one of claims 1 to 3, wherein determining the DMRS port corresponding to the PUSCH based on the first indication information comprises:

determining a first number of layers corresponding to the DMRS port based on the first indication information; and
determining the DMRS port based on the first number of layers.

5. The method of claim 4, wherein determining the first number of layers corresponding to the DMRS port based on the first indication information comprises:

based on the first indication information, determining N precoding information and/or number of layers fields corresponding to the PUSCH, or determining N sounding reference signal, SRS, resource indicator, SRI, fields corresponding to the PUSCH, wherein N is an integer greater than or equal to 1; and
determining the first number of layers based on the N precoding information and/or number of layers fields corresponding to the PUSCH, or the N SRI fields corresponding to the PUSCH.

6. The method of claim 5, wherein determining the first number of layers based on the N precoding information and/or number of layers fields corresponding to the PUSCH, or the N SRI fields corresponding to the PUSCH comprises any one of the following:

determining the first number of layers based on a sum of N numbers of layers respectively indicated by the N precoding information and/or number of layers fields corresponding to the PUSCH; or
determining the first number of layers based on a sum of numbers of SRS resources of N SRS resource groups respectively indicated by the N SRI fields corresponding to the PUSCH; or
determining the first number of layers based on a sum of multiple numbers of layers indicated by a first precoding information and/or number of layers field among the N precoding information and/or number of layers fields corresponding to the PUSCH; or
determining the first number of layers based on a sum of numbers of SRS resources of multiple SRS resource groups indicated by a first SRI field among the N SRI fields corresponding to the PUSCH; or
determining the first number of layers based on N times a number of layers indicated by a first precoding information and/or number of layers field among the N precoding information and/or number of layers fields corresponding to the PUSCH; or
determining the first number of layers based on N times a number of SRS resources indicated by a first SRI field among the N SRI fields corresponding to the PUSCH; or
determining the first number of layers based on a number of layers indicated by the N precoding information and/or number of layers fields corresponding to the PUSCH; or
determining the first number of layers based on a number of SRS resources indicated by the N SRI fields corresponding to the PUSCH, or based on an SRS resource number indicated by the N SRI fields corresponding to the PUSCH; or

determining the first number of layers based on a number of layers indicated by a first precoding information and/or number of layers field among the N precoding information and/or number of layers fields corresponding to the PUSCH; or

determining the first number of layers based on a number of SRS resources indicated by a first SRI field among the N SRI fields corresponding to the PUSCH, or based on an SRS resource number indicated by a first SRI field among the N SRI fields corresponding to the PUSCH.

7. The method of claim 5, wherein determining the first number of layers based on the N precoding information and/or number of layers fields corresponding to the PUSCH, or the N SRI fields corresponding to the PUSCH comprises:

determining that one piece of precoding information and/or number of layers field corresponding to the PUSCH indicates N precoding matrices and/or M numbers of layers, or determining that one SRI field corresponding to the PUSCH indicates N SRS resource groups; and

determining the first number of layers based on the N precoding matrices and/or the M numbers of layers, or the N SRS resource groups, wherein M is an integer greater than or equal to 1.

8. The method of claim 7, wherein determining the first number of layers based on the N precoding matrices and/or the M numbers of layers, or the N SRS resource groups, comprises any one of the following:

determining the first number of layers based on a sum of the M numbers of layers indicated by the one piece of precoding information and/or number of layers field corresponding to the PUSCH; or

determining the first number of layers based on a sum of numbers of SRS resources of the N SRS resource groups indicated by the one SRI field corresponding to the PUSCH; or

determining the first number of layers based on N times a number of layers indicated by the one piece of precoding information and/or number of layers field corresponding to the PUSCH; or

determining the first number of layers based on N times a number of SRS resources indicated by the one SRI field corresponding to the PUSCH; or

determining the first number of layers based on a number of layers indicated by the one piece of precoding information and/or number of layers field corresponding to the PUSCH; or

determining the first number of layers based on a number of SRS resources indicated by one SRI field corresponding to the PUSCH, or based on an SRS resource number indicated by one SRI field corresponding to the PUSCH.

9. The method of claim 5, wherein based on the first indication information, determining the N precoding information and/or number of layers fields corresponding to the PUSCH, or determining the N SRI fields corresponding to the PUSCH comprises:

determining that the PUSCH corresponds to N pieces of first information based on the first indication information, wherein each of the N pieces of first information comprises one or more of a transmission configuration indicator, TCI, state, spatial relation information, a power control parameter, a transmission and/or reception point, an antenna panel, a sounding reference signal, SRS, resource, a sounding reference signal, SRS, resource group, a precoding matrix, a layer group, a sounding reference signal, SRS, resource set, a codeword, or a control resource set resource pool; and

determining the N precoding information and/or number of layers fields corresponding to the PUSCH based on precoding information and/or number of layers field corresponding to each of the N pieces of first information; or determining the N SRI fields corresponding to the PUSCH based on SRI fields corresponding to each of the N pieces of first information.

10. The method of claim 9, wherein determining that the PUSCH corresponds to the N pieces of first information based on the first indication information comprises one or more of the following:

in case that the first indication information indicates N pieces of precoding information and/or N numbers of layers, determining that the PUSCH corresponds to the N pieces of first information; or

in case that the first indication information indicates N pieces of enabled precoding information and/or number of layers field, determining that the PUSCH corresponds to the N pieces of first information; or

in case that the first indication information indicates N SRS resource groups, determining that the PUSCH corresponds to the N pieces of first information; or

in case that the first indication information indicates N enabled SRI fields, determining that the PUSCH corresponds to the N pieces of first information; or

in case that the first indication information indicates N SRS resource sets, determining that the PUSCH corresponds to the N pieces of first information; or

in case that the first indication information indicates N pieces of spatial relation information or beam, determining that the PUSCH corresponds to the N pieces of first information; or

in case that the first indication information indicates N transmission and/or reception points, determining that the PUSCH corresponds to the N pieces of first information; or

in case that the first indication information indicates N antenna panels, determining that the PUSCH corresponds to the N pieces of first information; or

in case that the first indication information indicates N open loop power control parameters, determining that the PUSCH corresponds to the N pieces of first information; or

in case that the first indication information indicates N codewords, determining that the PUSCH corresponds to the N pieces of first information; or

in case that the first indication information indicates N control resource set resource pool indexes, determining that the PUSCH corresponds to the N pieces of first information.

11. The method of claim 4, wherein determining the first number of layers based on the first indication information comprises:

in case that the first indication information indicates N pieces of QCL relationship information and/or power control parameter, determining that the PUSCH corresponds to N pieces of precoding information and/or M numbers of layers, or determining that the PUSCH corresponds to N SRI groups, wherein N is an integer greater than or equal to 1, and M is an integer greater than or equal to 1; and

determining the first number of layers based on the N pieces of precoding information and/or the M numbers of layers, or a number of layers or an SRS resource number corresponding to the N SRI groups.

12. The method of any one of claims 5 to 11, wherein determining the DMRS port based on the first number of layers comprises:
determining a DMRS port corresponding to each of the N pieces of first information determined based on the first number of layers.

13. The method of any one of claims 1 to 12, wherein the QCL relationship information corresponding to the PUSCH comprises QCL relationship information between the DMRS port corresponding to the PUSCH and one or more other reference signals.

14. A method for determining demodulation reference signal, DMRS, port, performed by a network device, and comprising:

determining a first number of layers corresponding to a DMRS port corresponding to a physical uplink shared channel, PUSCH, wherein the DMRS port corresponds to one or more pieces of spatial relation information, and DMRS ports corresponding to different spatial relation information among multiple pieces of spatial relation information are different; and

transmitting first indication information to a terminal, wherein the first number of layers has a first relationship with the first indication information, and the first indication information is used to indicate quasi-co-location, QCL, relationship information and/or power control parameter corresponding to the PUSCH.

15. The method of claim 14, wherein the first indication information comprises indication information indicating one or more of the following:

spatial relation information or beam corresponding to the PUSCH;
a transmission configuration indicator, TCI, state corresponding to the PUSCH;
a transmission and/or reception point corresponding to the PUSCH;
an antenna panel corresponding to the PUSCH;
precoding information and/or number of layers corresponding to the PUSCH;
a sounding reference signal, SRS, resource corresponding to the PUSCH;
a sounding reference signal, SRS, resource set corresponding to the PUSCH;
an open loop power control parameter corresponding to the PUSCH;
a codeword and/or a number of codewords corresponding to the PUSCH; or

a control resource set resource pool index corresponding to the PUSCH.

16. The method of claim 15, wherein the open loop power control parameter comprises one or more of a target transmit power, a path loss reference signal parameter, or a path loss compensation parameter.

17. The method of claim 15, wherein N precoding information and/or number of layers fields corresponding to the PUSCH indicated by the first indication information, or N SRS resource indicator, SRI, fields corresponding to the PUSCH indicated by the first indication information correspond to the first number of layers, wherein N is an integer greater than or equal to 1.

18. The method of claim 17, wherein the N precoding information and/or number of layers fields corresponding to the PUSCH, or the N SRI fields corresponding to the PUSCH correspond to the first number of layers comprises any one of the following:

a sum of N numbers of layers respectively indicated by the N precoding information and/or number of layers fields corresponding to the PUSCH is equal to the first number of layers; or
a sum of numbers of SRS resources of N SRS resource groups respectively indicated by the N SRI fields corresponding to the PUSCH is equal to the first number of layers; or
a sum of multiple numbers of layers indicated by a first precoding information and/or number of layers field among the N precoding information and/or number of layers fields corresponding to the PUSCH is equal to the first number of layers; or
a sum of numbers of SRS resources of multiple SRS resource groups indicated by a first SRI field among the N SRI fields corresponding to the PUSCH is equal to the first number of layers; or
N times a number of layers indicated by a first precoding information and/or number of layers field among the N precoding information and/or number of layers fields corresponding to the PUSCH is equal to the first number of layers; or
N times a number of SRS resources indicated by a first SRI field among the N SRI fields corresponding to the PUSCH is equal to the first number of layers; or
a number of layers indicated by the N precoding information and/or number of layers fields corresponding to the PUSCH is equal to the first number of layers; or
a number of SRS resources indicated by the N SRI fields corresponding to the PUSCH, or an SRS resource number indicated by the N SRI fields corresponding to the PUSCH is equal to the first number of layers;
a number of layers indicated by a first precoding information and/or number of layers field among the N precoding information and/or number of layers fields corresponding to the PUSCH is equal to the first number of layers; or
a number of SRS resources indicated by a first SRI field among the N SRI fields corresponding to the PUSCH, or an SRS resource number indicated by a first SRI field among the N SRI fields is equal to the first number of layers.

19. The method of claim 17, wherein N precoding matrices and/or M numbers of layers indicated by one piece of precoding information and/or number of layers field corresponding to the PUSCH indicated by the first indication information correspond to the first number of layers, wherein M is an integer greater than or equal to 1; or
N SRS resource groups indicated by one SRI field corresponding to the PUSCH indicated by the first indication information correspond to the first number of layers.

20. The method of claim 19, wherein the N precoding matrices and/or the M numbers of layers, or the N SRS resource groups correspond to the first number of layers comprises any one of the following:

a sum of the M numbers of layers indicated by the one piece of precoding information and/or number of layers field corresponding to the PUSCH is equal to the first number of layers; or
a sum of numbers of SRS resources of the N SRS resource groups indicated by the one SRI field corresponding to the PUSCH is equal to the first number of layers; or
N times a number of layers indicated by the one piece of precoding information and/or number of layers field corresponding to the PUSCH is equal to the first number of layers; or
N times a number of SRS resources indicated by the one SRI field corresponding to the PUSCH is equal to the first number of layers; or
a number of layers indicated by the one piece of precoding information and/or number of layers field corresponding to the PUSCH is equal to the first number of layers; or
a number of SRS resources indicated by the one SRI field corresponding to the PUSCH, or an SRS resource number indicated by the one SRI field corresponding to the PUSCH is equal to the first number of layers.

21. The method of claim 17, wherein the N precoding information and/or number of layers fields are precoding information and/or number of layers field corresponding to the N pieces of first information indicated by the first indication information; or the N SRI fields are SRI fields corresponding to the N pieces of first information indicated by the first indication information,

wherein each of the N pieces of first information comprises one or more of a TCI state, spatial relation information, a power control parameter, a transmission and/or reception point, an antenna panel, an SRS resource, an SRS resource group, a precoding matrix, a layer group, an SRS resource set, a codeword, or a control resource set resource pool.

22. The method of claim 21, wherein the first indication information indicates N pieces of first information comprises one or more of the following:

the first indication information indicates N pieces of precoding information and/or N numbers of layers; or
the first indication information indicates N pieces of enabled precoding information and/or number of layers field; or
the first indication information indicates N SRS resource groups; or
the first indication information indicates N enabled SRI fields; or
the first indication information indicates N SRS resource sets; or
the first indication information indicates N pieces of spatial relation information or beam; or
the first indication information indicates N transmission and/or reception points; or
the first indication information indicates N antenna panels; or
the first indication information indicates N open loop power control parameters; or
the first indication information indicates N codewords; or
the first indication information indicates N control resource set resource pool indexes.

23. The method of claim 15, wherein in case that the first indication information indicates N pieces of QCL relationship information and/or power control parameter, N pieces of precoding information and/or M numbers of layers corresponding to the PUSCH indicated by the first indication information correspond to the first number of layers; or a number of layers or an SRS resource number corresponding to N SRI groups corresponding to the PUSCH indicated by the first indication information corresponds to the first number of layers, wherein N is an integer greater than or equal to 1, and M is an integer greater than or equal to 1.

24. The method of any one of claims 14 to 23, further comprising:

determining second indication information based on the first number of layers, wherein the second indication information is used to indicate the DMRS port corresponding to the PUSCH; and
transmitting the second indication information to the terminal.

25. The method of any one of claims 14 to 24, wherein the QCL relationship information corresponding to the PUSCH comprises QCL relationship information between the DMRS port corresponding to the PUSCH and one or more other reference signals.

26. A terminal, comprising a memory, a transceiver and a processor,
wherein the memory is used for storing a computer program, the transceiver is used for receiving and transmitting data under control of the processor, and the processor is used for reading the computer program in the memory and performing the following operations:

receiving first indication information transmitted from a network device, wherein the first indication information is used to indicate quasi-co-location, QCL, relationship information and/or power control parameter corresponding to a physical uplink shared channel, PUSCH; and
determining a demodulation reference signal, DMRS, port corresponding to the PUSCH based on the first indication information, wherein the DMRS port corresponds to one or more pieces of spatial relation information, and DMRS ports corresponding to different spatial relation information among multiple pieces of spatial relation information are different.

27. The terminal of claim 26, wherein the first indication information comprises indication information indicating one or more of the following:

spatial relation information or beam corresponding to the PUSCH;
a transmission configuration indicator, TCI, state corresponding to the PUSCH;
a transmission and/or reception point corresponding to the PUSCH;
an antenna panel corresponding to the PUSCH;
precoding information and/or number of layers corresponding to the PUSCH;
a sounding reference signal, SRS, resource corresponding to the PUSCH;
a sounding reference signal, SRS, resource set corresponding to the PUSCH;
an open loop power control parameter corresponding to the PUSCH;
a codeword and/or a number of codewords corresponding to the PUSCH; or
a control resource set resource pool index corresponding to the PUSCH.

28. The terminal of claim 27, wherein the open loop power control parameter comprises one or more of a target transmit power, a path loss reference signal parameter, or a path loss compensation parameter.

29. The terminal of any one of claims 26 to 28, wherein determining the DMRS port corresponding to the PUSCH based on the first indication information comprises:

determining a first number of layers corresponding to the DMRS port based on the first indication information; and
determining the DMRS port based on the first number of layers.

30. The terminal of claim 29, wherein determining the first number of layers corresponding to the DMRS port based on the first indication information comprises:

based on the first indication information, determining N precoding information and/or number of layers fields corresponding to the PUSCH, or determining N sounding reference signal, SRS, resource indicator, SRI, fields corresponding to the PUSCH, wherein N is an integer greater than or equal to 1; and
determining the first number of layers based on the N precoding information and/or number of layers fields corresponding to the PUSCH, or the N SRI fields corresponding to the PUSCH.

31. The terminal of claim 30, wherein determining the first number of layers based on the N precoding information and/or number of layers fields corresponding to the PUSCH, or the N SRI fields corresponding to the PUSCH comprises any one of the following:

determining the first number of layers based on a sum of N numbers of layers respectively indicated by the N precoding information and/or number of layers fields corresponding to the PUSCH; or
determining the first number of layers based on a sum of numbers of SRS resources of N SRS resource groups respectively indicated by the N SRI fields corresponding to the PUSCH; or
determining the first number of layers based on a sum of multiple numbers of layers indicated by a first precoding information and/or number of layers field among the N precoding information and/or number of layers fields; or
determining the first number of layers based on a sum of numbers of SRS resources of multiple SRS resource groups indicated by a first SRI field among the N SRI fields; or
determining the first number of layers based on N times a number of layers indicated by a first precoding information and/or number of layers field among the N precoding information and/or number of layers fields; or
determining the first number of layers based on N times a number of SRS resources indicated by a first SRI field among the N SRI fields; or
determining the first number of layers based on a number of layers indicated by the N precoding information and/or number of layers fields corresponding to the PUSCH; or
determining the first number of layers based on a number of SRS resources indicated by the N SRI fields corresponding to the PUSCH, or based on an SRS resource number indicated by the N SRI fields corresponding to the PUSCH; or
determining the first number of layers based on a number of layers indicated by a first precoding information and/or number of layers field among the N precoding information and/or number of layers fields; or
determining the first number of layers based on a number of SRS resources indicated by a first SRI field among the N SRI fields, or based on an SRS resource number indicated by a first SRI field among the N SRI fields.

32. The terminal of claim 30, wherein determining the first number of layers based on the N precoding information and/or number of layers fields corresponding to the PUSCH, or the N SRI fields corresponding to the PUSCH comprises:

determining that one piece of precoding information and/or number of layers field corresponding to the PUSCH indicates N precoding matrices and/or M numbers of layers, or determining that one SRI field corresponding to the PUSCH indicates N SRS resource groups; and

determining the first number of layers based on the N precoding matrices and/or the M numbers of layers, or the N SRS resource groups, wherein M is an integer greater than or equal to 1.

33. The terminal of claim 32, wherein determining the first number of layers based on the N precoding matrices and/or the M numbers of layers, or the N SRS resource groups, comprises any one of the following:

determining the first number of layers based on a sum of the M numbers of layers indicated by the one piece of precoding information and/or number of layers field corresponding to the PUSCH; or

determining the first number of layers based on a sum of numbers of SRS resources of the N SRS resource groups indicated by the one SRI field corresponding to the PUSCH; or

determining the first number of layers based on N times a number of layers indicated by the one piece of precoding information and/or number of layers field corresponding to the PUSCH; or

determining the first number of layers based on N times a number of SRS resources indicated by the one SRI field corresponding to the PUSCH; or

determining the first number of layers based on a number of layers indicated by the one piece of precoding information and/or number of layers field corresponding to the PUSCH; or

determining the first number of layers based on a number of SRS resources indicated by one SRI field corresponding to the PUSCH, or based on an SRS resource number indicated by one SRI field corresponding to the PUSCH.

34. The terminal of claim 30, wherein based on the first indication information, determining the N precoding information and/or number of layers fields corresponding to the PUSCH, or determining the N SRI fields corresponding to the PUSCH comprises:

determining that the PUSCH corresponds to N pieces of first information based on the first indication information, wherein each of the N pieces of first information comprises one or more of a transmission configuration indicator, TCI, state, spatial relation information, a power control parameter, a transmission and/or reception point, an antenna panel, a sounding reference signal, SRS, resource, a sounding reference signal, SRS, resource group, a precoding matrix, a layer group, a sounding reference signal, SRS, resource set, a codeword, or a control resource set resource pool; and

determining the N precoding information and/or number of layers fields corresponding to the PUSCH based on precoding information and/or number of layers field corresponding to each of the N pieces of first information; or determining the N SRI fields corresponding to the PUSCH based on SRI fields corresponding to each of the N pieces of first information.

35. The terminal of claim 34, wherein determining that the PUSCH corresponds to the N pieces of first information based on the first indication information comprises one or more of the following:

in case that the first indication information indicates N pieces of precoding information and/or N numbers of layers, determining that the PUSCH corresponds to the N pieces of first information; or

in case that the first indication information indicates N pieces of enabled precoding information and/or number of layers field, determining that the PUSCH corresponds to the N pieces of first information; or

in case that the first indication information indicates N SRS resource groups, determining that the PUSCH corresponds to the N pieces of first information; or

in case that the first indication information indicates N enabled SRI fields, determining that the PUSCH corresponds to the N pieces of first information; or

in case that the first indication information indicates N SRS resource sets, determining that the PUSCH corresponds to the N pieces of first information; or

in case that the first indication information indicates N pieces of spatial relation information or beam, determining that the PUSCH corresponds to the N pieces of first information; or

in case that the first indication information indicates N transmission and/or reception points, determining that the PUSCH corresponds to the N pieces of first information; or

in case that the first indication information indicates N antenna panels, determining that the PUSCH corresponds to the N pieces of first information; or

in case that the first indication information indicates N open loop power control parameters, determining that the PUSCH corresponds to the N pieces of first information; or

in case that the first indication information indicates N codewords, determining that the PUSCH corresponds to the N pieces of first information; or

in case that the first indication information indicates N control resource set resource pool indexes, determining that the PUSCH corresponds to the N pieces of first information.

36. The terminal of claim 29, wherein determining the first number of layers based on the first indication information comprises:

in case that the first indication information indicates N pieces of QCL relationship information and/or power control parameter, determining that the PUSCH corresponds to N pieces of precoding information and/or M numbers of layers, or determining that the PUSCH corresponds to N SRI groups, wherein N is an integer greater than or equal to 1, and M is an integer greater than or equal to 1; and

determining the first number of layers based on the N pieces of precoding information and/or the M numbers of layers, or a number of layers or an SRS resource number corresponding to the N SRI groups.

37. The terminal of any one of claims 30 to 36, wherein determining the DMRS port based on the first number of layers comprises:

determining a DMRS port corresponding to each of the N pieces of first information determined based on the first number of layers.

38. The terminal of any one of claims 26 to 37, wherein the QCL relationship information corresponding to the PUSCH comprises QCL relationship information between the DMRS port corresponding to the PUSCH and one or more other reference signals.

39. A network device, comprising a memory, a transceiver and a processor,

wherein the memory is used for storing a computer program, the transceiver is used for receiving and transmitting data under control of the processor, and the processor is used for reading the computer program in the memory and performing the following operations:

determining a first number of layers corresponding to a demodulation reference signal, DMRS, port corresponding to a physical uplink shared channel, PUSCH, wherein the DMRS port corresponds to one or more pieces of spatial relation information, and DMRS ports corresponding to different spatial relation information among multiple pieces of spatial relation information are different; and

transmitting first indication information to a terminal, wherein the first number of layers has a first relationship with the first indication information, and the first indication information is used to indicate quasi-co-location, QCL, relationship information and/or power control parameter corresponding to the PUSCH.

40. The network device of claim 39, wherein the first indication information comprises indication information indicating one or more of the following:

spatial relation information or beam corresponding to the PUSCH;

a transmission configuration indicator, TCI, state corresponding to the PUSCH;

a transmission and/or reception point corresponding to the PUSCH;

an antenna panel corresponding to the PUSCH;

precoding information and/or number of layers corresponding to the PUSCH;

a sounding reference signal, SRS, resource corresponding to the PUSCH;

a sounding reference signal, SRS, resource set corresponding to the PUSCH;

an open loop power control parameter corresponding to the PUSCH;

a codeword and/or a number of codewords corresponding to the PUSCH; or

a control resource set resource pool index corresponding to the PUSCH.

41. The network device of claim 40, wherein the open loop power control parameter comprises one or more of a target transmit power, a path loss reference signal parameter, or a path loss compensation parameter.

42. The network device of claim 40, wherein N precoding information and/or number of layers fields corresponding to the PUSCH indicated by the first indication information, or N SRS resource indicator, SRI, fields corresponding to the PUSCH indicated by the first indication information correspond to the first number of layers, wherein N is an integer greater than or equal to 1.

43. The network device of claim 42, wherein the N precoding information and/or number of layers fields corresponding to the PUSCH, or the N SRI fields corresponding to the PUSCH correspond to the first number of layers comprises any one of the following:

a sum of N numbers of layers respectively indicated by the N precoding information and/or number of layers fields corresponding to the PUSCH is equal to the first number of layers; or

a sum of numbers of SRS resources of N SRS resource groups respectively indicated by the N SRI fields corresponding to the PUSCH is equal to the first number of layers; or

a sum of multiple numbers of layers indicated by a first precoding information and/or number of layers field among the N precoding information and/or number of layers fields corresponding to the PUSCH is equal to the first number of layers; or

a sum of numbers of SRS resources of multiple SRS resource groups indicated by a first SRI field among the N SRI fields corresponding to the PUSCH is equal to the first number of layers; or

N times a number of layers indicated by a first precoding information and/or number of layers field among the N precoding information and/or number of layers fields corresponding to the PUSCH is equal to the first number of layers; or

N times a number of SRS resources indicated by a first SRI field among the N SRI fields corresponding to the PUSCH is equal to the first number of layers; or

a number of layers indicated by the N precoding information and/or number of layers fields corresponding to the PUSCH is equal to the first number of layers; or

a number of SRS resources indicated by the N SRI fields corresponding to the PUSCH, or an SRS resource number indicated by the N SRI fields corresponding to the PUSCH is equal to the first number of layers;

a number of layers indicated by a first precoding information and/or number of layers field among the N precoding information and/or number of layers fields corresponding to the PUSCH is equal to the first number of layers; or

a number of SRS resources indicated by a first SRI field among the N SRI fields corresponding to the PUSCH, or an SRS resource number indicated by a first SRI field among the N SRI fields is equal to the first number of layers.

44. The network device of claim 42, wherein N precoding matrices and/or M numbers of layers indicated by one piece of precoding information and/or number of layers field corresponding to the PUSCH indicated by the first indication information correspond to the first number of layers, wherein M is an integer greater than or equal to 1; or
N SRS resource groups indicated by one SRI field corresponding to the PUSCH indicated by the first indication information correspond to the first number of layers.

45. The network device of claim 44, wherein the N precoding matrices and/or the M numbers of layers, or the N SRS resource groups correspond to the first number of layers comprises any one of the following:

a sum of the M numbers of layers indicated by the one piece of precoding information and/or number of layers field corresponding to the PUSCH is equal to the first number of layers; or

a sum of numbers of SRS resources of the N SRS resource groups indicated by the one SRI field corresponding to the PUSCH is equal to the first number of layers; or

N times a number of layers indicated by the one piece of precoding information and/or number of layers field corresponding to the PUSCH is equal to the first number of layers; or

N times a number of SRS resources indicated by the one SRI field corresponding to the PUSCH is equal to the first number of layers; or

a number of layers indicated by the one piece of precoding information and/or number of layers field corresponding to the PUSCH is equal to the first number of layers; or

a number of SRS resources indicated by the one SRI field corresponding to the PUSCH, or an SRS resource number indicated by one SRI field corresponding to the PUSCH is equal to the first number of layers.

46. The network device of claim 42, wherein the N precoding information and/or number of layers fields are precoding information and/or number of layers field corresponding to the N pieces of first information indicated by the first indication information; or the N SRI fields are SRI fields corresponding to the N pieces of first information indicated by the first indication information,
wherein each of the N pieces of first information comprises one or more of a TCI state, spatial relation information, a power control parameter, a transmission and/or reception point, an antenna panel, an SRS resource, an SRS resource group, a precoding matrix, a layer group, an SRS resource set, a codeword, or a control resource set resource pool.

47. The network device of claim 46, wherein the first indication information indicates N pieces of first information comprises one or more of the following:

the first indication information indicates N pieces of precoding information and/or N numbers of layers; or
the first indication information indicates N pieces of enabled precoding information and/or number of layers field; or
the first indication information indicates N SRS resource groups; or
the first indication information indicates N enabled SRI fields; or
the first indication information indicates N SRS resource sets; or
the first indication information indicates N pieces of spatial relation information or beam; or
the first indication information indicates N transmission and/or reception points; or
the first indication information indicates N antenna panels; or
the first indication information indicates N open loop power control parameters; or
the first indication information indicates N codewords; or
the first indication information indicates N control resource set resource pool indexes.

48. The network device of claim 40, wherein in case that the first indication information indicates N pieces of QCL relationship information and/or power control parameter, N pieces of precoding information and/or M numbers of layers corresponding to the PUSCH indicated by the first indication information correspond to the first number of layers; or a number of layers or an SRS resource number corresponding to N SRI groups corresponding to the PUSCH indicated by the first indication information corresponds to the first number of layers, wherein N is an integer greater than or equal to 1, and M is an integer greater than or equal to 1.

49. The network device of any one of claims 39 to 48, wherein the operation further comprises:

determining second indication information based on the first number of layers, wherein the second indication information is used to indicate the DMRS port corresponding to the PUSCH; and
transmitting the second indication information to the terminal.

50. The network device of any one of claims 39 to 49, wherein the QCL relationship information corresponding to the PUSCH comprises QCL relationship information between the DMRS port corresponding to the PUSCH and one or more other reference signals.

51. An apparatus for determining demodulation reference signal, DMRS, port, comprising:

a receiving unit, used for receiving first indication information transmitted from a network device, wherein the first indication information is used to indicate quasi-co-location, QCL, relationship information and/or power control parameter corresponding to a physical uplink shared channel, PUSCH; and
a first determining unit, used for determining a DMRS port corresponding to the PUSCH based on the first indication information, wherein the DMRS port corresponds to one or more pieces of spatial relation information, and DMRS ports corresponding to different spatial relation information among multiple pieces of spatial relation information are different.

52. The apparatus of claim 51, wherein the first indication information comprises indication information indicating one or more of the following:

spatial relation information or beam corresponding to the PUSCH;
a transmission configuration indicator, TCI, state corresponding to the PUSCH;
a transmission and/or reception point corresponding to the PUSCH;
an antenna panel corresponding to the PUSCH;
precoding information and/or number of layers corresponding to the PUSCH;
a sounding reference signal, SRS, resource corresponding to the PUSCH;
a sounding reference signal, SRS, resource set corresponding to the PUSCH;
an open loop power control parameter corresponding to the PUSCH;
a codeword and/or a number of codewords corresponding to the PUSCH; or
a control resource set resource pool index corresponding to the PUSCH.

53. The apparatus of claim 52, wherein the open loop power control parameter comprises one or more of a target transmit power, a path loss reference signal parameter, or a path loss compensation parameter.

54. The apparatus of any one of claims 51 to 53, wherein determining the DMRS port corresponding to the PUSCH based on the first indication information comprises:

determining a first number of layers corresponding to the DMRS port based on the first indication information; and determining the DMRS port based on the first number of layers.

55. The apparatus of claim 54, wherein determining the first number of layers corresponding to the DMRS port based on the first indication information comprises:

based on the first indication information, determining N precoding information and/or number of layers fields corresponding to the PUSCH, or determining N sounding reference signal, SRS, resource indicator, SRI, fields corresponding to the PUSCH, wherein N is an integer greater than or equal to 1; and determining the first number of layers based on the N precoding information and/or number of layers fields corresponding to the PUSCH, or the N SRI fields corresponding to the PUSCH.

56. The apparatus of claim 55, wherein determining the first number of layers based on the N precoding information and/or number of layers fields corresponding to the PUSCH, or the N SRI fields corresponding to the PUSCH comprises any one of the following:

determining the first number of layers based on a sum of N numbers of layers respectively indicated by the N precoding information and/or number of layers fields corresponding to the PUSCH; or determining the first number of layers based on a sum of numbers of SRS resources of N SRS resource groups respectively indicated by the N SRI fields corresponding to the PUSCH; or determining the first number of layers based on a sum of multiple numbers of layers indicated by a first precoding information and/or number of layers field among the N precoding information and/or number of layers fields; or determining the first number of layers based on a sum of numbers of SRS resources of multiple SRS resource groups indicated by a first SRI field among the N SRI fields; or determining the first number of layers based on N times a number of layers indicated by a first precoding information and/or number of layers field among the N precoding information and/or number of layers fields; or determining the first number of layers based on N times a number of SRS resources indicated by a first SRI field among the N SRI fields; or determining the first number of layers based on a number of layers indicated by the N precoding information and/or number of layers fields corresponding to the PUSCH; or determining the first number of layers based on a number of SRS resources indicated by the N SRI fields corresponding to the PUSCH, or based on an SRS resource number indicated by the N SRI fields corresponding to the PUSCH; or determining the first number of layers based on a number of layers indicated by a first precoding information and/or number of layers field among the N precoding information and/or number of layers fields; or determining the first number of layers based on a number of SRS resources indicated by a first SRI field among the N SRI fields, or based on an SRS resource number indicated by a first SRI field among the N SRI fields.

57. The apparatus of claim 55, wherein determining the first number of layers based on the N precoding information and/or number of layers fields corresponding to the PUSCH, or the N SRI fields corresponding to the PUSCH comprises:

determining that one piece of precoding information and/or number of layers field corresponding to the PUSCH indicates N precoding matrices and/or M numbers of layers, or determining that one SRI field corresponding to the PUSCH indicates N SRS resource groups; and determining the first number of layers based on the N precoding matrices and/or the M numbers of layers, or the N SRS resource groups, wherein M is an integer greater than or equal to 1.

58. The apparatus of claim 57, wherein determining the first number of layers based on the N precoding matrices and/or the M numbers of layers, or the N SRS resource groups, comprises any one of the following:

determining the first number of layers based on a sum of the M numbers of layers indicated by the one piece of precoding information and/or number of layers field corresponding to the PUSCH; or

determining the first number of layers based on a sum of numbers of SRS resources of the N SRS resource groups indicated by the one SRI field corresponding to the PUSCH; or

determining the first number of layers based on N times a number of layers indicated by the one piece of precoding information and/or number of layers field corresponding to the PUSCH; or

determining the first number of layers based on N times a number of SRS resources indicated by the one SRI field corresponding to the PUSCH; or

determining the first number of layers based on a number of layers indicated by the one piece of precoding information and/or number of layers field corresponding to the PUSCH; or

determining the first number of layers based on a number of SRS resources indicated by one SRI field corresponding to the PUSCH, or based on an SRS resource number indicated by one SRI field corresponding to the PUSCH.

59. The apparatus of claim 55, based on the first indication information, determining the N precoding information and/or number of layers fields corresponding to the PUSCH, or determining the N SRI fields corresponding to the PUSCH comprises:

determining that the PUSCH corresponds to N pieces of first information based on the first indication information, wherein each of the N pieces of first information comprises one or more of a transmission configuration indicator, TCI, state, spatial relation information, a power control parameter, a transmission and/or reception point, an antenna panel, a sounding reference signal, SRS, resource, a sounding reference signal, SRS, resource group, a precoding matrix, a layer group, a sounding reference signal, SRS, resource set, a codeword, or a control resource set resource pool; and

determining the N precoding information and/or number of layers fields corresponding to the PUSCH based on precoding information and/or number of layers field corresponding to each of the N pieces of first information; or determining the N SRI fields corresponding to the PUSCH based on SRI fields corresponding to each of the N pieces of first information.

60. The apparatus of claim 59, wherein determining that the PUSCH corresponds to the N pieces of first information based on the first indication information comprises one or more of the following:

in case that the first indication information indicates N pieces of precoding information and/or N numbers of layers, determining that the PUSCH corresponds to the N pieces of first information; or

in case that the first indication information indicates N pieces of enabled precoding information and/or number of layers field, determining that the PUSCH corresponds to the N pieces of first information; or

in case that the first indication information indicates N SRS resource groups, determining that the PUSCH corresponds to the N pieces of first information; or

in case that the first indication information indicates N enabled SRI fields, determining that the PUSCH corresponds to the N pieces of first information; or

in case that the first indication information indicates N SRS resource sets, determining that the PUSCH corresponds to the N pieces of first information; or

in case that the first indication information indicates N pieces of spatial relation information or beam, determining that the PUSCH corresponds to the N pieces of first information; or

in case that the first indication information indicates N transmission and/or reception points, determining that the PUSCH corresponds to the N pieces of first information; or

in case that the first indication information indicates N antenna panels, determining that the PUSCH corresponds to the N pieces of first information; or

in case that the first indication information indicates N open loop power control parameters, determining that the PUSCH corresponds to the N pieces of first information; or

in case that the first indication information indicates N codewords, determining that the PUSCH corresponds to the N pieces of first information; or

in case that the first indication information indicates N control resource set resource pool indexes, determining that the PUSCH corresponds to the N pieces of first information.

61. The apparatus of claim 54, wherein determining the first number of layers based on the first indication information comprises:

in case that the first indication information indicates N pieces of QCL relationship information and/or power control parameter, determining that the PUSCH corresponds to N pieces of precoding information and/or M numbers of layers, or determining that the PUSCH corresponds to N SRI groups, wherein N is an integer greater than or equal to 1, and M is an integer greater than or equal to 1; and

determining the first number of layers based on the N pieces of precoding information and/or the M numbers of layers, or a number of layers or an SRS resource number corresponding to the N SRI groups.

62. The apparatus of any one of claims 55 to 61, wherein determining the DMRS port based on the first number of layers comprises:

determining a DMRS port corresponding to each of the N pieces of first information determined based on the first number of layers.

63. The apparatus of any one of claims 51 to 62, wherein the QCL relationship information corresponding to the PUSCH comprises QCL relationship information between the DMRS port corresponding to the PUSCH and one or more other reference signals.

64. An apparatus for determining demodulation reference signal, DMRS, port, comprising:

a second determining unit, used for determining a first number of layers corresponding to a DMRS port corresponding to a physical uplink shared channel, PUSCH, wherein the DMRS port corresponds to one or more pieces of spatial relation information, and DMRS ports corresponding to different spatial relation information among multiple pieces of spatial relation information are different; and

a transmitting unit, used for transmitting first indication information to a terminal, wherein the first number of layers has a first relationship with the first indication information, and the first indication information is used to indicate quasi-co-location, QCL, relationship information and/or power control parameter corresponding to the PUSCH.

65. The apparatus of claim 64, wherein the first indication information comprises indication information indicating one or more of the following:

spatial relation information or beam corresponding to the PUSCH;

a transmission configuration indicator, TCI, state corresponding to the PUSCH;

a transmission and/or reception point corresponding to the PUSCH;

an antenna panel corresponding to the PUSCH;

precoding information and/or number of layers corresponding to the PUSCH;

a sounding reference signal, SRS, resource corresponding to the PUSCH;

a sounding reference signal, SRS, resource set corresponding to the PUSCH;

an open loop power control parameter corresponding to the PUSCH;

a codeword and/or a number of codewords corresponding to the PUSCH; or

a control resource set resource pool index corresponding to the PUSCH.

66. The apparatus of claim 65, wherein the open loop power control parameter comprises one or more of a target transmit power, a path loss reference signal parameter, or a path loss compensation parameter.

67. The apparatus of claim 65, wherein N precoding information and/or number of layers fields corresponding to the PUSCH indicated by the first indication information, or N SRS resource indicator, SRI, fields corresponding to the PUSCH indicated by the first indication information correspond to the first number of layers, wherein N is an integer greater than or equal to 1.

68. The apparatus of claim 67, wherein the N precoding information and/or number of layers fields corresponding to the PUSCH, or the N SRI fields corresponding to the PUSCH correspond to the first number of layers comprises any one of the following:

a sum of N numbers of layers respectively indicated by the N precoding information and/or number of layers fields corresponding to the PUSCH is equal to the first number of layers; or

a sum of numbers of SRS resources of N SRS resource groups respectively indicated by the N SRI fields corresponding to the PUSCH is equal to the first number of layers; or

a sum of multiple numbers of layers indicated by a first precoding information and/or number of layers field among the N precoding information and/or number of layers fields corresponding to the PUSCH is equal to the first number of layers; or

a sum of numbers of SRS resources of multiple SRS resource groups indicated by a first SRI field among the N SRI fields corresponding to the PUSCH is equal to the first number of layers; or

N times a number of layers indicated by a first precoding information and/or number of layers field among the N precoding information and/or number of layers fields corresponding to the PUSCH is equal to the first number of layers; or

N times a number of SRS resources indicated by a first SRI field among the N SRI fields corresponding to the PUSCH is equal to the first number of layers; or

a number of layers indicated by the N precoding information and/or number of layers fields corresponding to the PUSCH is equal to the first number of layers; or

a number of SRS resources indicated by the N SRI fields corresponding to the PUSCH, or an SRS resource number indicated by the N SRI fields corresponding to the PUSCH is equal to the first number of layers;

a number of layers indicated by a first precoding information and/or number of layers field among the N precoding information and/or number of layers fields corresponding to the PUSCH is equal to the first number of layers; or

a number of SRS resources indicated by a first SRI field among the N SRI fields corresponding to the PUSCH, or an SRS resource number indicated by a first SRI field among the N SRI fieldsis equal to the first number of layers.

69. The apparatus of claim 67, wherein N precoding matrices and/or M numbers of layers indicated by one piece of precoding information and/or number of layers field corresponding to the PUSCH indicated by the first indication information correspond to the first number of layers, wherein M is an integer greater than or equal to 1; or

N SRS resource groups indicated by one SRI field corresponding to the PUSCH indicated by the first indication information correspond to the first number of layers.

70. The apparatus of claim 69, wherein the N precoding matrices and/or the M numbers of layers, or the N SRS resource groups correspond to the first number of layers comprises any one of the following:

a sum of the M numbers of layers indicated by the one piece of precoding information and/or number of layers field corresponding to the PUSCH is equal to the first number of layers; or

a sum of numbers of SRS resources of the N SRS resource groups indicated by the one SRI field corresponding to the PUSCH is equal to the first number of layers; or

N times a number of layers indicated by the one piece of precoding information and/or number of layers field corresponding to the PUSCH is equal to the first number of layers; or

N times a number of SRS resources indicated by the one SRI field corresponding to the PUSCH is equal to the first number of layers; or

a number of layers indicated by the one piece of precoding information and/or number of layers field corresponding to the PUSCH is equal to the first number of layers; or

a number of SRS resources indicated by the one SRI field corresponding to the PUSCH, or an SRS resource number indicated by one SRI field corresponding to the PUSCH is equal to the first number of layers.

71. The apparatus of claim 67, wherein the N precoding information and/or number of layers fields are precoding information and/or number of layers field corresponding to the N pieces of first information indicated by the first indication information; or the N SRI fields are SRI fields corresponding to the N pieces of first information indicated by the first indication information,

wherein each of the N pieces of first information comprises one or more of a TCI state, spatial relation information, a power control parameter, a transmission and/or reception point, an antenna panel, an SRS resource, an SRS resource group, a precoding matrix, a layer group, an SRS resource set, a codeword, or a control resource set resource pool.

72. The apparatus of claim 71, wherein the first indication information indicates N pieces of first information comprises one or more of the following:

the first indication information indicates N pieces of precoding information and/or N numbers of layers; or

the first indication information indicates N pieces of enabled precoding information and/or number of layers field; or

the first indication information indicates N SRS resource groups; or

the first indication information indicates N enabled SRI fields; or

the first indication information indicates N SRS resource sets; or

the first indication information indicates N pieces of spatial relation information or beam; or

the first indication information indicates N transmission and/or reception points; or

the first indication information indicates N antenna panels; or

the first indication information indicates N open loop power control parameters; or

the first indication information indicates N codewords; or

the first indication information indicates N control resource set resource pool indexes.

73. The apparatus of claim 65, wherein in case that the first indication information indicates N pieces of QCL relationship information and/or power control parameter, N pieces of precoding information and/or M numbers of layers corresponding to the PUSCH indicated by the first indication information correspond to the first number of layers; or a number of layers or an SRS resource number corresponding to N SRI groups corresponding to the PUSCH indicated by the first indication information corresponds to the first number of layers, wherein N is an integer greater than or equal to 1, and M is an integer greater than or equal to 1.

74. The apparatus of any one of claims 64 to 73, wherein the second determining unit is further used for:

determining second indication information based on the first number of layers, wherein the second indication information is used to indicate the DMRS port corresponding to the PUSCH; and

wherein the transmitting unit is further used for:

transmitting the second indication information to the terminal.

75. The apparatus of any one of claims 64 to 74, wherein the QCL relationship information corresponding to the PUSCH comprises QCL relationship information between the DMRS port corresponding to the PUSCH and one or more other reference signals.

76. A computer-readable storage medium storing a computer program, where the computer program is used to cause a computer to perform the method of any one of claims 1 to 13, or to perform the method of any one of claims 14 to 25.

Receiving first indication information transmitted from a network device, where the first indication information is used to indicate QCL relationship information and/or power control parameter corresponding to a PUSCH — 100

Determining a DMRS port corresponding to the PUSCH based on the first indication information, where the DMRS port corresponds to one or more pieces of spatial relation information, and DMRS ports corresponding to different spatial relation information among multiple pieces of spatial relation information are different — 101

FIG. 1

Determining a first number of layers corresponding to a DMRS port corresponding to a PUSCH, where the DMRS port corresponds to one or more pieces of spatial relation information, and DMRS ports corresponding to different spatial relation information among multiple pieces of spatial relation information are different — 200

Transmitting first indication information to a terminal, where the first number of layers has a first relationship with the first indication information, and the first indication information is used to indicate QCL relationship information and/or power control parameter corresponding to the PUSCH — 201

FIG. 2

EP 4 572 206 A1

FIG. 3

FIG. 4

FIG. 5

FIG. 6

## INTERNATIONAL SEARCH REPORT

| International application No. |
|---|
| **PCT/CN2023/112154** |

### A. CLASSIFICATION OF SUBJECT MATTER

H04L5/00(2006.01)i

According to International Patent Classification (IPC) or to both national classification and IPC

### B. FIELDS SEARCHED

Minimum documentation searched (classification system followed by classification symbols)

IPC: H04L,H04W,H04Q

Documentation searched other than minimum documentation to the extent that such documents are included in the fields searched

Electronic data base consulted during the international search (name of data base and, where practicable, search terms used)

CNABS, CNTXT, ENTXT, ENTXTC, VEN, 3GPP: 解调参考信号, 端口, 天线, 面板, 上行, 共享信道, 准共址, 准同址, 准共位, 功控, 功率控制, 空间, 波束, 层, 探测参考信号, DMRS, port, antenna, panel, uplink, UL, PUSCH, QCL, quasi co-location, power control, spatial, beam, layer, SRS, SRI

### C. DOCUMENTS CONSIDERED TO BE RELEVANT

| Category* | Citation of document, with indication, where appropriate, of the relevant passages | Relevant to claim No. |
|---|---|---|
| X | CN 114499786 A (DATANG MOBILE COMMUNICATIONS EQUIPMENT CO., LTD.) 13 May 2022 (2022-05-13) description, paragraphs [0107]-[0490] | 1-76 |
| X | CN 112585879 A (NTT DOCOMO INC.) 30 March 2021 (2021-03-30) description, paragraphs [0042]-[0150] | 1-76 |
| X | CN 108401303 A (HUAWEI TECHNOLOGIES CO., LTD.) 14 August 2018 (2018-08-14) description, paragraphs [0063]-[0105] | 1-76 |
| A | CN 110858800 A (VIVO MOBILE COMMUNICATION CO., LTD.) 03 March 2020 (2020-03-03) entire document | 1-76 |
| A | US 2020366429 A1 (CHINA ACADEMY OF TELECOMMUNICATIONS TECHNOLOGY) 19 November 2020 (2020-11-19) entire document | 1-76 |

☑ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **31 October 2023** | **07 November 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2023/112154**

### C. DOCUMENTS CONSIDERED TO BE RELEVANT

| Category* | Citation of document, with indication, where appropriate, of the relevant passages | Relevant to claim No. |
|---|---|---|
| A | QUALCOMM INC. "Remaining details on QCL" <br> *3GPP TSG RAN WG1 Meeting #91 R1-1720672*, 01 December 2017 (2017-12-01), <br> entire document | 1-76 |

Form PCT/ISA/210 (second sheet) (July 2022)

**INTERNATIONAL SEARCH REPORT**
Information on patent family members

International application No.

**PCT/CN2023/112154**

| Patent document cited in search report | | | Publication date (day/month/year) | Patent family member(s) | | | Publication date (day/month/year) |
|---|---|---|---|---|---|---|---|
| CN | 114499786 | A | 13 May 2022 | WO | 2022083778 | A1 | 28 April 2022 |
| CN | 112585879 | A | 30 March 2021 | WO | 2019244207 | A1 | 26 December 2019 |
| | | | | EP | 3809602 | A1 | 21 April 2021 |
| CN | 108401303 | A | 14 August 2018 | EP | 3562245 | A1 | 30 October 2019 |
| | | | | US | 2019357205 | A1 | 21 November 2019 |
| | | | | WO | 2018141272 | A1 | 09 August 2018 |
| | | | | CN | 113726492 | A | 30 November 2021 |
| CN | 110858800 | A | 03 March 2020 | WO | 2020038194 | A1 | 27 February 2020 |
| US | 2020366429 | A1 | 19 November 2020 | KR | 20200035114 | A | 01 April 2020 |
| | | | | EP | 3667939 | A1 | 17 June 2020 |
| | | | | KR | 20220010581 | A | 25 January 2022 |
| | | | | WO | 2019029684 | A1 | 14 February 2019 |
| | | | | JP | 2020530741 | A | 22 October 2020 |
| | | | | CN | 109391304 | A | 26 February 2019 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210969485 X